# EUROPÄISCHE PATENTSCHRIFT

(11) **EP 0 388 864 B1**
(45) Veröffentlichungstag und Bekanntmachung des Hinweises auf die Patenterteilung: **02.02.1994**
(21) Anmeldenummer: 90105179.7
(22) Anmeldetag: 20.03.1990
(51) Int. Cl.: C09B 62/503, D06P 3/66, D06P 3/10

(54) **Wasserlösliche faserreaktive Farbstoffe, Verfahren zu ihrer Herstellung und ihre Verwendung**
Water-soluble, fibre-reactive dyes, method of their preparation and use
Colorants solubles dans l'eau et réactifs avec les fibres, procédé pour leur préparation et leur utilisation

(30) Priorität: 22.03.1989 DE 3909391; 10.10.1989 DE 3933768
(43) Veröffentlichungstag der Anmeldung: 26.09.1990
(73) Patentinhaber: HOECHST AKTIENGESELLSCHAFT, 65926 Frankfurt am Main (DE)
(72) Erfinder: Büch, Holger Michael, Dr., D-6238 Hofheim am Taunus (DE)

(56) Entgegenhaltungen:
- EP-A- 0 144 766
- EP-A- 0 271 883

## Beschreibung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften, nicht nur in Bezug auf die Echtheiten, sondern auch einen hohen Fixiergrad auf dem zu färbenden Material aufweisen. So sind aus der europäischen Patentanmeldungs-Veröffentlichung Nr. 0 144 766A faserreaktive Farbstoffe bekannt, die einen Triazinrest enthalten, an den zwei faserreaktive Reste aus der Vinylsulfon-Reihe jeweils über eine Ethylenoxy-ethylamino-Gruppe gebunden sind. Gleichwohl lag der vorliegenden Erfindung die Aufgabe zugrunde, neue, diesbezüglich verbesserte Reaktivfarbstoffe zu finden, die insbesondere Baumwolle in allen Farbtönen zu färben vermögen und eine gute Eignung in den Ausziehverfahren, den Klotz-Kaltverweil-Verfahren und den Druckverfahren aufweisen.

Mit der vorliegenden Erfindung wurde diese Aufgabe durch Auffindung von wasserlöslichen Farbstoffen gelöst, die der nachstehenden allgemeinen Formel (1) entsprechen. 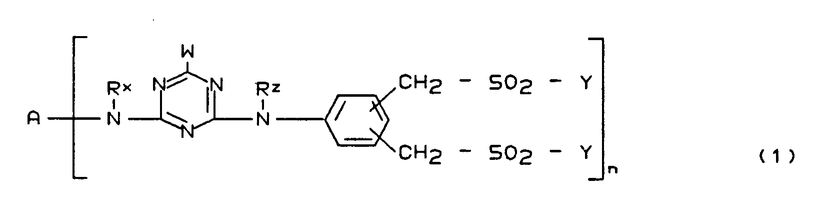
In Formel (1) bedeuten:
- A: ist der Rest eines Monoazo-, Disazo- oder Polyazofarbstoffes oder eines davon abgeleiteten Schwermetallkomplex-Azofarbstoffes, wie eines 1:2-Chrom- oder 1:2-Kobaltkomplex- oder insbesondere eines 1:1-Kupferkomplex-Monoazo- oder -Disazofarbstoffes, oder ist der Rest eines Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes;
- R^{x}: ist Wasserstoff oder Alkyl von 1 bis 4 C-Atomen, wie Methyl oder Ethyl, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, und ist bevorzugt Wasserstoff oder Methyl;
- R^{z}: ist Wasserstoff oder Alkyl von 1 bis 4 C-Atomen, wie Methyl oder Ethyl, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, und ist bevorzugt Wasserstoff;
- W: ist Fluor, Chlor, Brom, Sulfo, Phenylsulfonyl oder Alkylsulfonyl von 1 bis 4 C-Atomen, wie Methylsulfonyl oder Ethylsulfonyl, bevorzugt Fluor oder Chlor;
- Y: ist Vinyl oder β-Sulfatoethyl, β-Thiosulfatoethyl, β-Phosphatoethyl, β-Alkanoyloxi-ethyl mit 2 bis 5 C-Atomen im Alkanoylrest, wie β-Acetyloxi-ethyl, oder β-Benzoyloxi-ethyl, β-(Sulfobenzoyloxi)-ethyl, β-(p-Toluolsulfonyloxi)-ethyl oder β-Halogenethyl, β-Bromethyl oder β-Chlorethyl, bevorzugt Vinyl und insbesondere β-Sulfatoethyl;
- n: ist die Zahl 1 oder 2, bevorzugt 1.

Bevorzugt ist A der Rest eines Mono- oder Disazofarbstoffes oder der Rest eines o,o′-1:1-Kupferkomplex-Azofarbstoffes oder eines Kupferkomplex-Formazanfarbstoffes, eines Anthrachinonfarbstoffes oder Phthalocyaninfarbstoffes, wie eines Kupferphthalocyaninfarbstoffes.

Der Rest A kann in seinem Grundgerüst die bei organischen Farbstoffen üblichen Substituenten gebunden enthalten, wie beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wie Alkylaminogruppen und Dialkylaminogruppen mit 1 bis 4 C-Atomen im Alkylrest, wobei die Alkylreste noch substituiert sein können, beispielsweise durch Phenyl, Sulfophenyl, Hydroxy, Sulfato, Sulfo und Carboxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro-und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, wie beispieslweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl-sulfamoyl-, Ureido-, Hydroxy-, Carboxy-, Sulfomethyl- und Sulfogruppen; β-Sulfatoethylsulfonyl-, β-Thiosulfatoethylsulfonyl-, β-Phosphatoethylsulfonyl-, β-Acetyloxiethylsulfonyl-, β-Chlorethylsulfonyl- und Vinylsulfonylgruppen.

Vorzugsweise ist der Farbstoffrest A durch eine oder mehrere, wie 2 bis 4, Sulfogruppen substituiert, und weiterhin kann er bevorzugt Substituenten enthalten, die aus der Gruppe Methyl, Ethyl, Methoxy, Ethoxy, Acetylamino, Benzoylamino, Amino, Chlor, Brom, Ureido, Hydroxy, Carboxy und Sulfomethyl ausgewählt sind.

Der Farbstoffrest A kann auch andere, aus der Literatur bekannte faserreaktive Gruppen besitzen, die nicht der Konstitution der allgemeinen Formel (2) 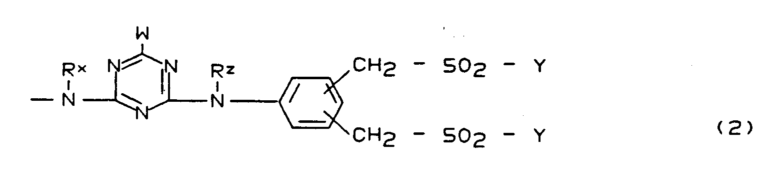
in welcher R^{x}, R^{z}, W und Y die obengenannten Bedeutungen haben, entsprechen. Solche bekannten faserreaktiven Gruppen sind beispielsweise eine Gruppe der Vinylsulfonreihe, wie eine Gruppe der Formel -SO₂-Y mit Y der obigen Bedeutung, die über einen Alkylenrest, wie eine Methylengruppe, oder über eine Methylamino- oder Ethylaminogruppe an A gebunden sein kann, oder ein niedrigmolekularer, durch ein abspaltbares Atom oder eine abspaltbare Gruppe substituierter Alkanoylaminorest, ein niedrigmolekularer, gegebenenfalls durch ein abspaltbares Atom oder eine abspaltbare Gruppe substituierter Alkenoylamino- oder Alkensulfonylamino-Rest oder ein durch ein abspaltbares Atom oder eine abspaltbare Gruppe substituierter carbocyclischer, carbocyclisch-heterocyclischer oder heterocyclischer Rest, die über eine Carbonylamino- oder Sulfonylamino-Gruppe an den Rest A gebunden sind, wobei die heterocyclischen Anteile dieser Reste vier-, fünf- oder sechs-gliedrig sind, oder ein über eine Amino-, Methylamino- oder Ethylamino-Gruppe an den Rest A gebundener, durch ein abspaltbares Atom oder eine abspaltbare Gruppe substituierter Triazinyl- oder Pyrimidinyl-Rest. Solche Reste sind beispielsweise ein über eine Amino-, Methylamino- oder Ethylamino-Gruppe gebundener halogensubstituierter sechsgliedriger heterocyclischer Rest, wie beispielsweise ein Halogentriazinyl- oder Halogenpyrimidinyl-Rest, oder sind aliphatische Acylaminoreste, wie ein Halogenacetylamino- oder Halogenpropionylamino-Rest.

Formelreste R^{x} und R^{z} sind beispielsweise: Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanoethyl, Sulfomethyl, β-Sulfoethyl, Amidosulfonylmethyl und β-Sulfatoethyl.

Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (3a), (3b) und (3c)

D₁-N=N(̵E-N = N)ᵥ-K-Z (3a)

Z-D₁-N = N(̵E-N = N)ᵥ-K (3b)

Z-D₁-N = N(̵E-N = N)ᵥ-K-Z (3c)

und die davon abgeleiteten Metallkomplex-Verbindungen, wie 1:1-Kupferkomplex-Verbindungen,
in welchen
- D₁: der Rest einer Diazokomponente der Benzol- oder Naphthalinreihe ist,
- E: der Rest einer Mittelkomponente der Benzol- oder Naphthalinreihe bedeutet,
- K: der Rest einer Kupplungskomponente der Benzol-, Naphthalin-, Pyrazolon-, 6-Hydroxypyridon(2)- oder Acetessigsäurearylamid-Reihe ist,
wobei D₁, E und K für Azofarbstoffe übliche Substituenten, wie beispielsweise Hydroxy-, Amino-, Methyl-, Methoxy-, Ethoxy-, Sulfo-, Carboxy-, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, enthalten können und D₁, E und K zusammen mindestens zwei Sulfogruppen, vorzugsweise drei oder vier Sulfogruppen, besitzen,
- v: für die Zahl Null oder 1 steht und
- Z: eine Gruppe der Formel (2) ist.

Bevorzugt sind weiterhin Disazofarbstoffe der allgemeinen Formel (3d) oder (3e)

D₁-N = N-K^{o}-N = N-D₂-Z (3d)

Z-D₁-N = N-K^{o}-N = N-D₂-Z (3e)

in welchen D₁ und D₂ unabhängig voneinander den Rest einer Diazokomponente der Benzol- oder Naphthalinreihe und K^{o} den Rest einer bivalenten Kupplungskomponente der Naphthalinreihe darstellt, wobei D₁, D₂ und K^{o} die für Azofarbstoffe üblichen Substituenten, wie die oben bereits erwähnten, tragen können, wobei D₁, D₂ und K^{o} zusammen mindestens zwei Sulfogruppen, vorzugsweise drei oder vier Sulfogruppen, enthalten.

Solche Azofarbstoffe der allgemeinen Formel (1) sind insbesondere Farbstoffe der allgemeinen Formeln (4a), (4b) und (4c) 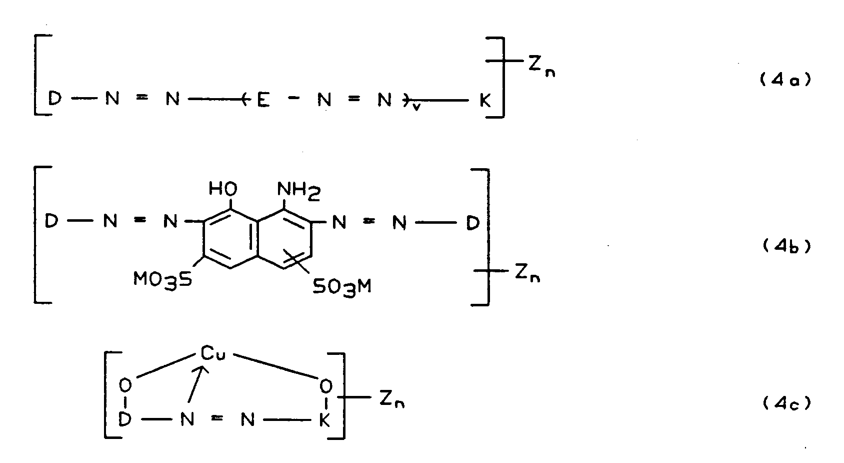
in welchen
- D: jeweils für den Rest einer Diazokomponente steht, die zueinander gleiche oder voneinander verschiedene Bedeutungen besitzen können, wie beispielsweise einen Rest D₁ obiger Bedeutung darstellt,
- E: den bivalenten Rest einer kupplungsfähigen und diazotierbaren Verbindung, beispielsweise obiger Bedeutung, ist,
- K: den Rest einer Kupplungskomponente, beispielsweise obiger Bedeutung, darstellt,
- v: für die Zahl Null oder 1 steht,
- Z: einen Rest der allgemeinen Formel (2) bedeutet,
- n: die Zahl 1 oder 2, bevorzugt 1, ist und der Rest Z an den Rest D oder den Rest K oder im Falle von n = 2 jeweils an D und K bzw. an beide D gebunden ist sowie
- M: ein Wasserstoffatom oder ein Alkalimetall, wie Natrium, Kalium oder Lithium, ist.

Die verschiedenen Möglichkeiten der Synthese der erfindungsgemäßen Farbstoffe werden später beschrieben. Eine davon ist die Umsetzung durch Kupplungsreaktion entsprechender Ausgangs-Diazo- und Kupplungskomponenten.

Solche Ausgangsverbindungen sind beispielsweise die folgenden Aminoverbindungen, die als Diazokomponenten dienen können:
Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3-oder -4-carbonsäure, 2-Aminodiphenyläther, 1-Aminobenzol-2-, -3- oder -4-sulfonsäureamid, -N-methylamid, -N-ethylamid, -N,N-dimethylamid oder -N,N-diethylamid, Dehydrothio-p-toluidin-sulfonsäure, 1-Amino-4-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3-oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7-oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8-, oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure, 1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4′-Diaminostilben, 4,4′-Diaminodiphenylmethan, 4,4′-Diaminobiphenyl (Benzidin), 3,3′-Dimethylbenzidin, 3,3′-Dimethoxybenzidin, 3,3′-Dichlorbenzidin, 3,3′-Dicarboxybenzidin, 3,3′-Dicarboxymethoxybenzidin, 2,2′-Dimethylbenzidin, 4,2′-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3′-Aminobenzoylamino)-1-aminobenzol-6-sulfonsäure, 3-(4′-Aminobenzoylamino)-1-aminobenzol-6-sulfonsäure, 1-(4′-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4′-Diaminodiphenyloxid, 4,4′-Diamino-diphenylharnstoff-2,2′-disulfonsäure, 4,4′-Diaminodiphenyloxyethan-2,2′-disulfonsäure, 4,4′-Diaminostilben-2,2′-disulfonsäure, 4,4′-Diaminodiphenylethan-2,2′-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 2-(β-Sulfatoethylsulfonyl)-phenyl-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(β-Sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 2-Methoxy-4-[β-(N-methyltauryl)-ethylsulfonyl]-anilin, 5-(β-Sulfatoethylsulfonyl)-2-amino-naphthalin, 6- oder 7- oder 8-(β-Sulfatoethylsulfonyl)-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin.

Wenn bei der erfindungsgemäßen Synthese als Diazokomponente statt eines Diamins eine Amino-acetylaminoverbindung eingesetzt wird, aus der nachträglich die Acetylgruppe durch Verseifen wieder abgespalten wird, kommen die Monoacetylverbindungen der oben genannten Diazokomponenten in Frage, wie beispielsweise 1-Acetylamino-3-aminobenzol-4-sulfonsäure und 1-Acetylamino-4-aminobenzol-3-sulfonsäure.

Kupplungskomponenten, die zur Synthese der erfindungsgemäßen Azofarbstoffe dienen können, sind beispielsweise:
Phenol, 1-Hydroxy-3- oder 4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6-oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methylamino- oder 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- oder -4,6-disulfonsäure, 1-Acetylamino-8-hydroxynaphthalin-3,6- oder -4,6-disulfonsäure, 1-(4′-Aminobenzoylamino)-8-hydroxynaphthalin-3,6- oder 4,6-disulfonsäure, 1-(4′-Nitrobenzoylamino)-8-hydroxynaphthalin-3,6- oder -4,6-disulfonsäure, 1-(3′-Aminobenzoylamino)-8-hydroxynaphthalin-3,6- oder -4,6-disulfonsäure,1-(3′-Nitrobenzoylamino)-8-hydroxynaphthalin-3,6- oder -4,6-disulfonsäure, 2-(4′-Amino-3′-sulfophenylamino)-5-hydroxynaphthalin-7-sulfonsäure, 3-Methyl-5-pyrazolon, 1-Phenyl-3-methyl-5-pyrazolon, 1-(4′-Sulfophenyl)-5-pyrazolon-3-carbonsäure, 1-(3′-Aminophenyl)-3-methyl-5-pyrazolon, 1-(2′,5′-Disulfophenyl)-3-methyl-5-pyrazolon, 1-(2′-Methyl-4′-sulfophenyl)-5-pyrazolon-3-carbonsäure, 1-(4′,8′-Disulfonaphthyl-[2′])-3-methyl-5-pyrazolon, 1-(5′,7′-Disulfonaphthyl-[2′])-3-methyl-5-pyrazolon, 1-(2′,5′-Dichlor-4′-sulfophenyl)-3-methyl-5-pyrazolon, 3-Aminocarbonyl-4-methyl-6-hydroxy-2-pyridon, 1-Ethyl-3-cyan- oder -3-chlor-4-methyl-6-hydroxy-2-pyridon, 1-Ethyl-3-sulfomethyl-4-methyl-6-hydroxy-2-pyridon, 2,4,6-Triamino-3-cyanpyridin, 2-(3′-Sulfophenylamino)-4,6-diamino-3-cyanpyridin, 2-(2′-Hydroxyethylamino)-3-cyan-4-methyl-6-aminopyridin, 2,6-Bis-(2′-hydroxyethylamino)-3-cyan-4-methylpyridin, 1-Ethyl-3-carbamoyl-4-methyl-6-hydroxy-2-pyridon, 1-Ethyl-3-sulfomethyl-4-methyl-5-carbamoyl-6-hydroxy-2-pyridon, N-Acetoacetylaminobenzol, 1-(N-Acetoacetylamino)-2-methoxybenzol-5-sulfonsäure, 4-Hydroxychinol-2-on, 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2-(2′,5′-disulfophenylazo)-naphthalin-3,6-disulfonsäure, 1-(β-Aminoethyl)-3-cyan-4-methyl-6-hydroxy-2-pyridon, 1-(γ-Aminopropyl)-3-sulfomethyl-4-methyl-6-hydroxy-2-pyridon, 1,3-Diaminobenzol, 1-Amino-3-N,N-di-(β-hydroxyethyl)-aminobenzol,1-Amino-3-N,N-di-(β-sulfatoethyl)-aminobenzol, 1-Amino-3-N,N-di-(β-hydroxyethyl)-amino-4-methoxybenzol, 1-Amino-3-N,N-di-(β-sulfatoethyl)-amino-4-methoxybenzol, 1-Amino-3-sulfo-benzylamino-benzol, 1-Amino-3-sulfo-benzylamino-4-chlorbenzol, 1-Amino-3-N,N-di-(sulfobenzyl)-aminobenzol, 2-(4-β-Sulfatoethylsulfonyl-phenyl)-3-methyl-5-pyrazolon und 1-(4-β-Sulfatoethylsulfonyl-phenyl)-3-carboxy-5-pyrazolon.

Aromatische Reste D oder D₁ der Diazokomponenten D-NH₂ bzw. D₁-NH₂ , die keine faserreaktive Gruppe der allgemeinen Formel (3) tragen, sind beispielsweise solche der Amine der allgemeinen Formeln (5a) und (5b) 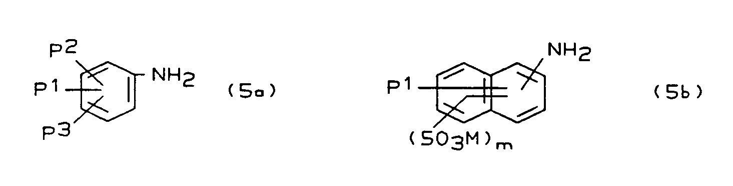
in welchen
- P¹: Wasserstoff, Sulfo oder eine Gruppe der allgemeinen Formel -SO₂-Y mit Y der obengenannten Bedeutung ist,
- P²: Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-(C₁-C₄-Alkyl)-carbamoyl, Fluor, Chlor, Brom oder Trifluormethyl ist,
- P³: Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-(C₁-C₄-Alkyl)-carbamoyl, Fluor, Chlor, Nitro, Sulfamoyl, N-(C₁-C₄-Alkyl)-sulfamoyl, Alkylsulfonyl von 1 bis 4 C-Atomen, Phenylsulfonyl oder Phenoxy ist,
wobei der Benzolkern in Formel (5a) und (5b) zusätzlich in ortho-Stellung zur Aminogruppe eine Hydroxygruppe enthalten kann,
- m: die Zahl Null, 1 oder 2 bedeutet (wobei diese Gruppe im Falle von p gleich Null ein Wasserstoffatom bedeutet) und
- M: die obengenannte Bedeutung hat.

Bevorzugt ist hiervon P² gleich Wasserstoff, Methyl, Methoxy, Brom, Chlor, Carboxy und Sulfo sowie P³ gleich Wasserstoff, Methyl, Methoxy, Chlor, Carboxy, Sulfo und Acetylamino.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel -SO₃M , Carboxygruppen Gruppen entsprechend der allgemeinen Formel -COOM , Phosphatogruppen Gruppen entsprechend der allgemeinen Formel -OPO₃M₂ , Thiosulfatogruppen Gruppen entsprechend der allgemeinen Formel -S-SO₃M und Sulfatogruppen Gruppen entsprechend der allgemeinen Formel -OSO₃M , jeweils mit M der obengenannten Bedeutung.

Aromatische Amine der allgemeinen Formel D-NH₂ entsprechend den Formeln (5a) und (5b) sind beispielsweise:
2-Amino- oder 4-Aminobenzoesäure, 3-Amino-benzoesäure, 3-Chloranilin-6-carbonsäure, Anilin-2- oder -3- oder -4-sulfonsäure, 2,5-Disulfo-anilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 4-Amino-anisol-2-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichloranilin-4-sulfonsäure, 2,6-Dimethylanilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-(β-Sulfatoethylsulfonyl)-anilin, 3-(β-Sulfatoethylsulfonyl)-anilin, 2-Sulfo-5-(β-sulfatoethylsulfonyl)-anilin, 2-Sulfo-4-(β-sulfatoethylsulfonyl)-anilin, 2-Methoxy-5-(β-sulfatoethylsulfonyl)-anilin, 2-Methoxy-5-methyl-4-(β-sulfatoethylsulfonyl)-anilin, 2,5-Dimethoxy-4-(β-sulfatoethylsulfonyl)-anilin, 2-Amino-5-(β-sulfatoethylsulfonyl)-phenol, 2-Amino-4-(β-sulfatoethylsulfonyl)-phenol, 2-Amino-6-(β-sulfatoethylsulfonyl)-naphthalin-8-sulfonsäure, 2-Amino-8-(β-sulfatoethylsulfonyl)-naphthalin-6-sulfonsäure, 2-Amino-5-(β-sulfatoethylsulfonyl)-naphthalin-7-sulfonsäure und 2-Amino-7-(β-sulfatoethylsulfonyl)-naphthalin-5-sulfonsäure.

Aromatische Amine der Diazokomponente Z-D-NH₂ oder Z-D₁-NH₂ mit dem faserreaktiven Rest Z gehen bevorzugt von aromatischen Aminen der allgemeinen Formeln (6a) und (6b) 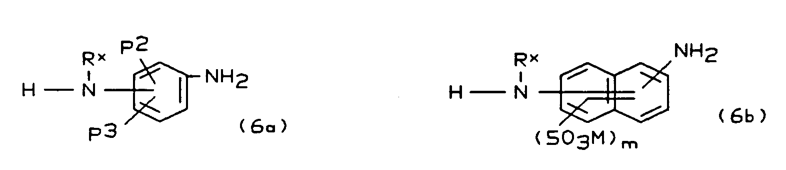
aus, in welchen R^{x}, M, m, P² und P³ die oben angegebenen, insbesondere bevorzugten Bedeutungen haben, wobei der Benzolkern in Formeln (6a) und (6b) zusätzlich in ortho-Stellung zur Aminogruppe -NH₂ eine Hydroxygruppe enthalten kann.

Amine der allgemeinen Formeln (6) sind beispielsweise:
1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,5-Diamino-4-methylbenzol-2-sulfonsäure, 1,5-Diamino-4-methoxybenzol-2-sulfonsäure, 1,3-Diaminobenzol-5-sulfonsäure, 1,3-Diamino-5-methyl-benzol, 2,6-Diamino-naphthalin, 2,6-Diamino-naphthalin-4,8-disulfonsäure, 2-Amino-5-methylamino-naphthalin-1-sulfonsäure, 2-Amino-5-methylamino-naphthalin-1,7-disulfonsäure und 1,4-Diamino-naphthalin-6-sulfonsäure.

Bevorzugte Reste D, D₁ oder D₂ ohne oder mit dem Rest Z sind in Formeln (3a) bis (3e), (4a) und (4b) solche der allgemeinen Formeln (5c) und (5d) bzw. (5g) und in Formel (4c) solche der allgemeinen Formeln (5e) und (5f) bzw. (5h): 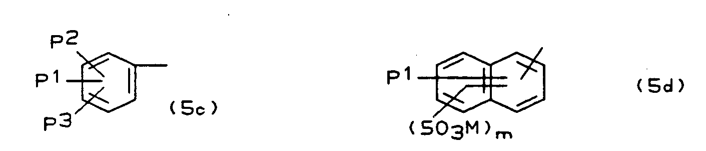 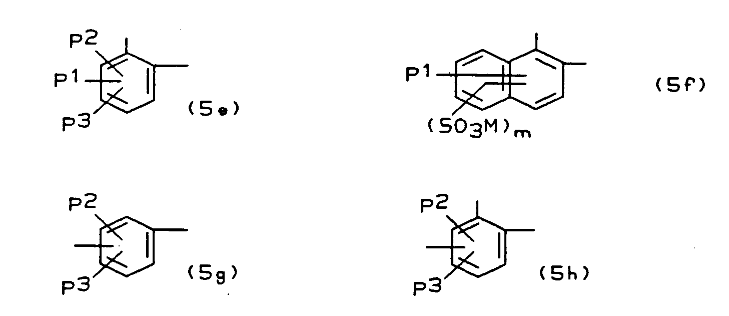
in welchen P¹, P², P³, m und M die obengenannten Bedeutungen haben.

Aromatische Reste E einer kupplungsfähigen und diazotierbaren Verbindung der allgemeinen Formel H-E-NH₂ sind beispielsweise solche der allgemeinen Formeln (7a), (7b) und (7c) 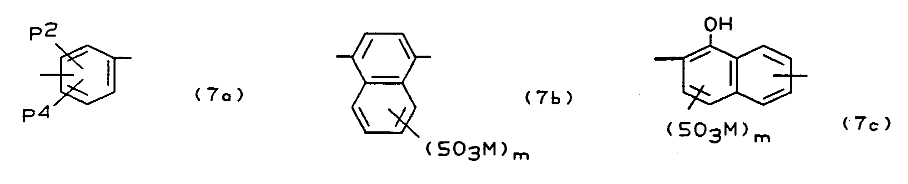
in welchen
- P² und M: die oben angegebenen Bedeutungen haben,
- P⁴: Wasserstoff, Alkyl von 1 bis 4 C-Atomen, wie Methyl oder Ethyl, Alkoxy von 1 bis 4 C-Atomen, wie Methoxy oder Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist und
- m: für die Zahl Null, 1 oder 2 steht (wobei diese Gruppe im Falle von p gleich Null ein Wasserstoffatom bedeutet).

Solche Verbindungen sind beispielsweise:
Anilin, 3-Methylanilin, 3-Chloranilin, 2,5-Dimethylanilin, 2,5-Dimethoxyanilin, 3-Methoxyanilin, 3-Methyl-6-methoxyanilin 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol, 3-Propionylamino-anilin, 3-Butyrylamino-anilin, 2-Sulfo-5-acetylamino-anilin, 2-Amino-5-naphthol-7-sulfonsäure und 2-Amino-8-naphthol-6-sulfonsäure.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono-und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K , die keine faserreaktive Gruppe der allgemeinen Formel (2) tragen, sind beispielsweise Verbindungen der allgemeinen Formeln (8a) bis (8g) 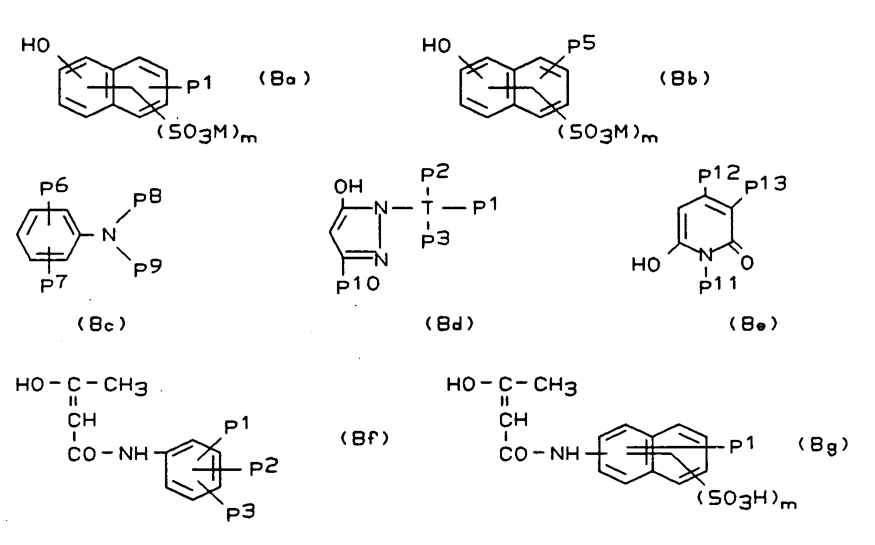
in welchen
- P¹, P², P³, m und M: die obengenannten Bedeutungen haben,
- P₅: Alkylureido mit Alkylgruppen von 1 bis 6 C-Atomen, Phenylureido, im Phenylrest durch Chlor, Methyl, Methoxy, Nitro, Sulfo und/oder Carboxy und/oder eine Gruppe -SO₂-Y mit Y der obigen Bedeutung substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy und/oder eine Gruppe -SO₂-Y mit Y der obigen Bedeutung substituiertes Benzoylamino bedeutet,
- P⁶: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,
- P⁷: Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist,
- P⁸: Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,
- P⁹: Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist,
- P¹⁰: Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy ist,
- T: für einen Benzol- oder Naphthalinring, bevorzugt Benzolring, steht,
- P¹¹: Wasserstoff, Alkyl von 1 bis 6 C-Atomen, bevorzugt von 1 bis 4 C-Atomen, das durch Phenyl oder Sulfophenyl oder durch Hydroxy, Amino, Methoxy, Ethoxy, Carboxy, Sulfo, Acetylamino, Benzoylamino oder Cyano substituiert sein kann, Cyclohexyl, Phenyl oder durch Carboxy, Sulfo, Benzoylamino, Acetylamino, Methyl, Methoxy, Cyano und/oder Chlor substituiertes Phenyl ist und bevorzugt Wasserstoff oder Alkyl von 1 bis 4 C-Atomen, das durch Phenyl, Sulfo oder Sulfophenyl substituiert sein kann, ist,
- P¹²: Wasserstoff oder Alkyl von 1 bis 4 C-Atomen, wie Methyl, oder ein durch Alkoxy von 1 bis 4 C-Atomen, wie Methoxy, oder Cyano substituiertes Alkyl von 1 bis 4 C-Atomen ist, bevorzugt ein Alkyl von 1 bis 4 C-Atomen oder Phenyl ist, und
- P¹³: Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo oder Sulfoalkyl mit einem Alkylrest von 1 bis 4 C-Atomen, wie Sulfomethyl, oder Cyano oder Carbamoyl ist.

Verbindungen der allgemeinen Formeln (8) sind beispielsweise:
1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 2-Acetylamino-5-hydroxy-naphthalin-7-sulfonsäure, 3-Acetylamino-5-hydroxy-naphthalin-7-sulfonsäure, 2-Methyl-amino-8-hydroxy-naphthalin-6-sulfonsäure oder 2-(3′- und 4′-Sulfophenyl)-amino-8-hydroxynaphthalin-6-sulfonsäure, 3-(3′- und 4′-Sulfophenyl)-amino-8-hydroxy-naphthalin-6-sulfonsäure, N,N-Di-(β-sulfoethyl)-anilin und dessen im Benzolkern durch Methyl, Methoxy und/oder Ethoxy mono- oder disubstituierten Derivate, N-Ethyl-N-(β-sulfoethyl)-anilin, N-(β-Sulfoethyl)-anilin, N-(β-Carboxyethyl)-anilin und deren im Benzolkern durch Methyl, Methoxy und/oder Ethoxy mono- oder disubstituierten Derivate, des weiteren 1-[3′-(β-Chlorethylsulfonyl)-benzoylamino]-3,6-disulfo-8-naphthol, 1-[3′-(Vinylsulfonyl)-benzoylamino]-3,6-disulfo-8-naphthol, 1-[3′-(Vinylsulfonyl)-benzoylamino]-4,6-disulfo-8-naphthol, 1-[3′-(β-Sulfatoethylsulfonyl)-benzoylamino]-4,6-disulfo-8-naphthol, 2-[3′-(β-Chlorethylsulfonyl)-benzoylamino]-6-sulfo-8-naphthol, 2-[3′-(Vinylsulfonyl)-benzoylamino]-6-sulfo-8-naphthol, 3-[3′-(β-Chlorethylsulfonyl)-benzoylamino]-6-sulfo-8-naphthol, 3-[3′-(Vinylsulfonyl)-benzoylamino]-6-sulfo-8-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N′-(3′-β-Chlorethylsulfonyl-phenyl)-ureido]-3,6-disulfo-8-naphthol, 1-[N′-(3′-Vinylsulfonyl-phenyl)-ureido]-3,6-disulfo-8-naphthol, 1-[N′-(3′-Vinylsulfonyl-propyl)-ureido]-3,6-disulfo-8-naphthol, 1-[N′-(3′-β-Chlorethylsulfonyl-phenyl)-ureido]-4,6-disulfo-8-naphthol, 1-[N′-(3′-Vinylsulfonyl-phenyl)-ureido]-4,6-disulfo-8-naphthol, 1-[N′-(3′-β-Chlorethylsulfonyl-propyl)-ureido]-4,6-disulfo-8-naphthol, 2-[N′-(3′-β-Sulfatoethylsulfonyl-phenyl)-ureido]-6-sulfo-8-naphthol, 2-[N′-(3′-β-Chlorethylsulfonyl-propyl)-ureido]-6-sulfo-8-naphthol, 3-[N′-(3′-β-Chlorethylsulfonyl-phenyl)-ureido]-6-sulfo-8-naphthol und 3-[N′-(3′-Vinylsulfonyl-propyl)-ureido]-6-sulfo-8-naphthol.

Von besonderer Bedeutung sind hiervon sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetyl-amino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Pyrazolon-Kupplungskomponenten sind beispielsweise 3-Methyl-, 3-Carboxy- und 3-(C₂-C₅-Alkoxycarbonyl)-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl und/oder Sulfamoyl substituiertes Phenyl oder sulfosubstituiertes 1- oder 2-Naphthyl tragen, beispielsweise:
1-(2′-Methoxy-5′-methylphenyl)-, 1-(2′-Chlor-5′-sulfophenyl)-, 1-(2′-Methoxy-5′-sulfophenyl)-, 1-(2′-Methyl-4′-sulfophenyl)-, 1-(2′,5′-Dichlor-4′-sulfophenyl)-, 1-(2′,5′-Disulfophenyl)-, 1-(2′-Carboxyphenyl)-, 1-(3′-Sulfophenyl)-, 1-(4′-Sulfophenyl)-, 1-(3′-Sulfamoylphenyl)-3-carboxy-5-pyrazolon, 1-(3′- oder 4′-Sulfophenyl)-, 1-(2′-Chlor-4′- oder -5′-sulfophenyl)-, 1-(2′-Methyl-4′-sulfophenyl)-, 1-(4′,8′-Disulfo-2′-naphthyl)- und 1-(6′-Sulfo-1′-naphthyl)-3-methyl-5-pyrazolon, 1-Phenyl-5-pyrazolon-3-carbonsäureethylester, 5-Pyrazolon-3-carbonsäureethylester, 5-Pyrazolon-3-carbonsäure, 1-[4′-(β-Sulfatoethylsulfonyl)-2′-sulfo]-phenyl-3-methyl-pyrazol-5-on, 1-[4′-(β-Sulfatoethylsulfonyl)]-phenyl-3-carboxy-pyrazol-5-on, 1-[4′-(β-Sulfatoethylsulfonyl)]-phenyl-3-methyl-pyrazol-5-on, 1-[3′-(β-Sulfatoethylsulfonyl)]-phenyl-3-carboxy-pyrazol-5-on, 1-[3′-(β-Sulfatoethylsulfonyl)]-phenyl-3-methyl-pyrazol-5-on, und 1-(4′-Sulfophenyl)-3-carboxy-pyrazol-5-on.

Pyridonkupplungskomponenten sind beispielsweise
1-Ethyl-2-hydroxy-4-methyl-5-carbonamido-pyridon-6, 1-(2′-Hydroxyethyl)-2-hydroxy-4-methyl-5-carbonamido-pyridon-6, 1-(4′-Sulfo-phenyl)-2-hydroxy-4-methyl-5-carbonamido-pyridon-6, 1-(2′-Sulfoethyl)-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyanpyridon-6, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6, 1-Carboxymethyl-2-hydroxy-4-ethyl-5-phenylsulfonyl-pyridon-6 und 1-(2′-Sulfo-ethyl)-2-hydroxy-4-carboxy-pyridon-6 und Acetoacetyl-arylamid-Kupplungskomponenten sind beispielsweise Acetoacetyl-(2-methoxy-4-sulfo-5-methyl)-anilin, Acetoacetyl-(2,4-dimethoxy-5-methyl)-anilin und Acetoacetyl-(4-β-sulfatoethylsulfonyl)-anilin.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der Formel (9a) 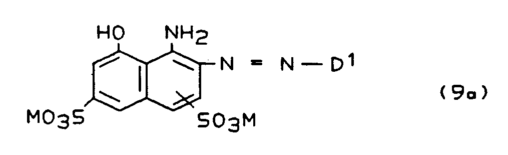
in welcher
- D¹: der Rest einer Diazokomponente, beispielsweise ein Rest der Formel (10a) oder (10b) 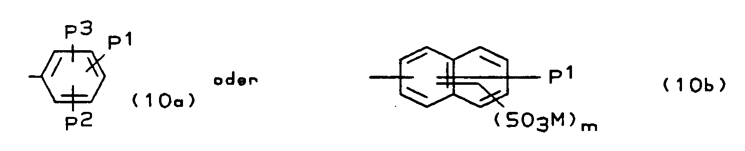
sein kann, worin P¹, P², P³, M und m die oben angegebenen Bedeutungen haben.

Einzelne Reste D¹ sind beispielsweise: Phenyl, 2-Sulfo-phenyl, 3-Sulfo-phenyl, 4-Sulfo-phenyl, 2,4-Disulfo-phenyl, 2,5-Disulfo-phenyl, 3,5-Disulfo-phenyl, 1,5-Disulfo-naphth-2-yl, 4,8-Disulfo-naphth-2-yl, 3,6,8-Trisulfo-naphth-2-yl, 4,6,8-Trisulfo-naphth-2-yl, 3,6,8-Trisulfo-naphth-1-yl, 4,6,8-Trisulfo-naphth-1-yl, 4-Sulfo-naphth-1-yl, 1-Sulfo-naphth-2-yl, 3-Acetylamino-phenyl, 4-Acetylamino-phenyl, 4-Acetylamino-2-sulfo-phenyl, 5-Acetylamino-2-sulfo-phenyl, 4-Nitro-phenyl, 4-Nitro-2-sulfo-phenyl, 6-Acetylamino-4,8-disulfo-naphth-2-yl, 4-(β-Sulfatoethylsulfonyl)-phenyl und 3-(β-Sulfatoethylsulfonyl)-phenyl.

Kupplungskomponenten, die erfindungsgemäß die faserreaktive Gruppe der Formel (2) enthalten bzw. in die die faserreaktive Gruppe, gegebenenfalls erst nach der Kupplungsreaktion, eingeführt werden kann, sind beispielsweise Verbindungen der allgemeinen Formeln (11a) bis (11h) bzw. deren Z¹-freien Vorprodukte (d.h. Verbindungen die statt der Gruppe -N(R^{x})-Z¹ die Gruppe -N(R^{x})-H enthalten): 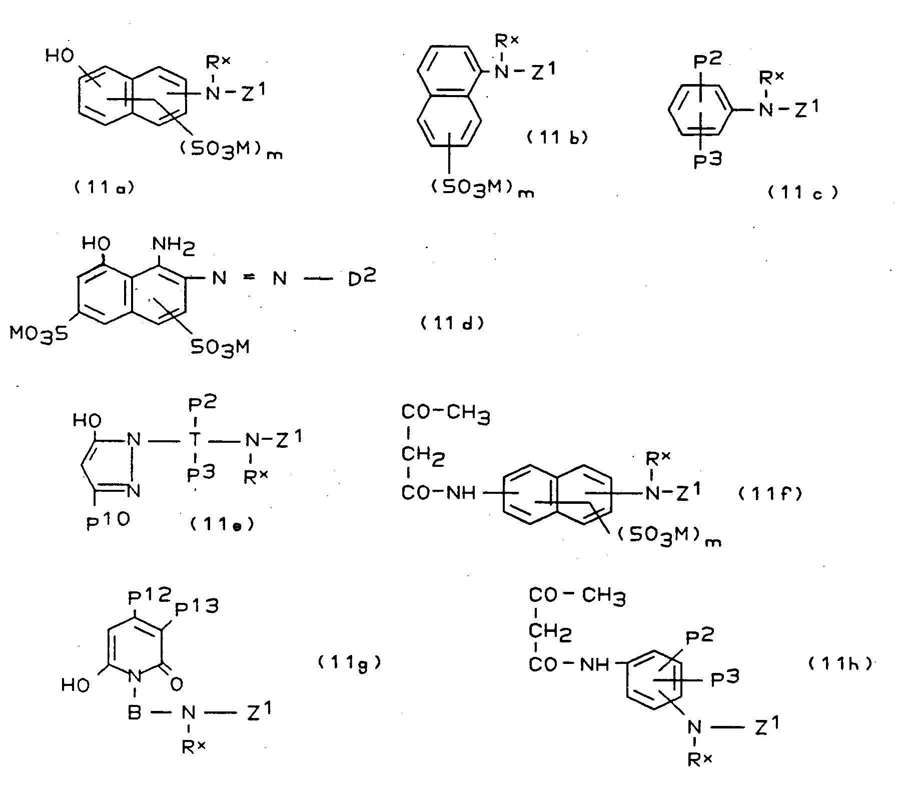
in welchen
- R^{x}, P², P³, P¹⁰, P¹², P¹³, D², M, m und T: die oben angegebenen, insbesondere bevorzugten Bedeutungen haben,
- B: Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist, wobei im Falle von "Benzyl" und "Phenethyl" die Gruppe -N(R^{x})-Z¹ an den Benzolkern gebunden ist,
- Z¹: ein Rest der allgemeinen Formel (2A) 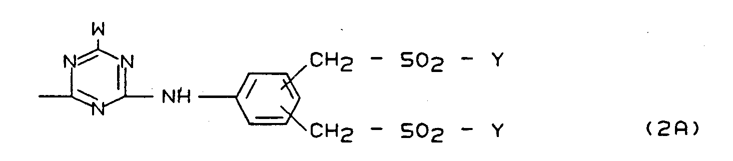 mit W und Y der obengenannten Bedeutung ist,
- D²: der Rest einer Diazokomponente mit einer faserreaktiven Gruppe, insbesondere der Formel (2), ist, vorzugsweise ein Rest der obengenannten Formel (10a) oder (10b) mit P¹ gleich einer Gruppe der Formel -SO₂-Y oder ein Rest der Formel (10c) 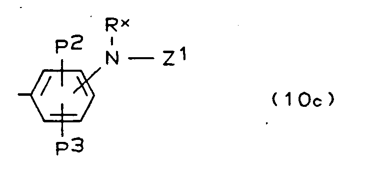 ist, in welcher R^{x}, P², P³ und Z¹ die oben angegebenen, insbesondere bevorzugten Bedeutungen haben.

Aromatische Diamine aus dem Rest der Formel (10c) sind beispielsweise:
1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest Z¹ substituiert ist.

Die Verbindungen der allgemeinen Formeln (11b) und (11c) können selbst als Kupplungskomponenten nicht eingesetzt werden. Als Kupplungskomponenten zur Synthese der erfindungsgemäßen Azofarbstoffe dienen deren Z¹-freien Vorprodukte, d.h. deren Vorprodukte, die anstelle der Gruppe -N(R^{x})-Z¹ eine Aminogruppe der Formel -N(R^{x})-H enthalten. Nach Kupplung dieser aminogruppenhaltigen Vorprodukte mit einer entsprechenden Diazokomponente zur Azoverbindung kann der faserreaktive Rest Z¹ durch Umsetzung mit einer Verbindung der allgemeinen Formel Hal-Z¹ , in welcher Hal ein Halogenatom, bevorzugt ein Fluor- oder Chloratom, darstellt und Z¹ die obengenannte Bedeutung besitzt, in die Aminogruppe -N(R^{x})-H eingeführt werden. Analog können auch die Z¹-freien Aminoverbindungen der Verbindungen der allgemeinen Formeln (11a) und (11d) bis (11h) selbst zunächst als Kupplungskomponenten zur Herstellung einer Amino-Azo-Ausgangsverbindung dienen, in die sodann der faserreaktive Rest in gleicher Weise eingeführt werden kann. Die Kupplungskomponenten mit dem faserreaktiven Rest Z¹ der allgemeinen Formeln (11a) und (11d) bis (11h) selbst lassen sich ebenso durch Umsetzung dieser Z¹-freien, aminogruppenhaltigen Ausgangsverbindungen mit einer Verbindung der Formel Hal-Z¹ analog bekannter Verfahrensweisen herstellen.

Anstelle des Restes Z¹ können auch andere, bekannte faserreaktive Reste in die Aminogruppen der aminogruppenhaltigen Kupplungskomponenten oder deren Amino-Azo-Ausgangsverbindungen eingeführt werden, sofern solche erfindungsgemäßen Azofarbstoffe hergestellt werden sollen, in welchen die Diazokomponente die erfindungsgemäße faserreaktive Gruppierung Z besitzt. Prinzipiell kommen hierfür alle bekannten faserreaktiven Acylierungsmittel in Betracht.

Reste K in den allgemeinen Formeln (3b) und (4b), die die Gruppe Z nicht enthalten, sind insbesondere Reste der allgemeinen Formeln (12a) bis (12h) 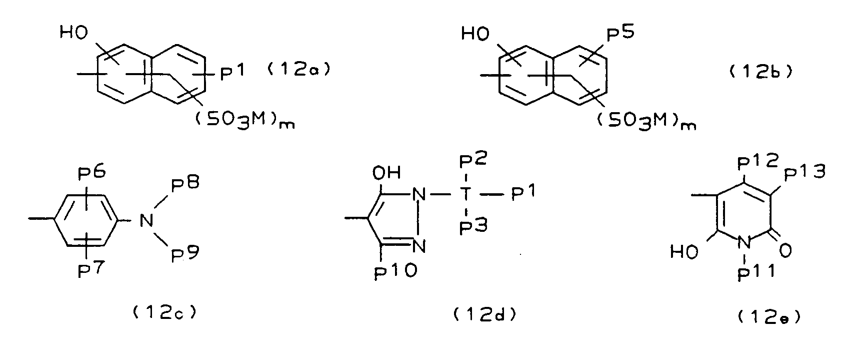 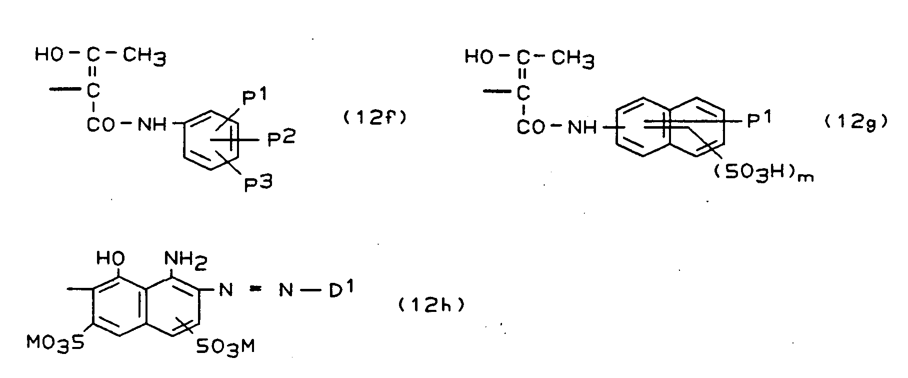
in welchen die einzelnen Formelglieder die obengenannten Bedeutungen haben.

Reste K in den allgemeinen Formeln (3a), (3c) und (4a), die die Gruppe Z enthalten, sind insbesondere Reste der allgemeinen Formeln (12j) bis (12p) 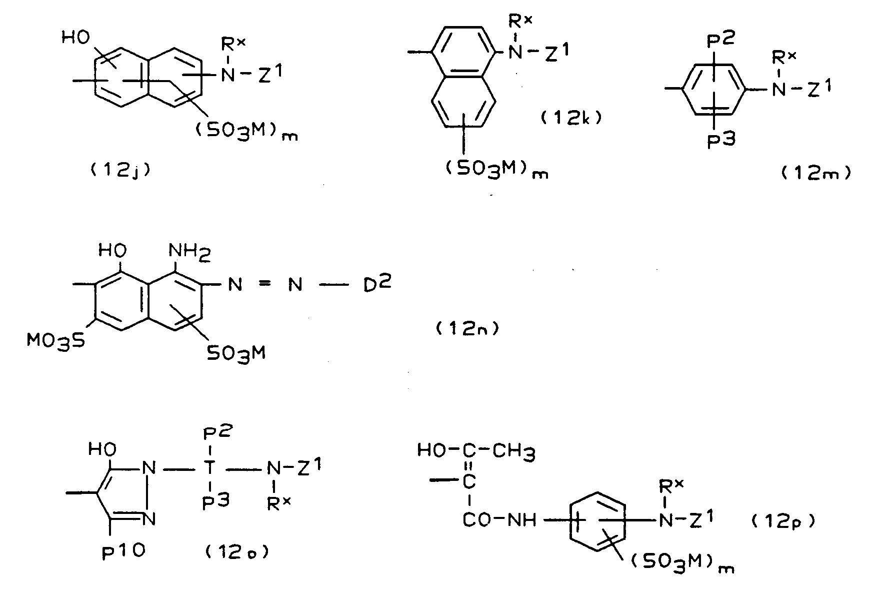
in welchen die einzelnen Formelglieder die obengenannten Bedeutungen haben.

Reste K in der allgemeinen Formel (4c) mit einem metallkomplex-bindenden Sauerstoffatom, die gegebenenfalls die Gruppe Z enthalten, sind insbesondere solche der Formeln (13a) bis (13f) 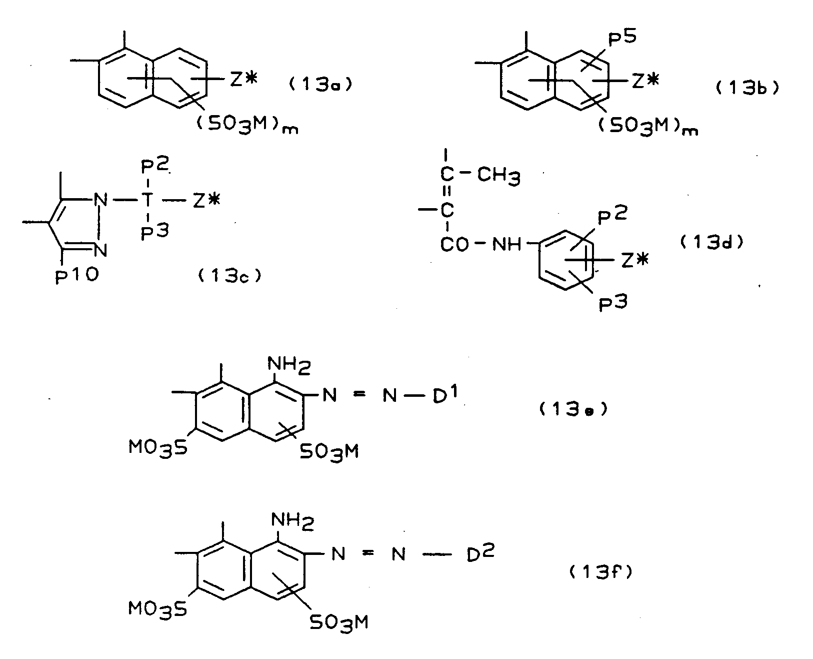
in welchen Z* eine der Bedeutungen von P¹ oder Z besitzt und die einzelnen Formelglieder eine der obengenannten Bedeutungen haben.

Von den erfindungsgemäßen Anthrachinonfarbstoffen sind diejenigen bevorzugt, die der allgemeinen Formel (14) 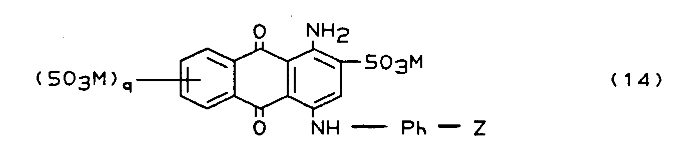
entsprechen, in welcher
- M: ein Wasserstoffatom oder ein Alkalimetall, wie Natrium, Kalium oder Lithium, ist,
- q: die Zahl Null oder 1 bedeutet (wobei im Falle von q gleich Null diese Gruppe ein Wasserstoffatom darstellt),
- Ph: Phenylen ist, das durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann, und
- Z: die faserreaktive Gruppe der allgemeinen Formel (2) ist.

Von den erfindungsgemäßen Phthalocyaninfarbstoffen sind diejenigen bevorzugt, die der allgemeinen Formel (15) 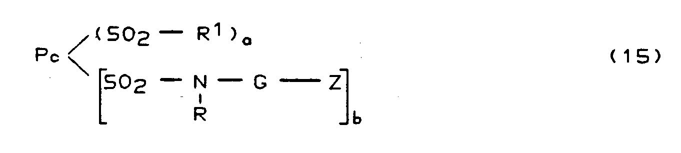
entsprechen, in welcher bedeuten:
- Pc: ist der Rest eines Kupfer- oder Nickelphthalocyanins;
- R¹: ist Hydroxy und/oder eine Aminogruppe der Formel -NR²R³ , in welcher R² und R³ unabhängig voneinander Wasserstoff oder Alkyl von 1 bis 4 C-Atomen, das durch Hydroxy oder Sulfo substituiert sein kann, bedeuten;
- R: ist Wasserstoff oder Alkyl von 1 bis 4 C-Atomen;
- G: ist Phenylen, das durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, wie beispielsweise ein Sulfophenylen, oder ist ein Alkylen von 2 bis 6 C-Atomen, wie Ethylen;
- Z: ist die faserreaktive Gruppe der Formel (2);
- a: ist eine Zahl von 1 bis 3 und
- b: ist eine Zahl von 1 bis 2,
wobei die Summe von (a+b) gleich einer Zahl von 3 bis 4 ist.

Weiterhin bevorzugt sind von den Azofarbstoffen solche, die den allgemeinen Formeln (16a) bis (16j) entsprechen: 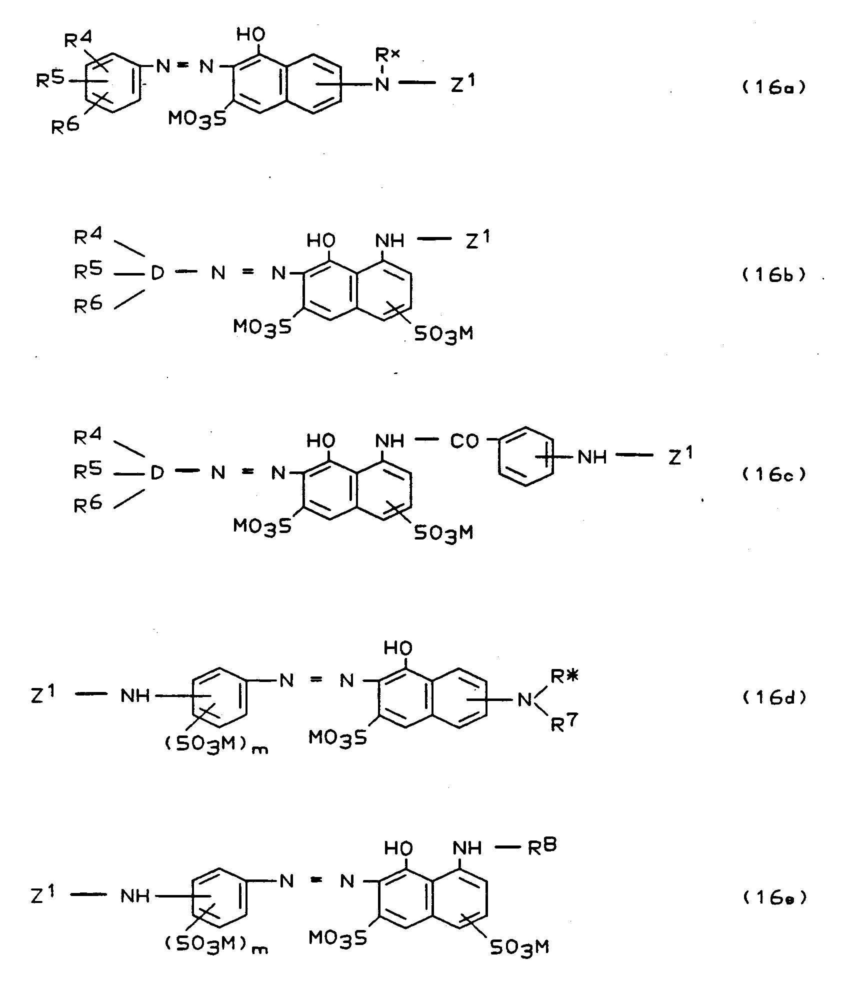 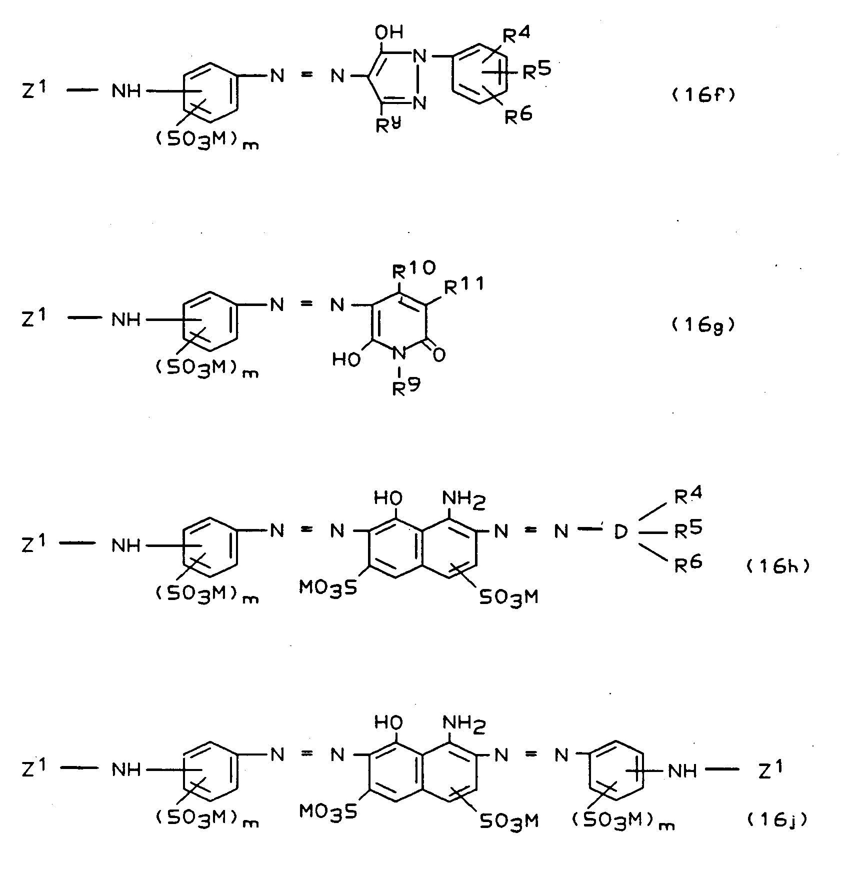
in welchen bedeuten:
- M: hat eine der obengenannten Bedeutungen;
- R^{x}: ist Wasserstoff oder Alkyl von 1 bis 4 C-Atomen, wie Methyl;
- R⁴: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy, Sulfo, β-Sulfatoethylsulfonyl oder Vinylsulfonyl;
- R⁵: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy und Sulfo;
- R⁶: ist Wasserstoff oder Sulfo;
- Z¹: ist ein Rest der allgemeinen Formel (2A) 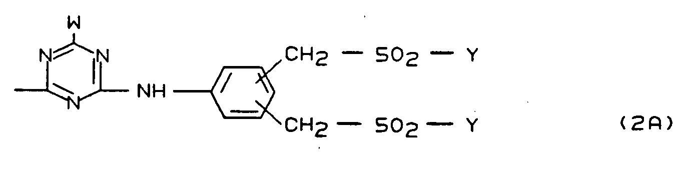 in welcher W und Y eine der obengenannten Bedeutungen haben;
- D: ist ein Benzolring oder ein die Azogruppe in β-Stellung enthaltender Naphthalinring;
- m: steht für die Zahl Null, 1 oder 2 (wobei im Falle von m gleich Null diese Gruppe ein Wasserstoffatom darstellt);
- R*: ist Wasserstoff oder Methyl;
- R⁷: ist Alkanoyl von 2 bis 5 C-Atomen, wie Acetyl, oder ist Benzoyl, β-Sulfatoethylsulfonyl oder 3-(β-Chlorethylsulfonyl)-benzoyl;
- R⁸: ist Alkanoyl von 2 bis 5 C-Atomen, wie Acetyl, oder ist Benzoyl oder 3-(β-Chlorethylsulfonyl)-benzoyl;
- R^{y}: ist Methyl oder Carboxy;
- R⁹: ist Wasserstoff oder Alkyl von 1 bis 4 C-Atomen, wie Methyl oder Ethyl, oder ist Phenyl;
- R¹⁰: ist Wasserstoff oder Alkyl von 1 bis 4 C-Atomen, wie Methyl, oder ist Phenyl;
- R¹¹: ist Wasserstoff oder Cyano, Carbamoyl oder Sulfomethyl.

Weitere bevorzugte erfindungsgemäße Farbstoffe entsprechend der allgemeinen Formel (1) sind diejenigen der nachstehend angegebenen Formeln (17a), (17b) und (18) bis (30): 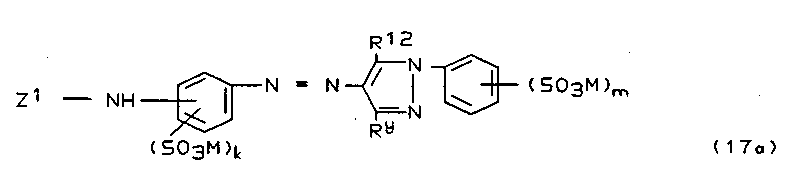 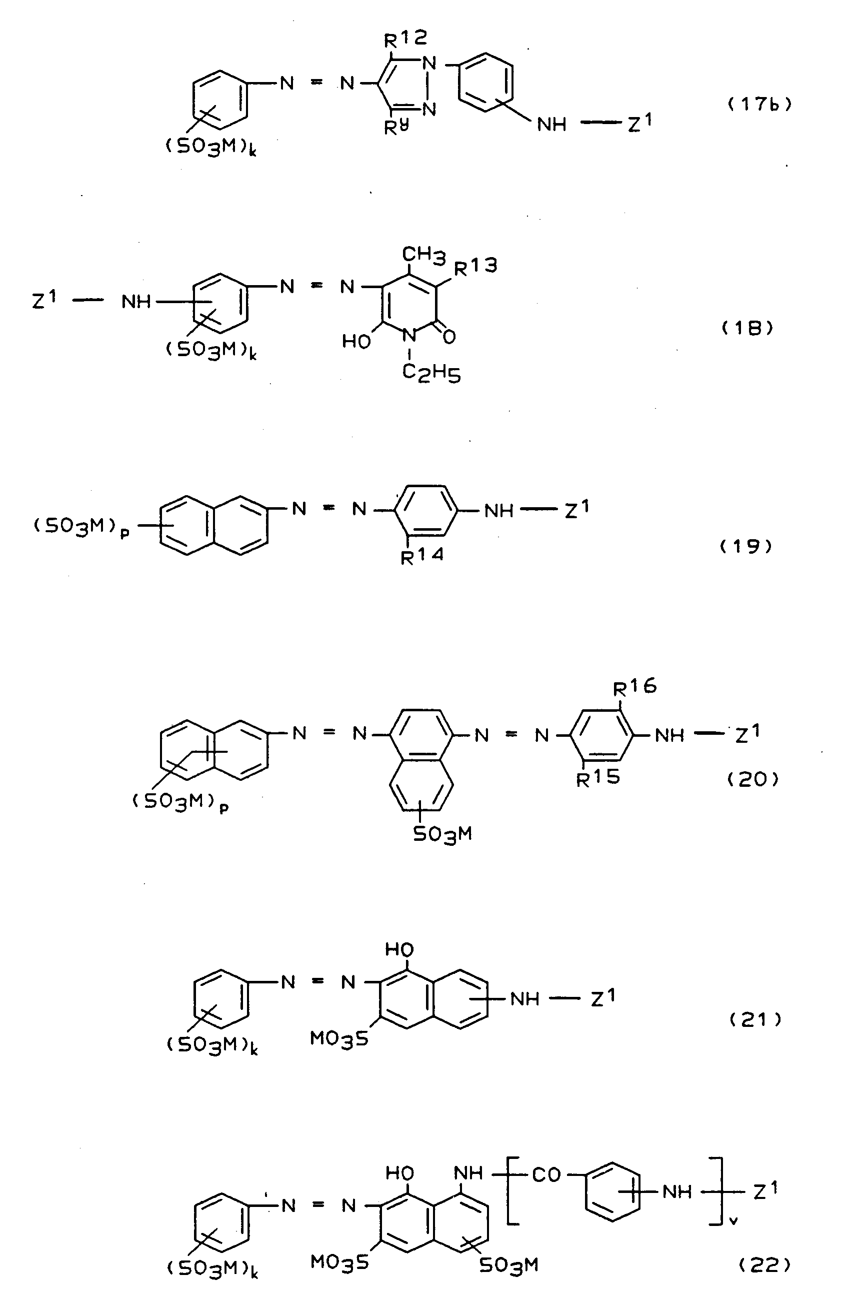 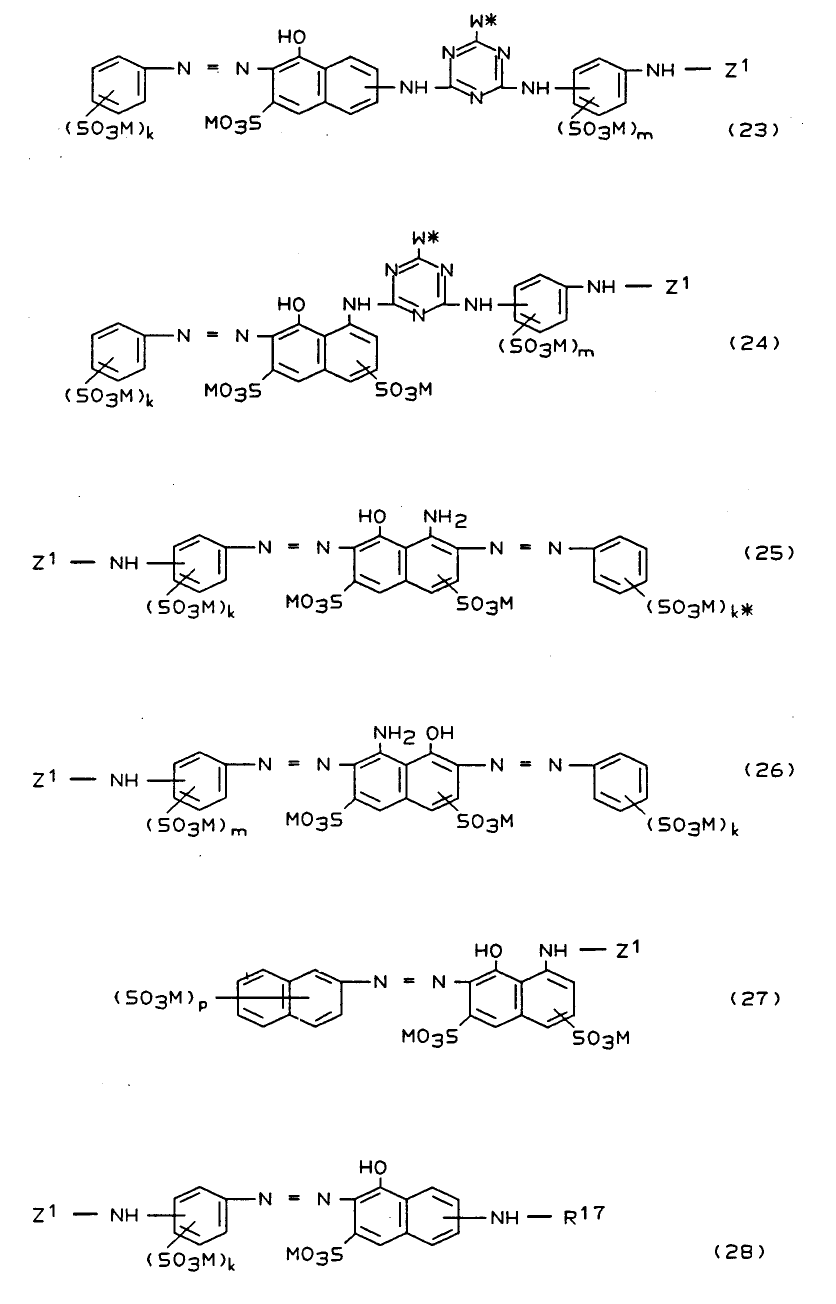 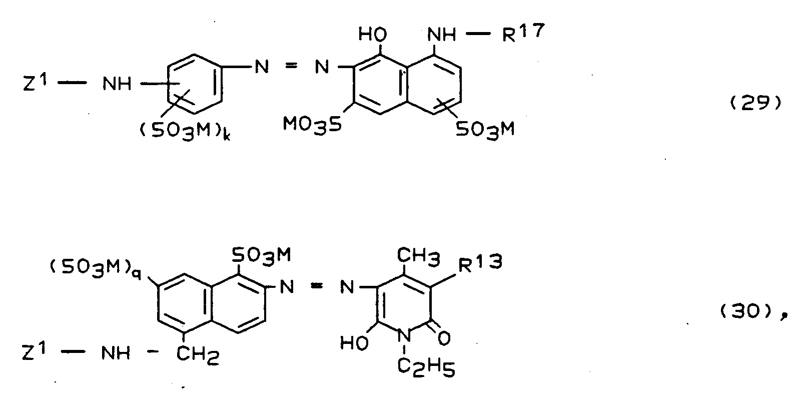
des weiteren die Metallkomplexfarbstoffe, wie die 1:2-Chrom- und 1:2-Kobalt- und insbesondere die 1:1-Kupferkomplex-Farbstoffe der Verbindungen der Formeln (31) bis (36): 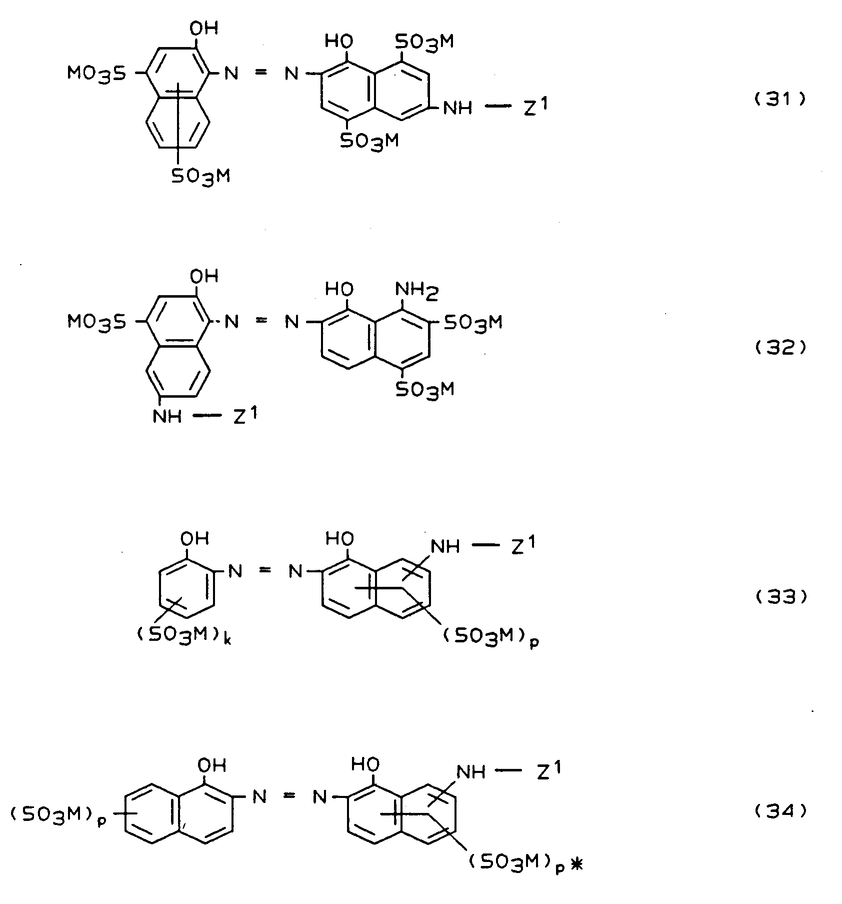 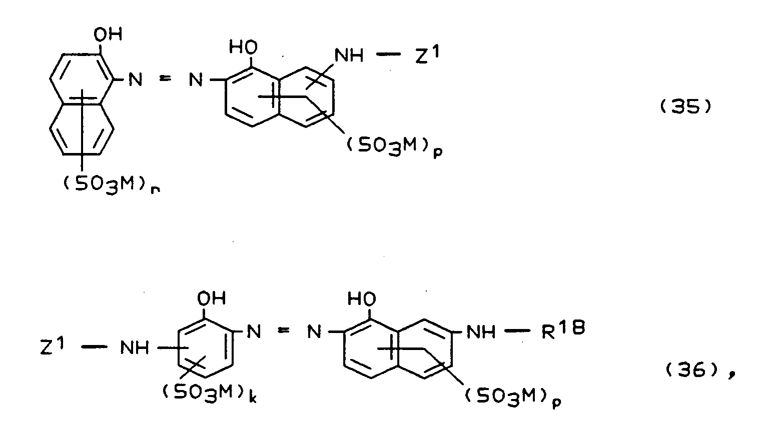
des weiteren die Farbstoffe der Formeln (37) bis (56):

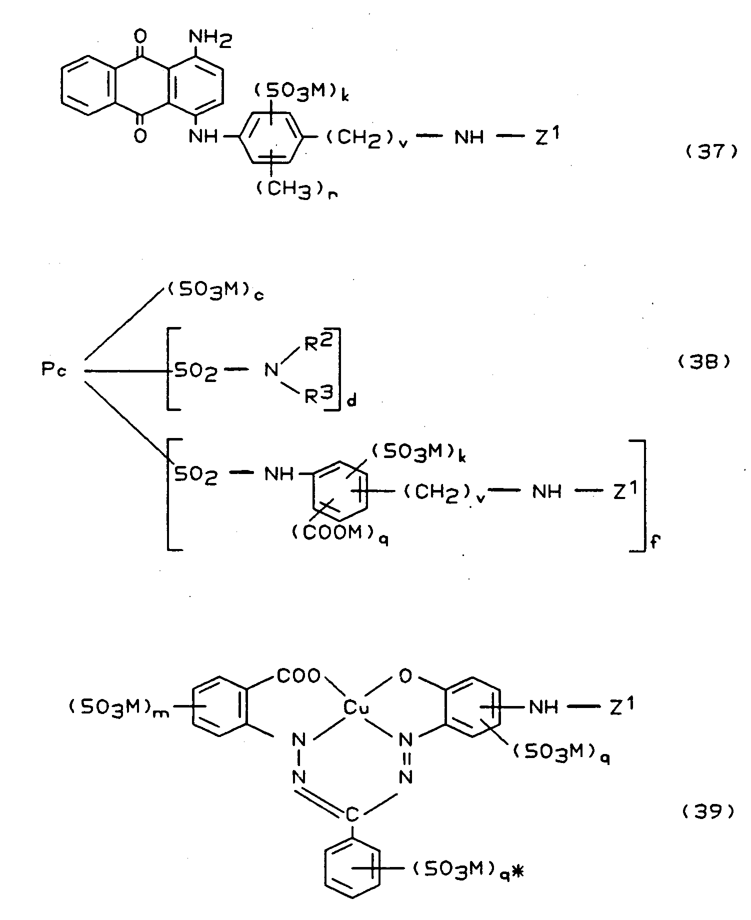

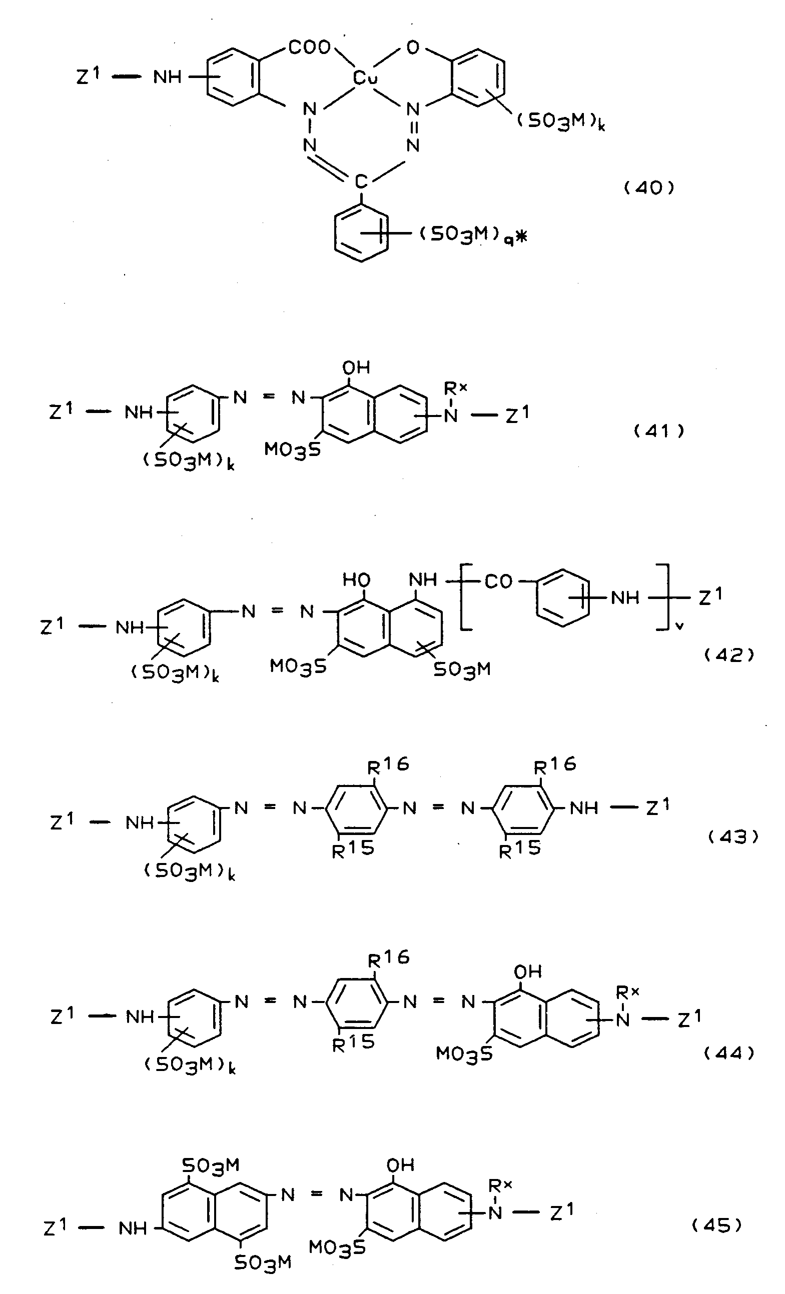

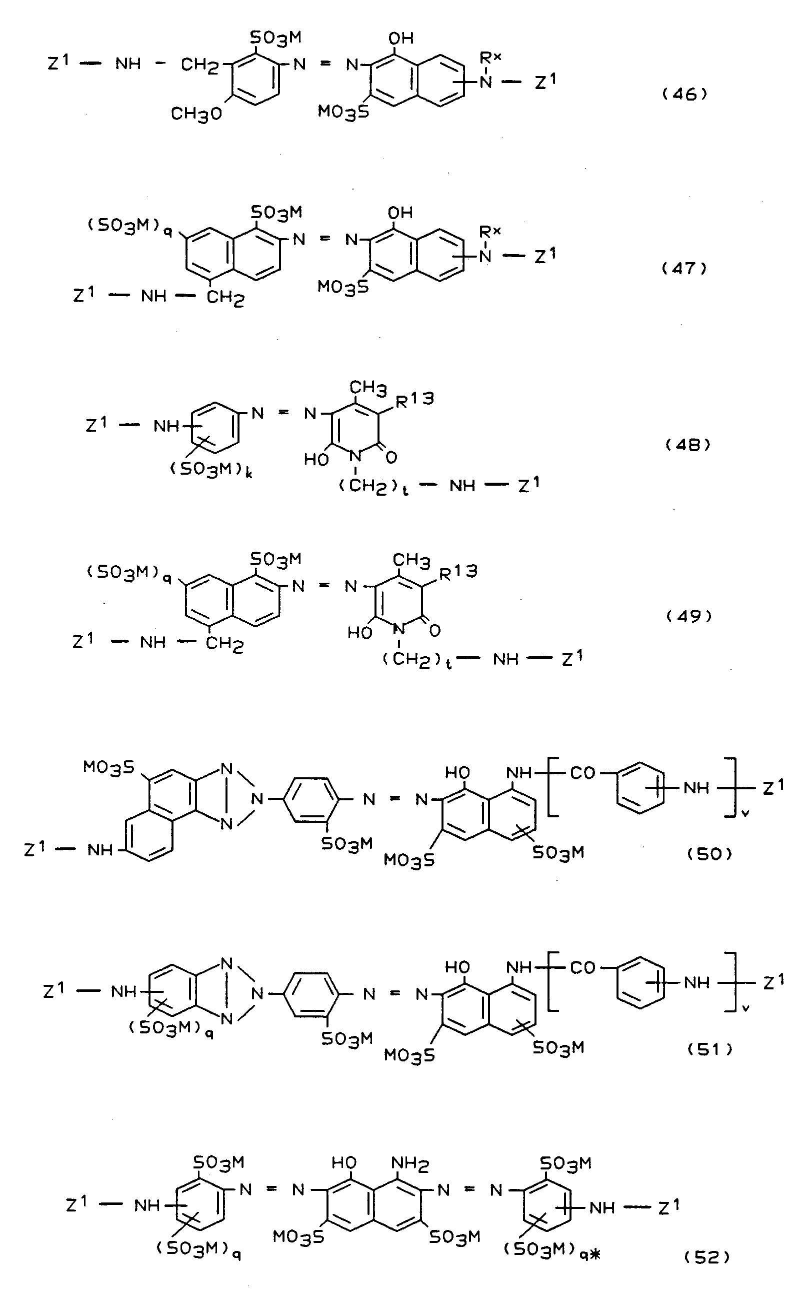

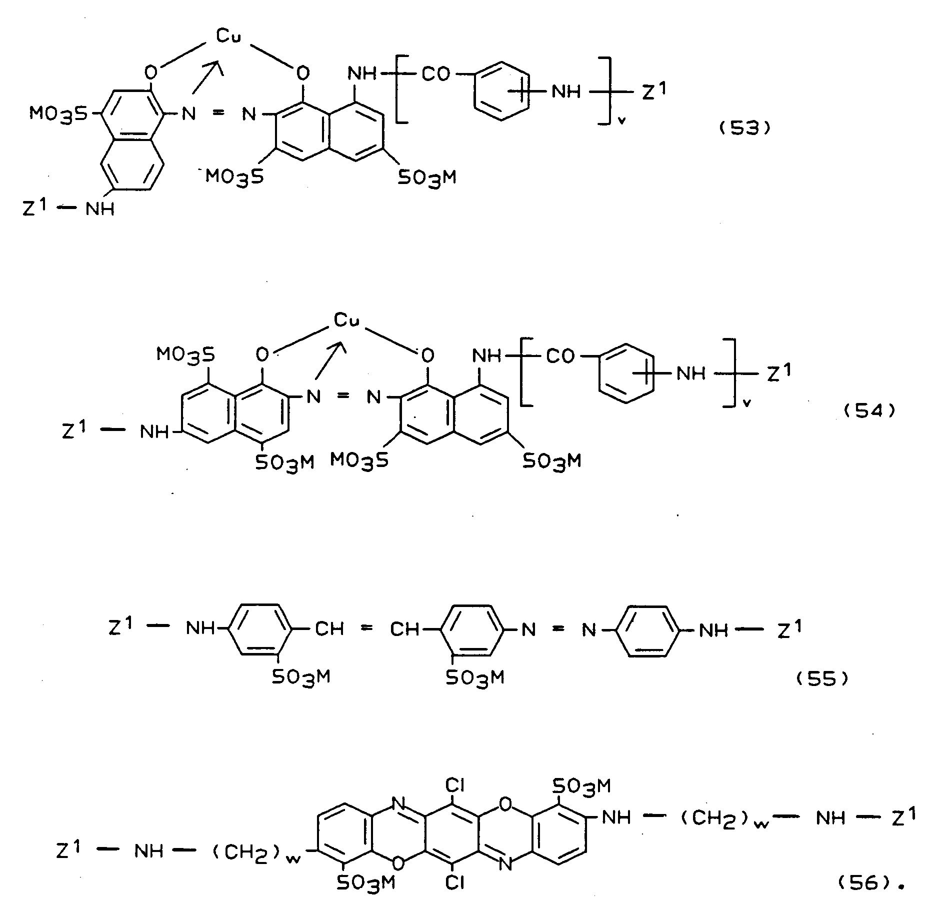

In diesen Formeln bedeuten:
- M, m, Z¹ und R^{y}: haben die obengenannten Bedeutungen;
- k: ist die Zahl 1 oder 2;
- k*: ist die Zahl 1 oder 2;
- R¹²: ist Hydroxy oder Amino;
- R¹³: ist Cyan, Carbamoyl oder Sulfomethyl;
- R¹⁴: ist Methyl, Acetylamino oder Ureido;
- p: ist die Zahl 1, 2 oder 3;
- p*: ist die Zahl 1, 2 oder 3;
- R¹⁵: ist Wasserstoff oder Alkyl von 1 bis 4 C-Atomen, wie Methyl und Ethyl, Alkoxy von 1 bis 4 C-Atomen, wie Methoxy und Ethoxy, Alkanoylamino von 2 bis 5 C-Atomen, wie Acetylamino, Ureido oder Halogen, wie Brom und insbesondere Chlor, vorzugsweise jedoch Wasserstoff, Methyl, Ethyl, Methoxy, Ethoxy, Acetylamino, Ureido oder Chlor;
- R¹⁶: ist Wasserstoff oder Alkyl von 1 bis 4 C-Atomen, wie Methyl und Ethyl, Alkoxy von 1 bis 4 C-Atomen, wie Methoxy und Ethoxy, oder Halogen, wie Brom und insbesondere Chlor, vorzugsweise jedoch Wasserstoff oder Methyl, Ethyl, Methoxy Ethoxy oder Chlor;
- v: ist die Zahl Null oder 1;
- W*: ist Chlor oder Fluor;
- R¹⁷: ist Acetyl oder Benzoyl;
- R¹⁸: ist Wasserstoff oder Acetyl;
- r: ist die Zahl Null oder 1, 2 oder 3 (wobei im Falle von r gleich Null diese Gruppe ein Wasserstoffatom bedeutet);
- R²: ist Wasserstoff oder Alkyl von 1 bis 4 C-Atomen, wie Methyl oder Ethyl, und
- R³: ist Wasserstoff oder Alkyl, wie Methyl oder Ethyl, oder
- R² und R³: bilden zusammen mit dem N-Atom einen eine Alkylengruppe von 3 bis 7 C-Atomen oder eine oder zwei Alkylengruppen von 1 bis 5 C-Atomen und eine weitere Heterogruppe, wie ein N- oder O-Atom oder eine Gruppe -NH- oder -N(CH₃)- oder -N(C₂H₅)- , enthaltenden heterocyclischen Rest, wie beispielsweise den N-Piperidino- oder N-Morpholino-Rest;
- q: ist die Zahl Null oder 1 (wobei im Falle von q gleich Null diese Gruppe ein Wasserstoffatom darstellt);
- q*: ist die Zahl Null oder 1 (wobei im Falle von q* gleich Null diese Gruppe ein Wasserstoffatom darstellt);
- Pc: ist der Rest des Kupfer- oder Nickelphthalocyanins;
- c: ist eine Zahl von 1 bis 3,
- d: ist eine Zahl von 0,5 bis 1,5 und
- f: ist eine Zahl von 1 bis 2, wobei die Summe von (c+d+f) eine Zahl von 3 bis 4 ist;
- R^{x}: ist Wasserstoff oder Alkyl von 1 bis 4 C-Atomen, wie Methyl;
- t: ist die Zahl 2 oder 3;
- w: ist die Zahl 2, 3 oder 4;
die in den obigen Farbstofformeln angegebenen Benzolringe können zusätzlich noch substituiert sein, wie beispielsweise durch 1 oder 2 Substituenten aus der Gruppe Methyl, Ethyl, Methoxy, Ethoxy, Methylsulfonyl, Ethylsulfonyl, Carboxy, Acetylamino und Chlor, und die Naphthalinringe durch einen Substituenten aus der Gruppe Methoxy, Carboxy, Acetylamino, Nitro und Chlor.

Die einzelnen Formelglieder, sowohl verschiedener als auch gleicher Bezeichnung innerhalb einer allgemeinen Formel, können im Rahmen ihrer Bedeutung zueinander gleiche und voneinander verschiedene Bedeutungen haben.

Die vorliegende Erfindung betrifft weiterhin Verfahren zur Herstellung der erfindungsgemäßen Farbstoffe der allgemeinen Formel (1). Sie lassen sich in an und für sich üblicher Weise analog bekannten, für die jeweilige Farbstoffklasse spezifischen Synthesewegen herstellen, indem man für den jeweiligen Farbstoff typische Vorprodukte, von denen mindestens eines eine Gruppe der allgemeinen Formel (2) enthält, miteinander umsetzt oder indem man von einer aminogruppenhaltigen Ausgangsverbindung der allgemeinen Formel (59) 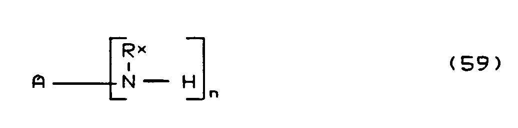
in welcher A, R^{x} und n die obengenannten Bedeutungen haben, ausgeht und diese und ein s-Triazin der allgemeinen Formel (60) 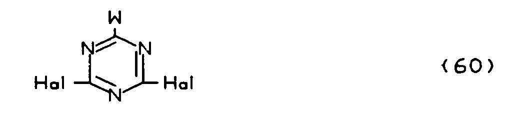
in welcher W die obengenannte Bedeutung besitzt und Hal für ein Halogenatom, wie insbesondere Chlor- oder Fluoratom, steht, und ein Amin der allgemeinen Formel (58) 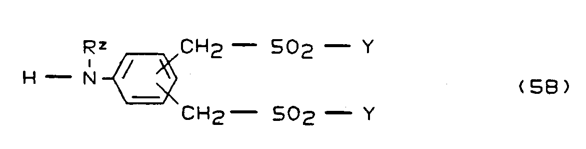
in welcher R^{z} und Y die obengenannten Bedeutungen haben, in stöchiometrischen Mengen in beliebiger Reihenfolge miteinander umsetzt und gegebenenfalls anschließend weitere, dem Fachmann geläufige, erforderliche Umwandlungsreaktionen durchführt.

Insbesondere lassen sich die erfindungemäßen Farbstoffe erfindungsgemäß herstellen, indem man eine Verbindung entsprechend der allgemeinen Formel (57) 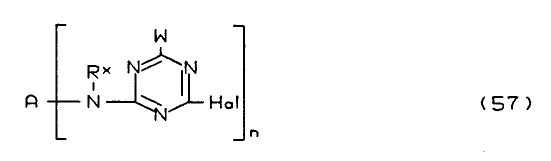
in welcher A, R^{x}, W und n die obengenannten Bedeutungen haben und Hal für ein Halogenatom, wie insbesondere ein Chlor- oder Fluoratom, steht, mit einer Aminoverbindung der allgemeinen Formel (58) 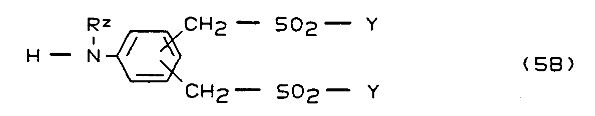
in welcher R^{z} und Y die obengenannten Bedeutungen haben, in stöchiometrischer Menge miteinander umsetzt.

Die Ausgangsverbindung der allgemeinen Formel (57) läßt sich beispielsweise durch Umsetzung des entsprechenden Ausgangsfarbstoffes der allgemeinen Formel (59) 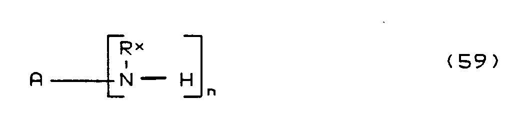
in welcher A, R^{x} und n die obengenannten Bedeutungen haben, mit einer s-Triazinverbindung der allgemeinen Formel (60) 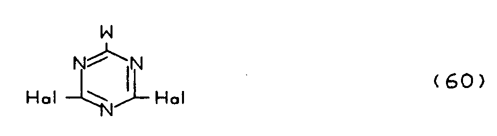
in welcher W und Hal die obengenannten Bedeutung haben, herstellen; eine andere Möglichkeit zur Synthese der Ausgangsverbindung der Formel (57) analog bekannter Verfahrensweisen ist beispielsweise die Umsetzung eines Farbstoffvorproduktes, das eine Gruppe der allgemeinen Formel (61) 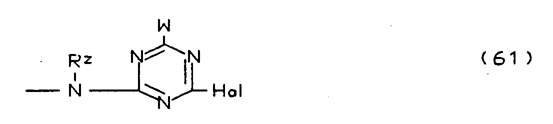
in welcher R^{z}, W und Hal die obengenannten Bedeutungen haben, enthält, mit einem weiteren, gegebenenfalls eine Gruppe der Formel (61) enthaltenden Vorprodukt umsetzt.

Unter bestimmten Reaktionsbedingungen kann bei einem Halogentriazinrest Hydrolyse auftreten; deswegen muß bei einem Zwischenprodukt bzw. Vorprodukt, das eine Schutzgruppe, wie beispielsweise eine Acetylaminogruppe enthält, die Abspaltung der Acetylgruppe durch Verseifung vorgenommen werden, bevor die Umsetzung mit dem Halogentriazin erfolgt.

In welcher Reihenfolge die verschiedenen oben erwähnten Umsetzungen zwischen den Halogentriazin- und Aminoausgangsverbindungen zweckmäßig zuerst ausgeführt werden, ist von Fall zu Fall verschieden und richtet sich vor allem nach der Löslichkeit der beteiligten Aminoverbindungen und der Basizität der Aminogruppen, die mit dem Halogentriazinrest umgesetzt werden sollen.

Die erfindungsgemäßen Farbstoffe können auch in der Weise hergestellt werden, daß man von einem Amin der allgemeinen Formel (58) der obengenannten Bedeutung, jedoch mit dem Unterschied, daß die Gruppen Y β-Hydroxyethyl-Gruppen sind, ausgeht und analog den oben angegebenen erfindungsgemäßen Verfahrensweisen einen Ausgangsfarbstoff herstellt, der der allgemeinen Formel (1) mit der angegebenen Bedeutung entspricht, jedoch mit dem Unterschied, daß die Gruppen Y β-Hydroxyethyl-Gruppen sind, und in diesem Ausgangsfarbstoff die β-Hydroxyethyl-Gruppen analog bekannten Verfahrensweisen in die β-Sulfatoethyl-Gruppen überführt. Die Sulfatierung erfolgt beispielsweise durch Umsetzung mit konzentrierter Schwefelsäure oder Schwefeltrioxid enthaltender Schwefelsäure bei einer Temperatur zwischen 0 und 20°C oder durch Umsetzung mit Chlorsulfonsäure oder Amidosulfonsäure, beispielsweise in einem polaren organischen Lösemittel, wie beispielsweise N-Methyl-pyrrolidon bei einer Temperatur zwischen 10 und 80°C. Vorzugsweise erfolgt die Sulfatierung durch Eintragen des β-hydroxyethylgruppen-haltigen Ausgangsfarbstoffes in Schwefelsäuremonohydrat bei einer Temperatur zwischen 5 und 15°C.

Die Einführung einer anderen Gruppe Y in einem fertigen erfindungsgemäßen Farbstoff der allgemeinen Formel (1) oder aber in dem entsprechenden β-hydroxyethylgruppen-haltigen Ausgangsfarbstoff erfolgt analog den für Reaktivgruppen der Vinylsulfonreihe üblichen Verfahrensweisen. Beispielsweise kann auch der Ausgangsfarbstoff, der eine (oder mehrere) β-Hydroxyethyl-Gruppen enthält, in üblicher und bekannter Verfahrensweise in Verbindungen der Formel (1) übergeführt werden, in welchen Y eine andere Bedeutung als die β-Hydroxyethyl-Gruppe besitzt, so beispielsweise in andere Esterderivate von mehrwertigen anorganischen Säuren oder von aliphatischen und aromatischen Carbon- oder Sulfonsäuren, so beispielsweise in Verbindungen, in welchen Y für die β-Chlorethyl-, β-Phosphatoethyl-, β-Thiosulfatoethyl-, β-Acetyloxyethyl- oder β-Toluylsulfonyloxyethyl-Gruppe steht. Hierfür geeignete Veresterungs- und Acylierungsmittel sind beispielsweise die entsprechenden anorganischen oder organischen Säuren oder deren Anhydride oder Halogenide oder Amide, wie beispielsweise Phosphorsäure, Polyphosphorsäure, Phosphoroxychlorid, Gemische aus Phosphorsäure und Phosphorpentoxid, Acetanhydrid, Toluolsulfochlorid und Thionylchlorid.

Diejenigen Verbindungen, in welchen Y für die Vinylgruppe steht, können aus deren analogen Esterderivaten mittels Alkali, so in wäßrigem Medium bei einem pH-Wert von 10 bis 12 und einer Temperatur zwischen 30 und 50°C während 10 bis 20 Minuten, hergestellt werden. Die Synthese von beispielsweise β-(Dialkylamino)-ethylsulfonyl- und β-Thiosulfatoethylsulfonyl-Derivaten erfolgt durch Umsetzung von deren Vinylsulfonyl-Verbindungen mit dem entsprechenden Dialkylamin oder mit einem Alkalisalz der Thioschwefelsäure, wie Natriumthiosulfat. Alle diese Verfahrensweisen der Überführung von einer Gruppe -SO₂-Y in eine andere sind dem Fachmann auf diesem faserreaktiven Gebiet geläufig und zahlreich in der Literatur beschrieben.

Grundsätzlich lassen sich die erfindungsgemäßen Farbstoffe entsprechend der allgemeinen Formel (1) sämtlicher Farbstoffklassen in an und für sich bekannter Weise oder analog bekannten Verfahrensweisen synthetisieren, indem man von Vorprodukten oder Zwischenprodukten für Farbstoffe, die bereits eine faserreaktive Gruppierung entsprechend der allgemeinen Formel (2) enthalten, ausgeht, oder indem man diese faserreaktive Gruppierung in hierfür geeignete Zwischenprodukte mit Farbstoffcharakter einführt.

Die Umsetzung der Ausgangsverbindung der allgemeinen Formel (57) mit dem Amin der allgemeinen Formel (58) erfolgt im wäßrigen oder wäßrig-organischem Medium in Suspension oder Lösung bei einer Temperatur zwischen -5°C und +40°C, vorzugsweise zwischen 0 und 25°C, und bei einem pH-Wert zwischen 2 und 8, vorzugsweise zwischen 4 und 7,5. Führt man die Umsetzung in einem wäßrig-organischem Medium durch, so ist das organische Medium beispielsweise Aceton, Dimethylformamid und N-Methyl-pyrrolidon. Vorteilhaft wird der bei der Kondensation freiwerdende Halogenwasserstoff laufend durch Zugabe wäßriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (57) setzt man die freien Amine oder deren Salze, bevorzugt in Form des Hydrochlorids, ein.

Die Kondensation des Halogentriazins mit einer Verbindung der Formel (57) kann vor oder nach der Kondensation des Halogentriazins mit einem Ausgangsfarbstoff der Formel (59) geschehen. Die Kondensation des Halogentriazins mit einer Verbindung der Formel (58) erfolgt ebenfalls vorzugsweise in wäßriger Lösung oder Suspension, bei niedriger Temperatur, wie bei -5°C bis +25°C, und im sauren bis schwach alkalischem Bereich, wie bei einem pH-Wert zwischen 3 und 8. Auch hier wird der bei der Kondensation freiwerdende Halogenwasserstoff vorteilhafterweise durch laufende Zugabe von wäßrigen Alkalihydroxiden, -carbonaten oder -bicarbonaten neutralisiert.

Halogen-s-triazin-Ausgangsverbindungen entsprechend der allgemeinen Formel (60) sind beispielsweise Cyanurfluorid (2,4,6-Trifluor-1,3,5-triazin), Cyanurchlorid (2,4,6-Trichlor-1,3,5-triazin) und 4-Sulfo-2,6-dichlor-1,3,5-triazin.

Die Aminoverbindungen der allgemeinen Formel (58) können hergestellt werden, indem man von einem 1,2-Di-(halogenomethyl)-benzol oder den entsprechenden 1,3- oder 1,4-Isomeren ausgeht, wobei das Halogen bevorzugt ein Chloratom ist, und das Di-(halogenomethyl)-benzol mit Mercaptoethanol im wäßrigen Medium bei einem pH-Wert zwischen 8 und 12, bevorzugt zwischen 10,5 und 11,5, und bei einer Temperatur zwischen 30 und 120°C, vorzugsweise zwischen 70 und 100°C, zu den entsprechenden Di-thioether-Verbindungen umsetzt. Anschließend wird die erhaltene Thioetherverbindung analog bekannten Verfahrensweisen zu der entsprechenden Sulfonylverbindung oxidiert. Die Oxidation kann nach verschiedenen Methoden erfolgen, beispielsweise in wäßrigem, saurem Medium, bevorzugt bei einem pH-Wert von unterhalb 5, mittels Wasserstoffperoxid in Gegenwart oder Abwesenheit von Wolfram- oder Vanadinverbindungen als Katalysatoren, ferner mittels Peressigsäure, Kaliumpermanganat oder Chromsäure, jeweils bei einer Temperatur zwischen 50 und 120°C, vorzugsweise zwischen 80 und 100°C, oder mittels einer Lösung von elementarem Chlor in wäßriger Salzsäure gemäß den Angaben der Deutschen Patentschrift Nr. 887 505; bei der Anwendung von Chlor/Salzsäure erhält man die entsprechenden β-Chlorethylsulfonyl-Verbindungen der allgemeinen Formel (58).

Die erhaltenen Di-(β-chlorethylsulfonyl-methyl)- bzw. Di-(β-hydroxyethylsulfonyl-methyl)-benzolverbindungen werden anschließend in üblicher Weise nitriert, beispielsweise in einem Gemisch aus Salpetersäure und konzentrierter Schwefelsäure bei einer Temperatur zwischen 30 und 100°C.

Hierbei gehen die Hydroxygruppen in die Sulfatogruppen über, die anschließend wiederum bei erhöhter Temperatur in wäßrigmineralsaurer Lösung hydrolysiert werden. Die erhaltenen Nitroverbindungen werden sodann nach üblichen Verfahrensweisen zu den Anilinverbindungen reduziert. Die Reduktion kann mittels Wasserstoff an einen metallischen Katalysator, wie einem Palladium-, Platin oder Raney-Nickel-Katalysator, unter Druck im Autoklaven, beispielsweise bei einem Wasserstoffdruck von 25 bis 35 bar und einer Temperatur zwischen 40 und 80°C, oder mittels der Reduktion nach Bechamp bei Verwendung von Eisenspänen erfolgen. Die β-Hydroxyethylsulfonyl-Gruppen können dann gemäß den obigen Angaben in faserreaktive Gruppen entsprechend der Formel -S0₂-Y mit Y einer der obigen Bedeutungen übergeführt werden.

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels, gründlich gespült.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemäßen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Licht echtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima (λₘₐₓ) im sichtbaren Bereich wurden anhand derer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

48,3 Teile 1-(4′-Sulfophenyl)-3-carboxy-4-(4˝-amino-2˝-sulfophenyl-azo)-5-pyrazolon werden in wäßriger Lösung (750 Teile Eiswasser) bei 0 bis 2°C und einem pH-Wert von 5 mit 14 Teilen Cyanurfluorid umgesetzt. Sobald keine freien Aminogruppen mehr nachweisbar sind, gibt man 49,7 Teile 2,5-Bis-(β-sulfatoethylsulfonyl-methyl)-anilin hinzu und führt die Umsetzung bei 0 bis 20°C und einem pH-Wert von 5 bis 7 durch. Der synthetisierte erfindungsgemäße Azofarbstoff wird mit Kaliumchlorid ausgefällt. Er besitzt, in Form der freien Säure geschrieben, die Formel 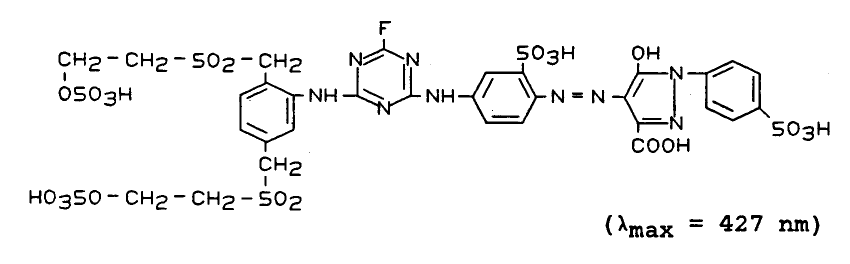
und färbt nach den in der Technik für faserreaktive Farbstoffe üblichen Applikations- und Fixierverfahren die in der Beschreibung genannten Materialien, insbesondere Cellulosefasermaterialien, wie Baumwolle, in echten goldgelben Tönen.

### Beispiel 2

Man diazotiert in üblicher Weise das Monokondensationsprodukt aus 18,8 Teilen 1,3-Phenylendiamin-4-sulfonsäure und 19 Teilen Cyanurchlorid und kuppelt diese Diazoniumverbindung mit 28,5 Teilen 1-(4′-Sulfophenyl)-3-carboxy-5-pyrazolon bei einem pH-Wert zwischen 5 und 7 und einer Temperatur zwischen 10 und 20°C. Danach wird eine neutrale wäßrige Lösung von 49,7 Teilen 2,5-Bis-(β-sulfatoethylsulfonyl-methyl)-anilin hinzugegeben, und die Temperatur wird auf 40°C erhöht und ein pH-Wert von 5,5 eingestellt. Nach Beendigung der Kondensationsreaktion wird der erfindungsgemäße Farbstoff mit Kaliumchlorid aus der neutralen Lösung ausgefällt und isoliert. Er besitzt, in Form der freien Säure geschrieben, die Formel 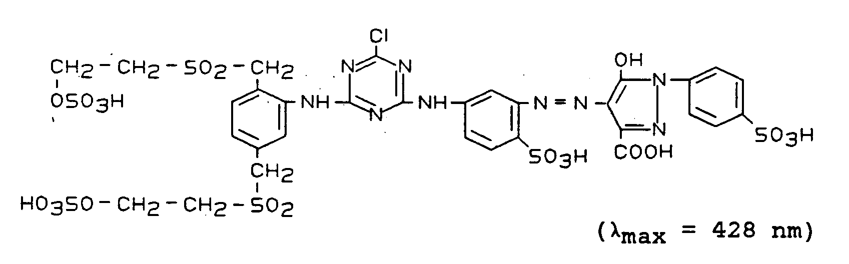
und zeigt sehr gute faserreaktive Farbstoffeigenschaften. Auf beispielsweise Baumwolle liefert er farbstarke gelbe Färbungen und Drucke mit guten Echtheitseigenschaften.

### Beispiel 3

Zur Herstellung einer erfindungsgemäßen Azoverbindung verfährt man gemäß der Verfahrensweise des Beispiels 2, setzt jedoch anstelle von 2,5-Bis-(β-sulfatoethylsulfonyl-methyl)-anilin die gleiche Menge an 3,4-Bis-(β-sulfatoethylsulfonyl-methyl)-anilin ein. Man erhält den erfindungsgemäßen Farbstoff entsprechend der Formel 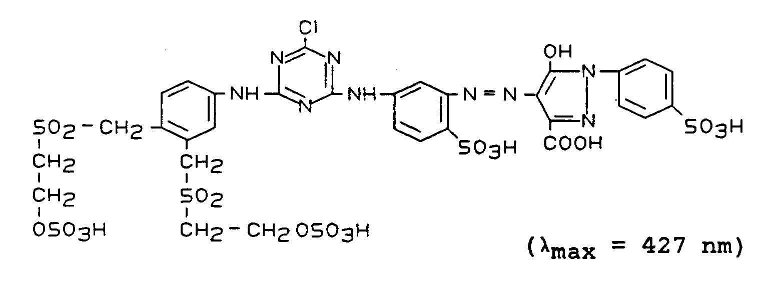
in Form des Alkalimetallsalzes (Kaliumsalzes). Auf den in der Beschreibung genannten Materialien, wie insbesondere Baumwolle, liefert er farbstarke gelbe Färbungen und Drucke mit guten Echtheitseigenschaften.

### Beispiel 4

Man stellt in üblicher Weise das Monokondensationsprodukt aus 19 Teilen Cyanurchlorid mit einer aus 30,3 Teilen 2-Amino-naphthalin-4,8-disulfonsäure als Diazokomponente und 15 Teilen 3-Acetylamino-anilin als Kupplungskomponente hergestellten Azoverbindung her und setzt dieses Produkt in wäßrigem Medium bei 20°C und einem pH-Wert von 6 bis 7 mit 49,7 Teilen 2,5-Bis-(β-sulfatoethylsulfonyl-methyl)-anilin um. Man isoliert den erfindungsgemäßen Azofarbstoff durch Ausfällen mit Kaliumchlorid und Filtration. Er besitzt, in Form der freien Säure geschrieben, die Formel 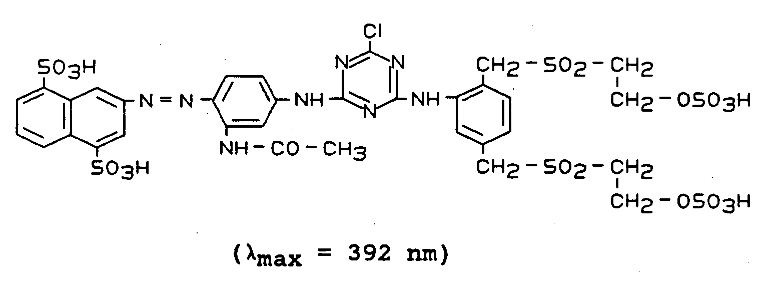
und färbt die in der Beschreibung genannten Materialien, wie insbesondere Cellulosefasermaterialien, in farbstarken rotstichig gelben Tönen mit guten Echtheitseigenschaften.

### Beispiel 5

Man setzt die in Beispiel 4 verwendete Ausgangs-Azoverbindung in wäßrigem Medium bei 0 bis 2°C und einem pH-Wert von 6 bis 7 mit 14 Teilen Cyanurfluorid um, gibt danach 49,7 Teile 2,5-Bis-(β-sulfatoethylsulfonyl-methyl)-anilin hinzu und führt die zweite Kondensationsreaktion bei einem pH-Wert von 6 bis 7 und einer Temperatur zwischen 0 und 20°C durch. Nach beendeter Umsetzung stellt man die wäßrige Syntheselösung bei einer Temperatur von 20°C mittels Natronlauge auf einen pH-Wert von 10. Nach etwa 15 Minuten ist der Übergang der β-Sulfatoethylsulfonyl-Gruppe in die Vinylsulfonform abgeschlossen. Die Syntheselösung wird auf einen pH-Wert von 6,5 gestellt und der erfindungsgemäße Azofarbstoff mittels Kaliumchlorid ausgefällt und isoliert.

Er besitzt, in Form der freien Säure geschrieben, die Formel 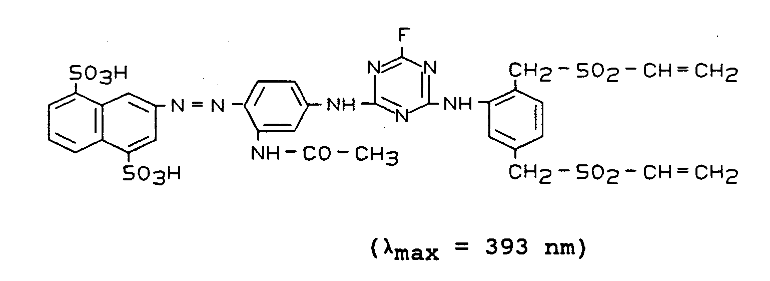
und färbt beispielsweise Baumwolle nach den in der Technik für faserreaktive Farbstoffe üblichen Anwendungsverfahren in farbstarken, echten, rotstichig gelben Tönen.

### Beispiel 6

50,3 Teile 2-Amino-5-hydroxy-6-(2′,5′-disulfophenyl-azo)-naphthalin-7-sulfonsäure werden in neutraler wäßriger Lösung (800 Teile Wasser) bei 0 bis 5°C und einem pH-Wert von 3,5 bis 4,5 mit 19 Teilen feindispergiertem Cyanurchlorid umgesetzt. Anschließend gibt man 49,7 Teile 2,5-Bis-(β-sulfatoethylsulfonyl-methyl)-anilin hinzu, erwärmt den Ansatz auf 40°C und stellt einen pH-Wert von 5,5 ein. Man führt die zweite Kondensationsreaktion unter diesen Bedingungen zu Ende und isoliert den erfindungsgemäßen Azofarbstoff nach einer üblichen Klärung der Syntheselösung beispielsweise mittels Sprühtrocknung. Er besitzt, in Form der freien Säure geschrieben, die Formel 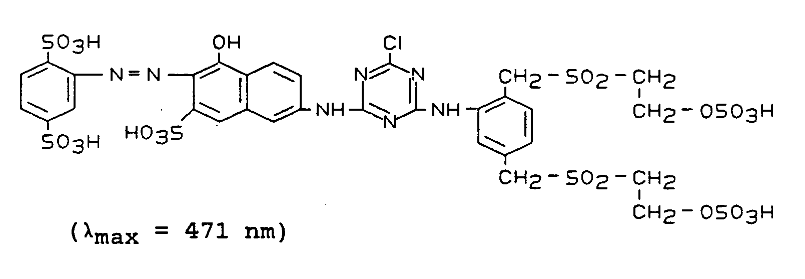
und färbt beispielsweise Baumwolle in farbstarken, echten, orangen Tönen.

### Beispiel 7

Zur Herstellung eines erfindungsgemäßen Azofarbstoffes verfährt man gemäß den Angaben des Beispiels 6, setzt jedoch als Ausgangs-Azoverbindung 43,1 Teile 2-Amino-5-hydroxy-6-(2′,5′-dicarboxyphenyl-azo)-naphthalin-7-sulfonsäure ein. Der erfindungsgemäße Azofarbstoff der Formel (in Form der freien Säure geschrieben) 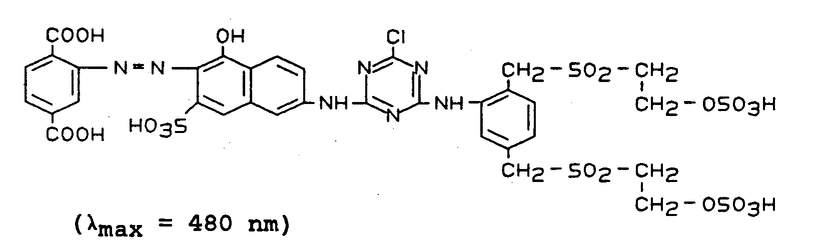
zeigt sehr gute faserreaktive Farbstoffeigenschaften und liefert auf den in der Beschreibung genannten Materialien, wie beispielsweise Baumwolle, farbstarke Färbungen und Drucke in echten orangen Tönen.

### Beispiel 8

Zur Herstellung des erfindungsgemäßen Farbstoffes von Beispiel 7 in seiner Vinylsulfonform geht man von der wäßrigen Syntheselösung des Farbstoffes von Beispiel 7 aus und stellt sie bei 20 °C mittels Natronlauge auf einen pH-Wert von 10. Nach einer Reaktionszeit von 15 Minuten wird der Ansatz auf einen pH-Wert von 6,5 gestellt, die Farbstofflösung geklärt und der gebildete erfindungsgemäße Farbstoff der Formel (in Form der freien Säure geschrieben) 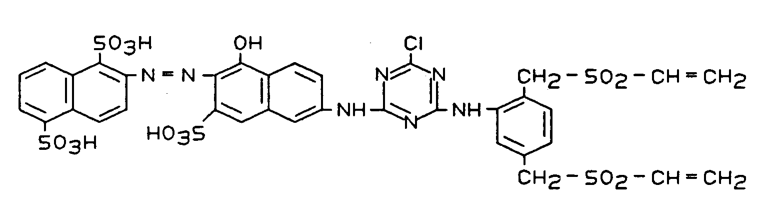
mittels Kaliumchlorid als Alkalimetallsalz (Kaliumsalz) ausgefällt und isoliert. Er besitzt ebenfalls sehr gute faserreaktive Farbstoffeigenschaften und färbt beispielsweise Baumwolle in farbstarken, echten, orangen Tönen.

### Beispiel 9

Zur Herstellung eines erfindungsgemäßen Azofarbstoffes verfährt man gemäß den Angaben des Beispiels 6, setzt jedoch 43,1 Teile 2-Amino-5-hydroxy-6-(2′-sulfo-4′-methoxy-phenyl-azo)-naphthalin-7-sulfonsäure als Ausgangs-Azoverbindung ein. Der synthetisierte erfindungsgemäße Farbstoff besitzt, in Form der freien Säure geschrieben, die Formel 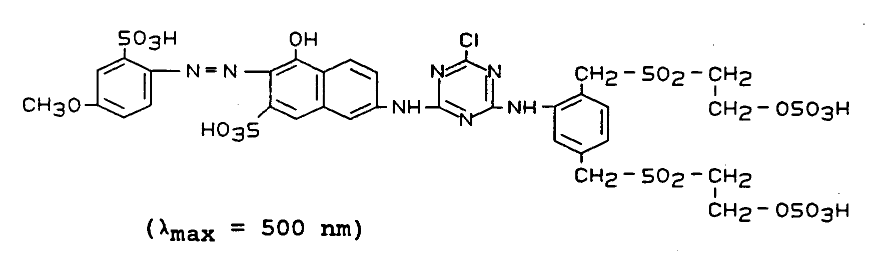
er färbt beispielsweise Baumwolle nach den in der Technik für faserreaktive Farbstoffe üblichen Applikations- und Fixierverfahren in leuchtenden, echten Scharlachtönen.

### Beispiel 10

Bei 0 bis 5°C und einem pH-Wert von 6,5 werden 47 Teile der bekannten Aminodisazoverbindung der Formel 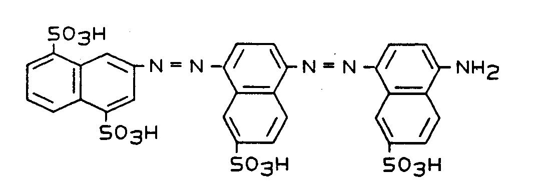
in 300 Teilen Wasser mit 10 Teilen Cyanurchlorid umgesetzt. Das entstandene Produkt wird anschließend mit 26 Teilen 2,5-Bis-(β-sulfatoethylsulfonyl-methyl)-anilin bei einer Temperatur von 20 bis 25°C und einem pH-Wert von 6,5 umgesetzt. Der erfindungsgemäße Farbstoff wird nach einer Klärfiltration durch Sprühtrocknung isoliert. Man erhält das elektrolythaltige Farbstoffpulver des Alkalimetallsalzes der Disazoverbindung 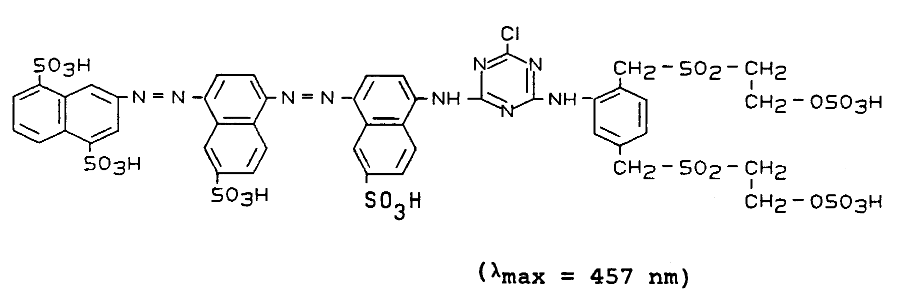
die Baumwolle in echten rötlich-braunen Tönen färbt.

### Beispiel 11

67,2 Teile der bekannten Aminodisazoverbindung 4-[4′-(2˝-Sulfo-4˝-methoxy-phenyl)-azo-6′-sulfo-naphth-1′-yl]-azo-1-amino-naphthalin-6-sulfonsäure werden in wäßriger Lösung (800 Teilen Wasser) bei einem pH-Wert von 6,5 und einer Temperatur von 0 bis 5°C mit 15 Teilen Cyanurchlorid umgesetzt. Anschließend gibt man 49,7 Teile 2,5-Bis-(β-sulfatoethylsulfonyl-methyl)-anilin hinzu und führt die zweite Kondensationsreaktion bei 20 bis 35°C und einem pH-Wert von 5,5 bis 6,5 durch. Die Syntheselösung wird anschließend geklärt und der erhaltene erfindungsgemäße Farbstoff der Formel (in Form der freien Säure geschrieben) 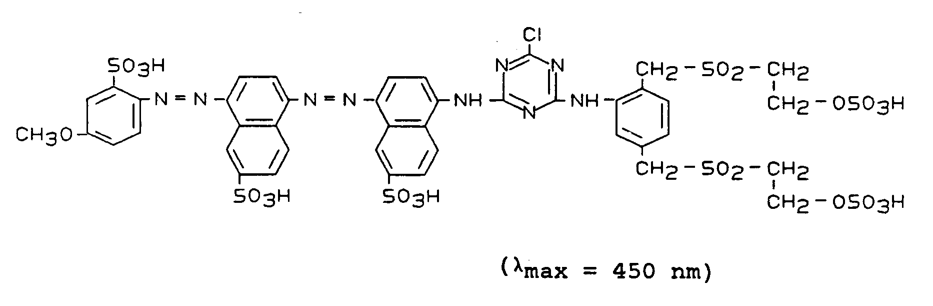
durch Eindampfen unter reduziertem Druck oder durch Sprühtrocknung als Alkalimetallsalz isoliert. Sie besitzt sehr gute faserreaktive Farbstoffeigenschaften und färbt beispielsweise Baumwolle in echten rotstichig braunen Tönen.

### Beispiel 12

19 Teile Cyanurchlorid werden in bekannter Weise mit 32 Teilen 1-Amino-8-hydroxy-naphthalin-3,6-disulfonsäure in wäßrigem Medium umgesetzt. Anschließend gibt man zu diesem Reaktionsansatz die saure Lösung des Diazoniumsalzes von 17,3 Teilen 1-Aminobenzol-2-sulfonsäure und führt die Kupplungsreaktion bei einem pH-Wert von 4 bis 4,5 durch. Anschließend gibt man 49,7 Teile 2,5-Bis-(β-sulfatoethylsulfonyl-methyl)-anilin hinzu und führt die Kondensationsreaktion bei 35°C und einem pH-Wert von 5,5 bis 6,5 durch, klärt anschließend die Syntheselösung und isoliert den erfindungsgemäßen Farbstoff der Formel (in Form der freien Säure geschrieben) 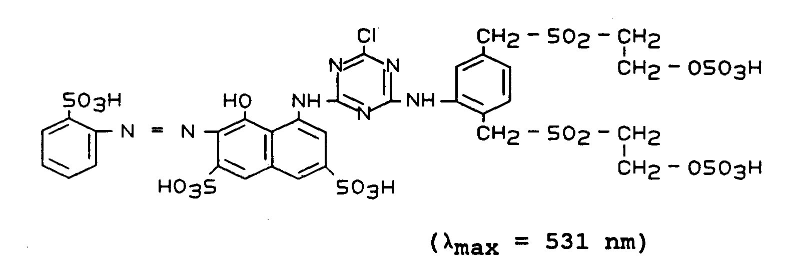
durch Sprühtrocknung. Er besitzt sehr gute faserreaktive Farbstoffeigenschaften und färbt die in der Beschreibung genannten Materialien, wie beispielsweise Baumwolle, nach den für faserreaktive Farbstoffe üblichen Anwendungsverfahren in farbstarken, echten, roten Tönen.

### Beispiel 13

Zur Herstellung eines erfindungsgemäßen Azofarbstoffes verfährt man gemäß den Angaben des Beispieles 12, setzt jedoch als Diazokomponente das Diazoniumsalz von 18,1 Teilen 2,5-Dicarboxy-anilin ein und führt die Kupplungsreaktion bei einem pH-Wert von 6,5 bis 7 durch.
Man erhält den erfindungsgemäßen Azofarbstoff der Formel (in Form der freien Säure geschrieben) 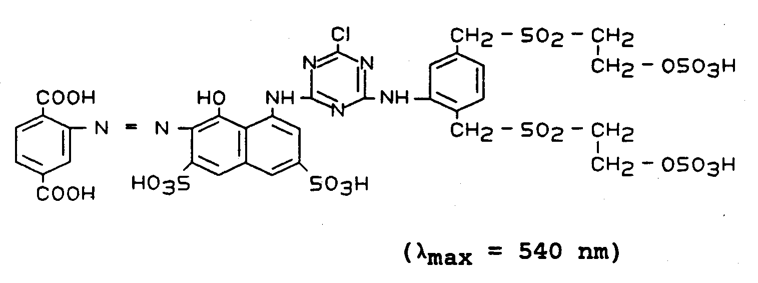
als Alkalimetallsalz. Er zeigt gute Farbstoffeigenschaften und liefert beispielsweise auf Baumwolle farbstarke, echte brillante rote Färbungen und Drucke.

### Beispiel 14

Zur Herstellung eines erfindungsgemäßen Azofarbstoffes verfährt man gemäß den Angaben des Beispieles 12, setzt jedoch als Diazokomponente das Diazoniumsalz von 28,1 Teilen 4-(β-Sulfatoethylsulfonyl)-anilin ein. Man erhält das Alkalimetallsalz der Verbindung der Formel 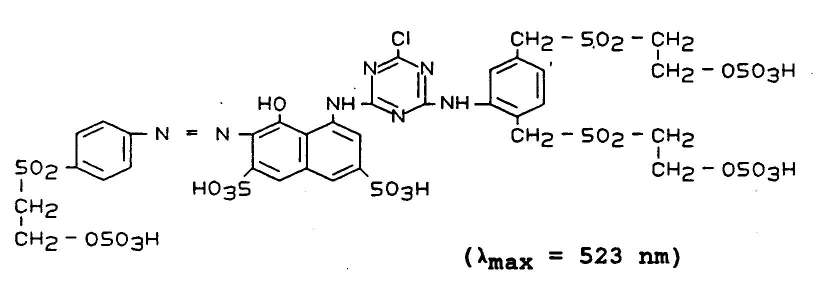
Dieser erfindungsgemäße Farbstoff zeigt sehr gute faserreaktive Farbstoffeigenschaften und färbt beispielsweise Baumwolle in kräftigen, echten, roten Tönen.

### Beispiel 15

Zur Herstellung eines erfindungsgemäßen Azofarbstoffes verfährt man analog den Angaben des Beispieles 13, setzt jedoch anstelle des Diazoniumsalzes des 2,5-Dicarboxy-anilins die Lösung des Diazoniumsalzes von 30,3 Teilen 2-Amino-naphthalin-1,5-disulfonsäure ein. Man erhält den erfindungsgemäßen Farbstoff der Formel (in Form der freien Säure geschrieben) 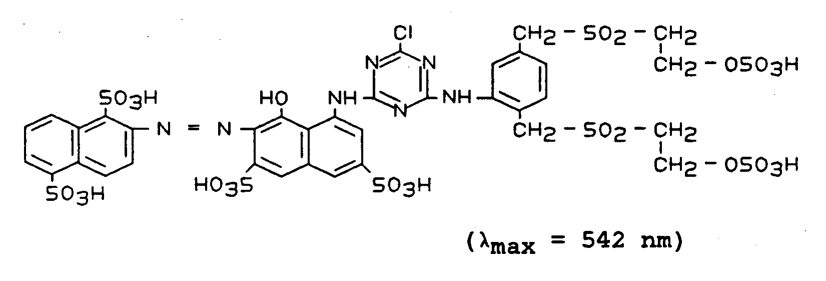
in Form seines Alkalimetallsalzes. Er färbt die in der Beschreibung angegebenen Materialien, wie insbesondere Baumwolle, nach den für faserreaktive Farbstoffe üblichen Applikations- und Fixierverfahren in farbstarken, roten Tönen mit guten Echtheiten.

### Beispiel 16

Die auf üblichem Wege hergestellte Aminoazo-Ausgangsverbindung 7-(2′-Sulfo-5′-amino-phenyl)-azo-1-benzoylamino-8-naphthol-3,6-disulfonsäure wird gemäß den Angaben des Beispieles 1 mit der äquivalenten Menge Cyanurfluorid umgesetzt. Die so erhaltene Difluor-triazinylamino-Azoverbindung setzt man weiter gemäß der Angabe des Beispieles 1 mit der äquivalenten Menge an 2,5-Bis-(β-sulfatoethylsulfonyl)-methyl)-anilin um und isoliert den erhaltenen erfindungsgemäßen Farbstoff aus der Syntheselösung nach einer Klärfiltration durch Sprühtrocknung. Er besitzt, in Form der freien Säure geschrieben, die Formel 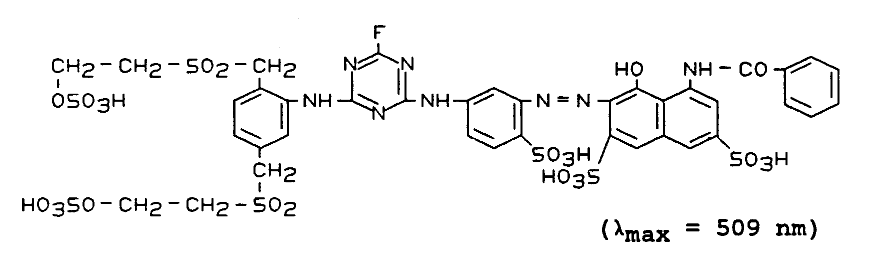
und zeigt sehr gute faserreaktive Farbstoffeigenschaften. Bei Anwendung der für faserreaktive Farbstoffe üblichen Applikations- und Fixierverfahren liefert er auf den in der Beschreibung genannten Materialien, wie insbesondere Baumwolle, brillante rote Färbungen und Drucke mit guten Echtheitseigenschaften.

### Beispiel 17

64,8 Teile der bekannten Kupferkomplex-Azoverbindung der Formel 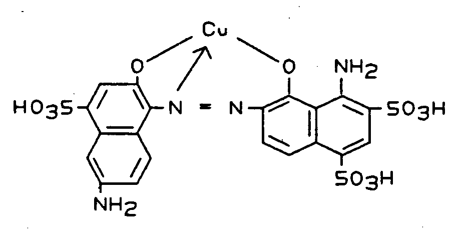
werden in wäßriger Lösung (700 Teilen Wasser) bei einer Temperatur von 0 bis 5°C und einem pH-Wert von 2 bis 3 mit 19 Teilen Cyanurchlorid umgesetzt. Anschließend gibt man 49,7 Teile 3,4-Bis-(β-sulfatoethylsulfonyl-methyl)-anilin hinzu und führt die zweite Kondensationsreaktion bei einem pH-Wert zwischen 6 und 7 und einer Temperatur von 20°C durch. Anschließend wird der erfindungsgemäße Farbstoff der Formel (in Form der freien Säure geschrieben) 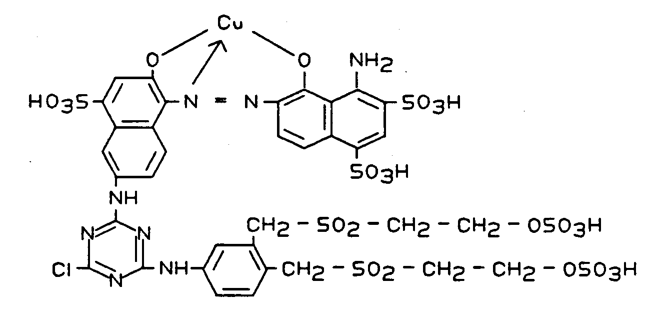
aus der Syntheselösung, gegebenenfalls nach einer Klärfiltration, durch Sprühtrocknung als Alkalimetallsalz isoliert. Er zeigt sehr gute faserreaktive Farbstoffeigenschaften und färbt nach den in der Technik für faserreaktive Farbstoffen üblichen Anwendungsverfahren beispielsweise Baumwolle in farbstarken, blauen Tönen mit guten Echtheitseigenschaften.

### Beispiel 18

26 Teile der bekannten Ausgangsverbindung der Formel 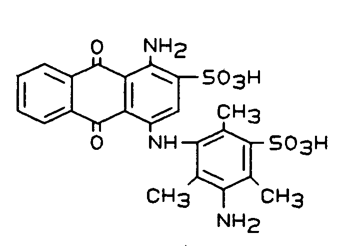
werden in wäßriger Lösung bei 0 bis 5°C und einem pH-Wert von 2 bis 3 mit 10 Teilen Cyanurchlorid umgesetzt. Anschließend gibt man 26 Teile 2,5-Bis-(β-sulfatoethylsulfonyl-methyl)-anilin hinzu und führt die zweite Kondensationsreaktion bei einem pH-Wert von 6 bis 7 und einer Temperatur von 20 bis 25°C durch. Der synthetisierte erfindungsgemäße Anthrachinonfarbstoff der Formel (in Form der freien Säure geschrieben) 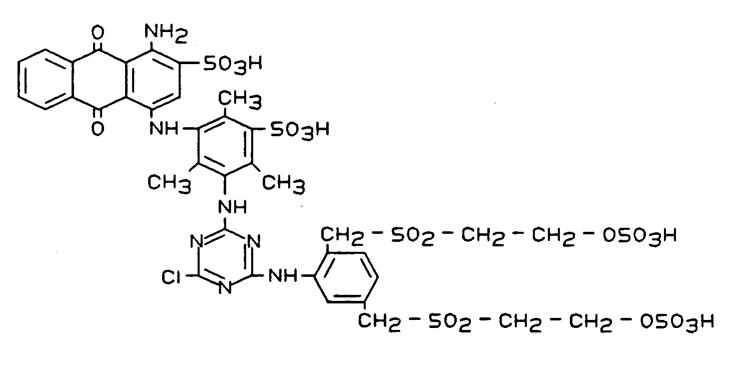
wird aus der Syntheselösung mit Kaliumchlorid ausgefällt und isoliert. Der erfindungsgemäße Farbstoff zeigt sehr gute faserreaktive Farbstoffeigenscharften und liefert beispielsweise auf Baumwolle nach den für faserreaktive Farbstoffe üblichen Applikations- und Fixiermethoden, insbesondere nach den bekannten Druckverfahren, farbstarke Färbungen und Drucke in leuchtend blauen Tönen von sehr guten Lichtechtheiten.

### Beispiel 19

Zu 17,3 Teilen einer salzsauer diazotierten Anilin-4-sulfonsäure gibt man bei 5°C eine Suspension von 31,6 Teilen 1-Amino-8-naphthol-3,6-disulfonsäure in 300 Teilen Wasser. Man kuppelt während 8 Stunden bei einem pH-Wert zwischen 1 und 2 und fügt anschließend eine Suspension von 38,6 Teilen salzsauer diazotiertem primärem Kondensationsprodukt aus 1,3-Phenylendiamin-4-sulfonsäure und Cyanurchlorid. Mit 17,8 Teilen Natriumcarbonat wird sodann schwach sauer ausgekuppelt. Anschließend gibt man eine Lösung von 49,7 Teilen 2,5-Bis-(β-sulfatoethylsulfonyl-methyl)-anilin hinzu und führt die zweite Kondensationsreaktion bei einem pH-Wert von 6,5 und einer Temperatur von 20 bis 30°C durch. Der Farbstoff wird aus der Syntheselösung, gegebenenfalls nach vorheriger Klärfiltration, durch Sprühtrocknung isoliert. Es wird ein schwarzes, elektrolythaltiges Pulver des Alkalimetallsalzes der Verbindung der Formel 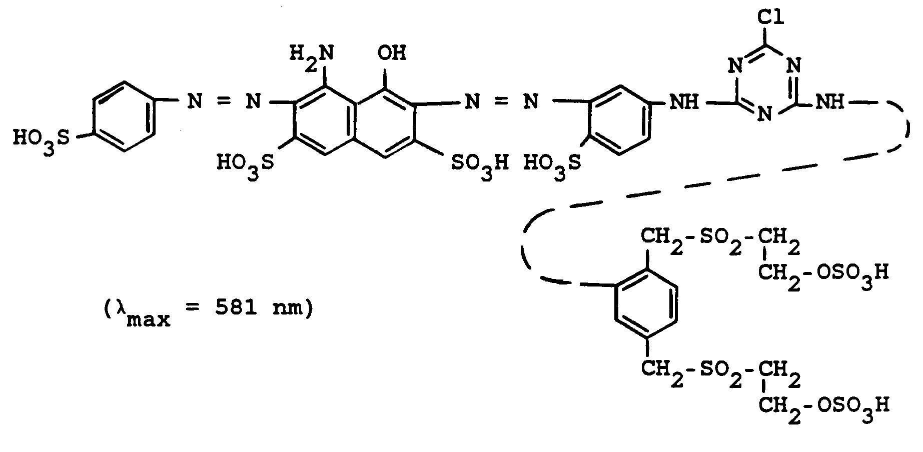
erhalten, das nach den üblichen Färbeverfahren für faserreaktive Farbstoffe Baumwolle in echten marineblauen Tönen färbt.

### Beispiel 20

Eine wäßrige Lösung der durch saure Kupplung aus 28,1 Teilen diazotiertem 4-(β-Sulfatoethylsulfonyl)-anilin und 31,6 Teilen 1-Amino-3,6-disulfo-8-naphthol hergestellten Azoverbindung wird mit einer Suspension von 38,6 Teilen des salzsauer diazotierten primären Kondensationsproduktes aus Cyanurchlorid und 1,3-Phenylendiamin-4-sulfonsäure bei einem pH-Wert von etwa 5 gekuppelt. Anschließend gibt man eine Lösung von 49,7 Teilen 2,5-Bis-(β-sulfatoethylsulfonyl-methyl)-anilin hinzu und führt die Kondensationsreaktion bei einem pH-Wert von 6,5 und einer Temperatur von 20 bis 30°C durch. Der synthetisierte erfindungsgemäße Disazofarbstoff besitzt, in Form der freien Säure geschrieben, die Formel 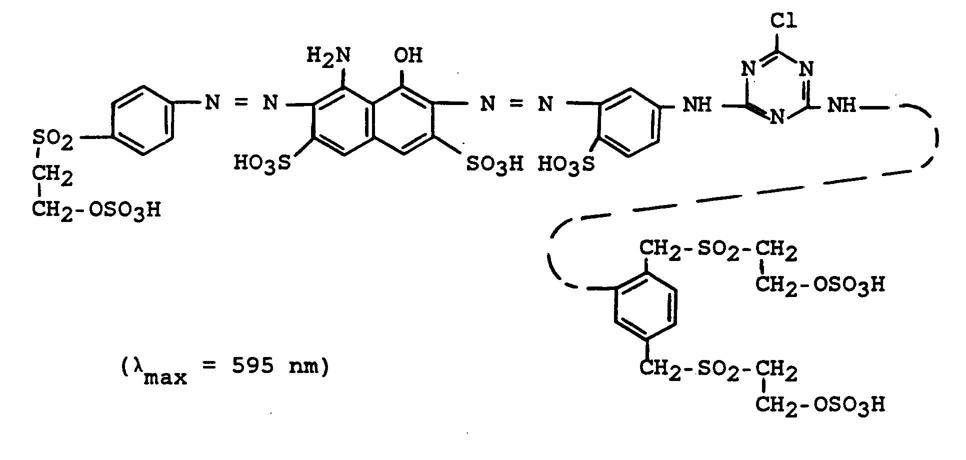
und zeigt sehr gute faserreaktive Farbstoffeigenschaften, er färbt beipielsweise Baumwolle in marineblauen Tönen und guten Echtheitseigenschaften.

### Beispiel 21

15,8 Teile der Triphendioxazin-Verbindung der Formel 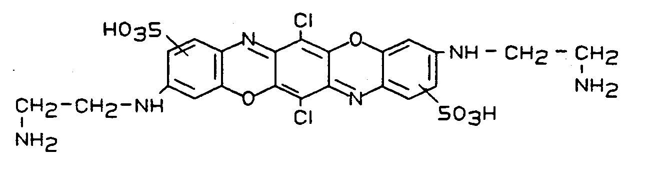
werden in 1500 Teilen Wasser bei 45°C mittels Natronlauge bei einem pH-Wert von 9 gelöst. Man kühlt darauf die Lösung auf 0 bis 5°C ab, stellt mittels Salzsäure einen pH-Wert von 7 ein und gibt eine feine Suspension von 9,7 Teilen Cyanurchlorid in 100 Teilen Eiswasser hinzu. Man rührt den Reaktionsansatz bei 0 bis 5°C und einem pH-Wert zwischen 6,5 und 7 bis zur vollständigen Umsetzung weiter und gibt anschließend innerhalb von 10 Minuten eine neutrale Lösung von 26 Teilen 2,5-Bis-(β-sulfatoethylsulfonyl-methyl)-anilin in 200 Teilen Wasser langsam hinzu. Man erhöht die Temperatur auf 20 bis 30°C und rührt bei einem pH-Wert von 6,5 zur vollständigen Umsetzung nach.
Der erfindungsgemäße Triphendioxazin-Farbstoff der Formel (in Form der freien Säure geschrieben) 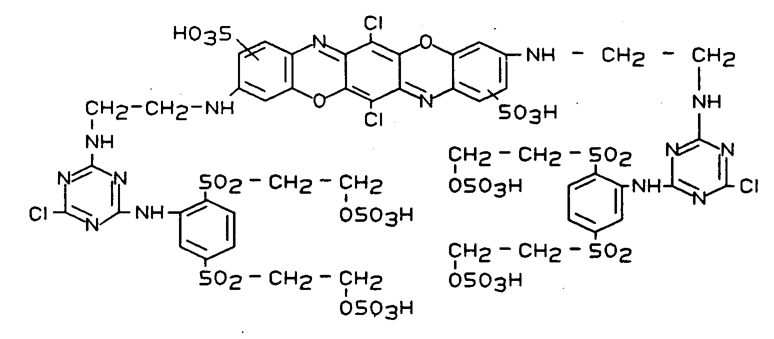
wird aus der Syntheselösung durch Sprühtrocknung isoliert. Er besitzt sehr gute faserreaktive Farbstoffeigenschaften und färbt beispielsweise Baumwolle in rotstichig blauen Tönen mit guten Echtheitseigenschaften.

### Beispiel 22

19,7 Teile einer auf üblichem Wege durch Umsetzung von Kupferphthalocyanin-tetrasulfochlorid mit wäßrigem Ammoniak und 1,3-Phenylendiamin in etwa 1-molarer Menge erhältlichen Kupferphthalocyanin-Verbindung mit der ungefähren Formel 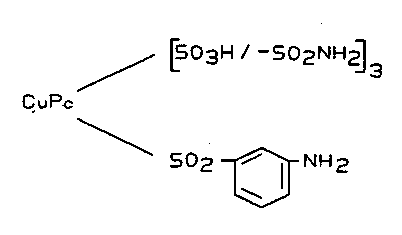
werden in einer Mischung aus 125 Teilen Eis und 125 Teilen Wasser suspendiert. Mittels Natronlauge wird ein pH-Wert von 7 eingestellt. Man gibt bei 0 bis 2°C 4 Teile Cyanurfluorid hinzu und hält den pH mittels Natriumcarbonat auf einem Wert zwischen 5,5 und 6. Nach vollständiger Umsetzung gibt man langsam eine neutrale Lösung von 15 Teilen 2,5-Bis-(β-sulfatoethylsulfonyl-methyl)-anilin in 100 Teilen Wasser hinzu, erwärmt den Reaktionsansatz auf 30°C und führt die Kondensationsreaktion bei einem pH-Wert von 6,5 durch. Der synthetisierte Kupferphthalocyanin-Farbstoff, der, in Form der freien Säure geschrieben, der Formel 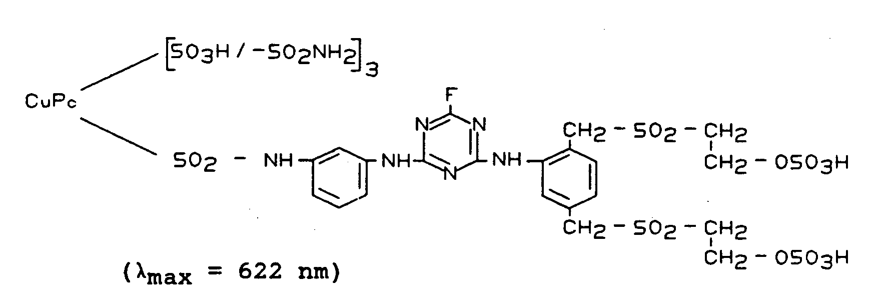
entspricht, kann durch Sprühtrocknung aus der Syntheselösung isoliert werden. Er zeigt sehr gute faserreaktive Farbstoffeigenschaften und färbt beispielsweise Baumwolle in türkis blauen Tönen von guten Echtheiten.

### Beispiel 23

58 Teile der Kupferphthalocyaninverbindung der ungefähren Formel 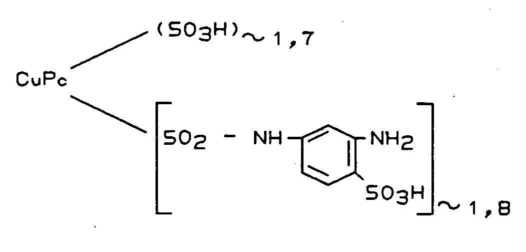
werden in einer Mischung aus 300 Teilen Wasser und 125 Teilen Eis homogen verrührt; die Mischung wird mit wäßriger Natronlauge auf einen pH-Wert von 7 eingestellt. Man gibt eine feine Suspension von 16,6 Teilen Cyanurchlorid in 170 Teilen Eiswasser hinzu und hält die Temperatur bei 0 bis 5°C und den pH-Wert bei 5,3 bis 5,5. Sobald die Umsetzung vollständig ist, gibt man langsam eine neutrale Lösung von 43,4 Teilen 2,5-Bis-(β-sulfatoethylsulfonyl-methyl)-anilin in 250 Teilen Wasser hinzu. Man erwärmt den Ansatz auf 20 bis 30°C und führt die Kondensationsreaktion während 4 Stunden bei einem pH-Wert von 6,5 durch.

Der gebildete erfindungsgemäße Kupferphthalocyaninfarbstoff der Formel (in Form der freien Säure geschrieben) 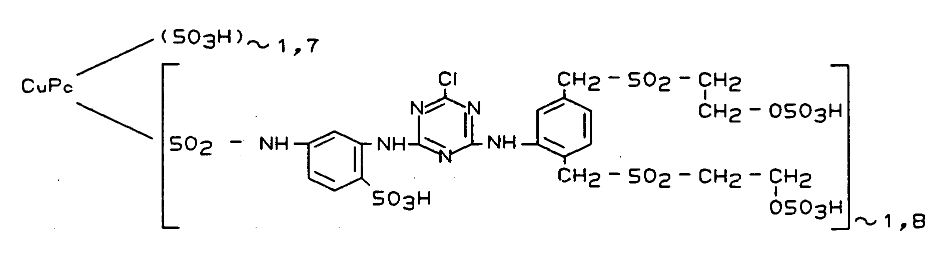
wird in Form seines Natriumsalzes durch Sprühtrocknung aus der Lösung isoliert. Er besitzt sehr gute faserreaktive Farbstoffeigenschaften und färbt beispielsweise Baumwolle in echten, türkisblauen Tönen.

### Beispiel 24

Eine neutrale Lösung von 58,4 Teilen der bekannten Ausgangs-Kupferformazanverbindung der Formel 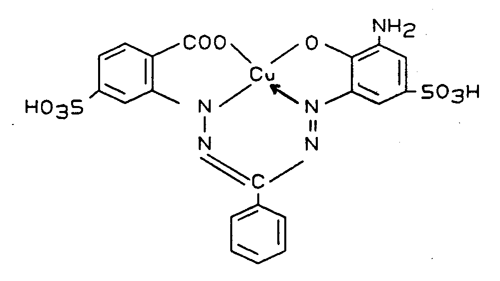
wird bei einer Temperatur zwischen 0 und 5°C mit 19 Teilen fein dispergiertem Cyanurchlorid bei einem pH-Wert von 3,5 bis 4,5 umgesetzt. Sobald die primäre Kondensationsreaktion beendet ist, gibt man eine neutrale Lösung von 49,7 Teilen 2,5-Bis-(β-sulfatoethylsulfonyl-methyl)-anilin in 200 Teilen Wasser hinzu und führt die zweite Kondensationsreaktion bei einer Temperatur von 30 bis 40°C und einem pH-Wert von 6,5 durch.

Der gebildete erfindungsgemäße Kupferformazanfarbstoff der Formel (in Form der freien Säure geschrieben) 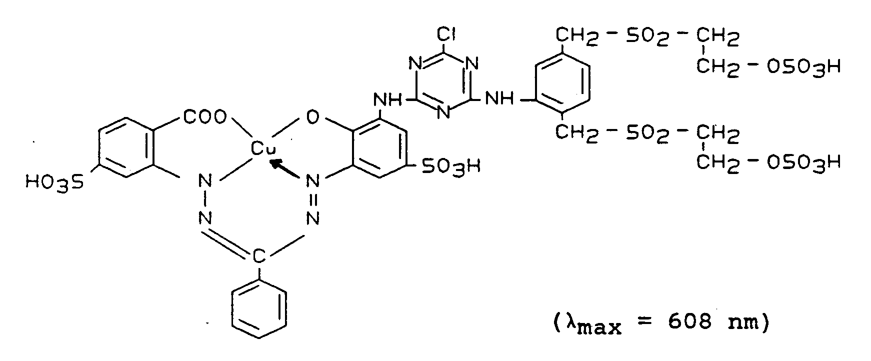
wird als Alkalimetallsalz, wie insbesondere Kaliumsalz, durch Aussalzen mittels Kaliumchlorid aus der Syntheselösung isoliert. Er besitzt sehr gute faserreaktive Farbstoffeigenschaften und färbt beispielsweise Baumwolle in echten blauen Tönen.

### Beispiele 25 bis 98

In den nachfolgenden Tabellenbeispielen sind weitere erfindungsgemäße faserreaktive Farbstoffe beschrieben. Sie besitzen ebenfalls sehr gute Farbstoffeigenschaften und liefern auf den in der Beschreibung genannten Materialien, wie insbesondere Cellulosefasermaterialien, nach den in der Technik üblichen Applikations- und Fixierverfahren für faserreaktive Farbstoffe farbstarke, echte Färbungen und Drucke mit der in dem jeweiligen Tabellenbeispiel angegebenen Nuance. Sie lassen sich erfindungsgemäß in der für den jeweiligen Farbstofftyp üblichen, dem Fachmann bekannten Verfahrensweise aus den aus der jeweiligen Farbstofformel ersichtlichen Komponenten, beispielsweise analog einem der obigen Ausführungsbeispiele, herstellen.

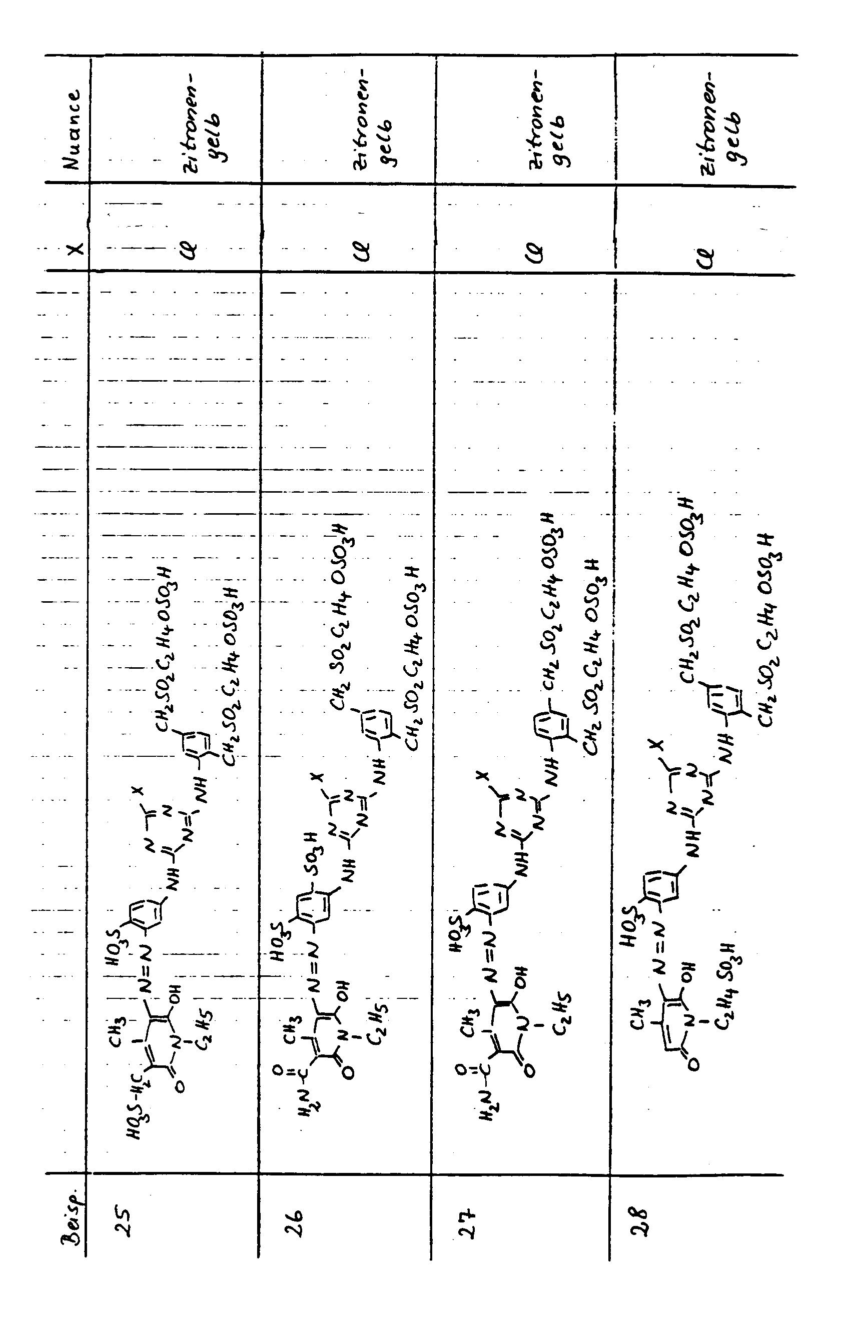

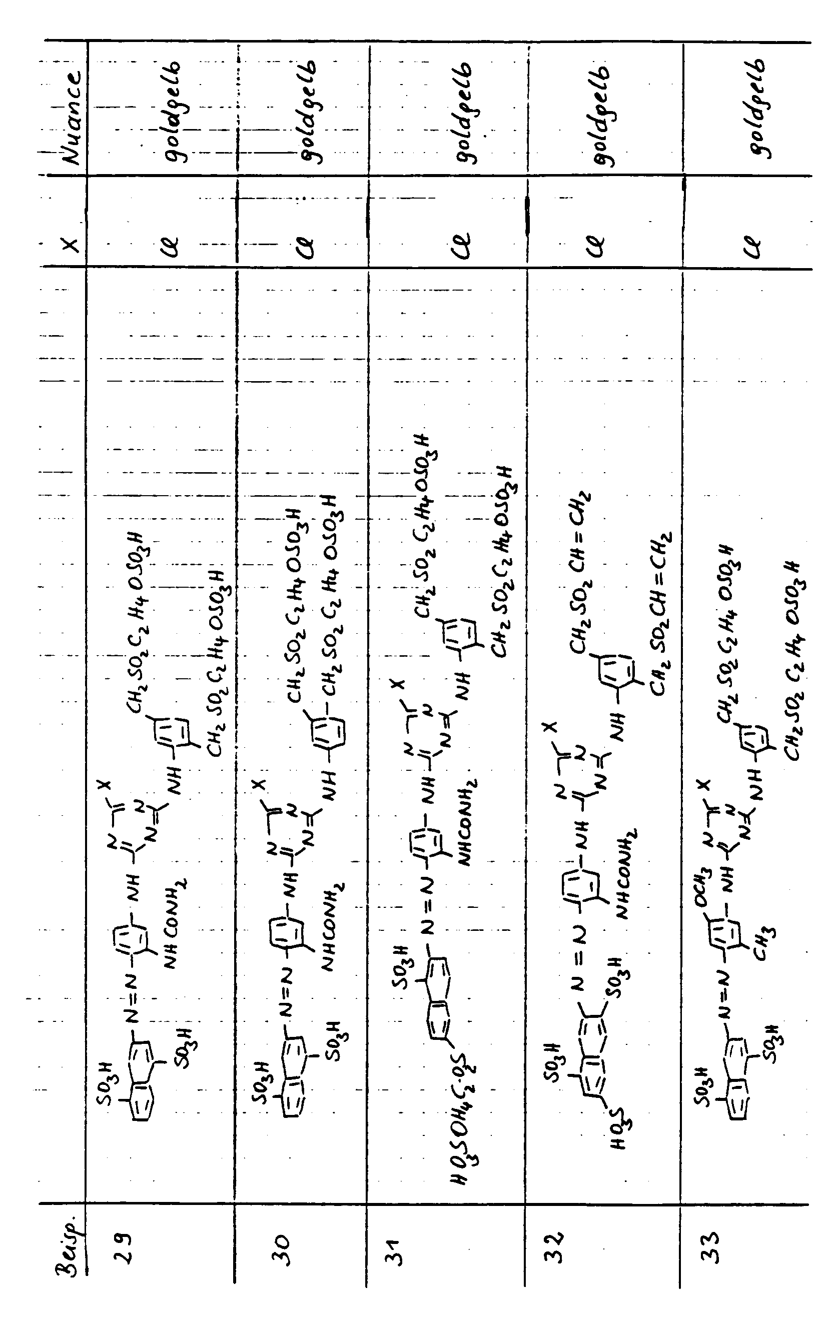

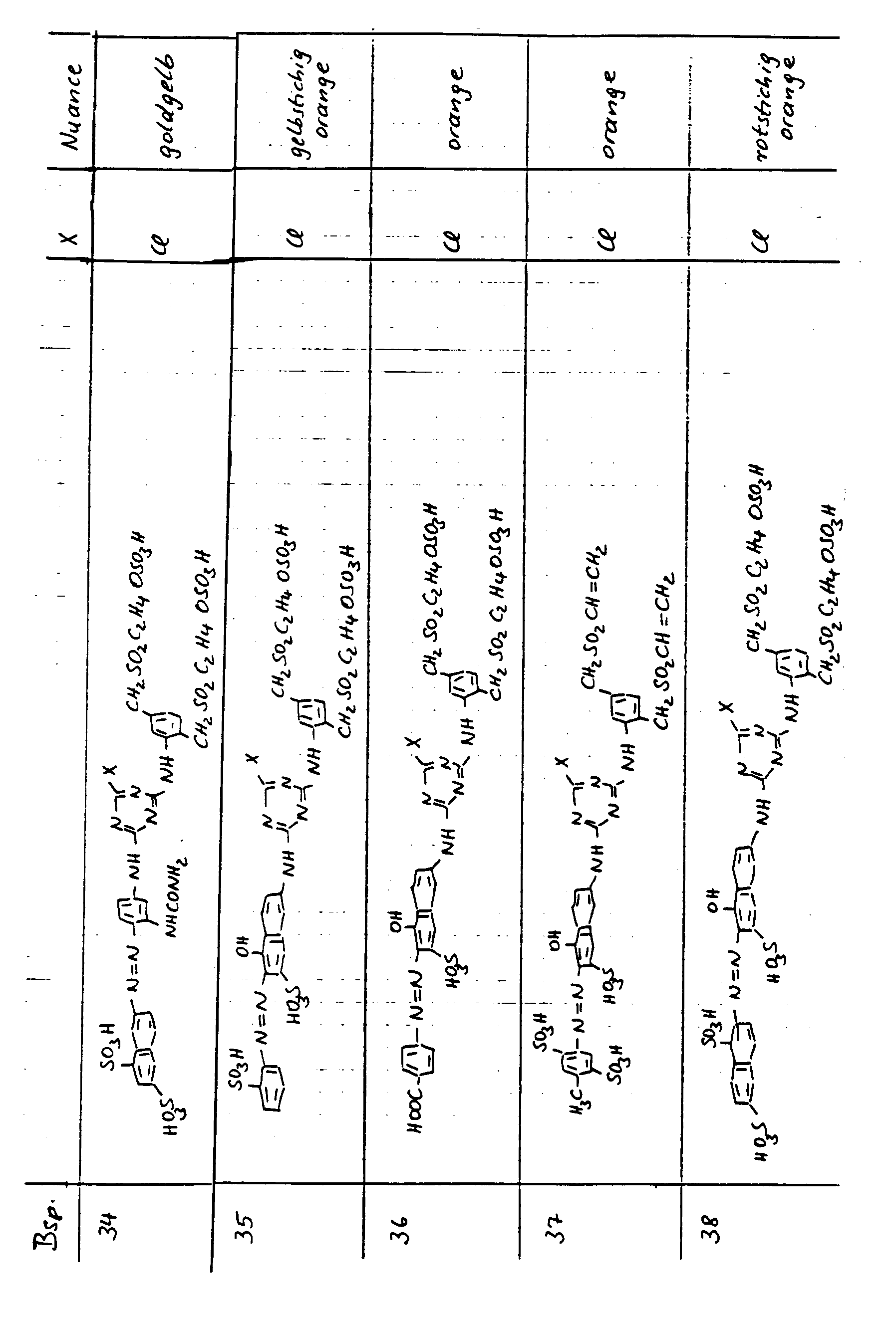

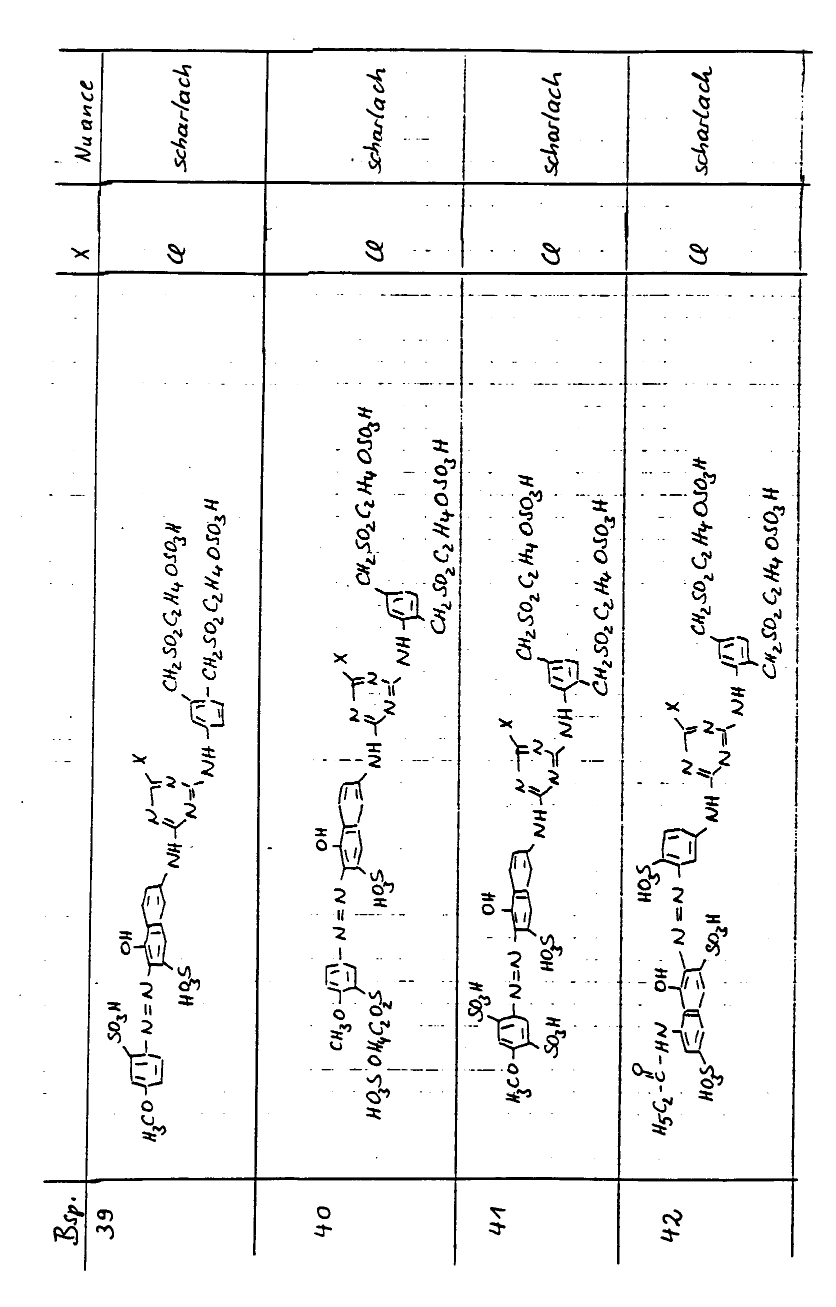

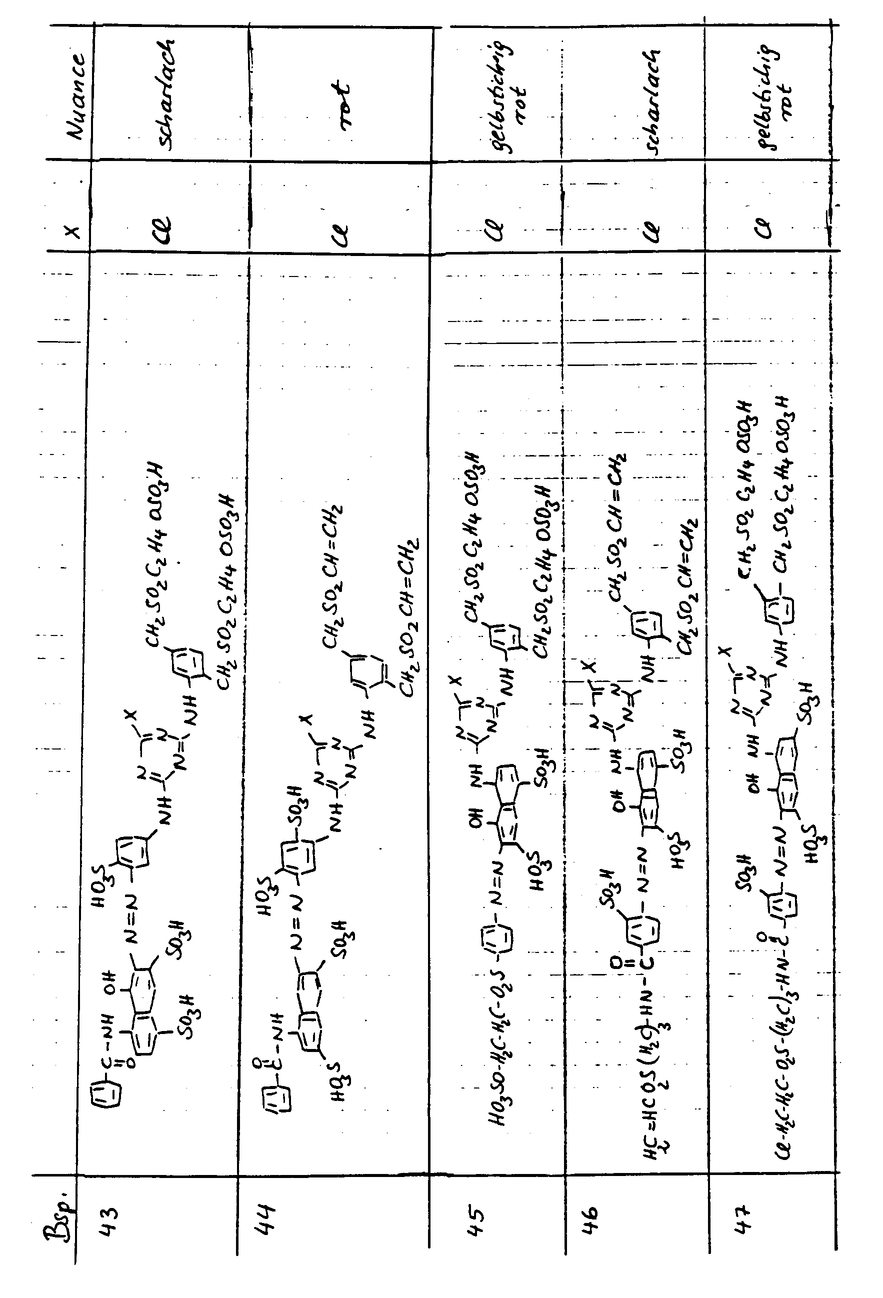

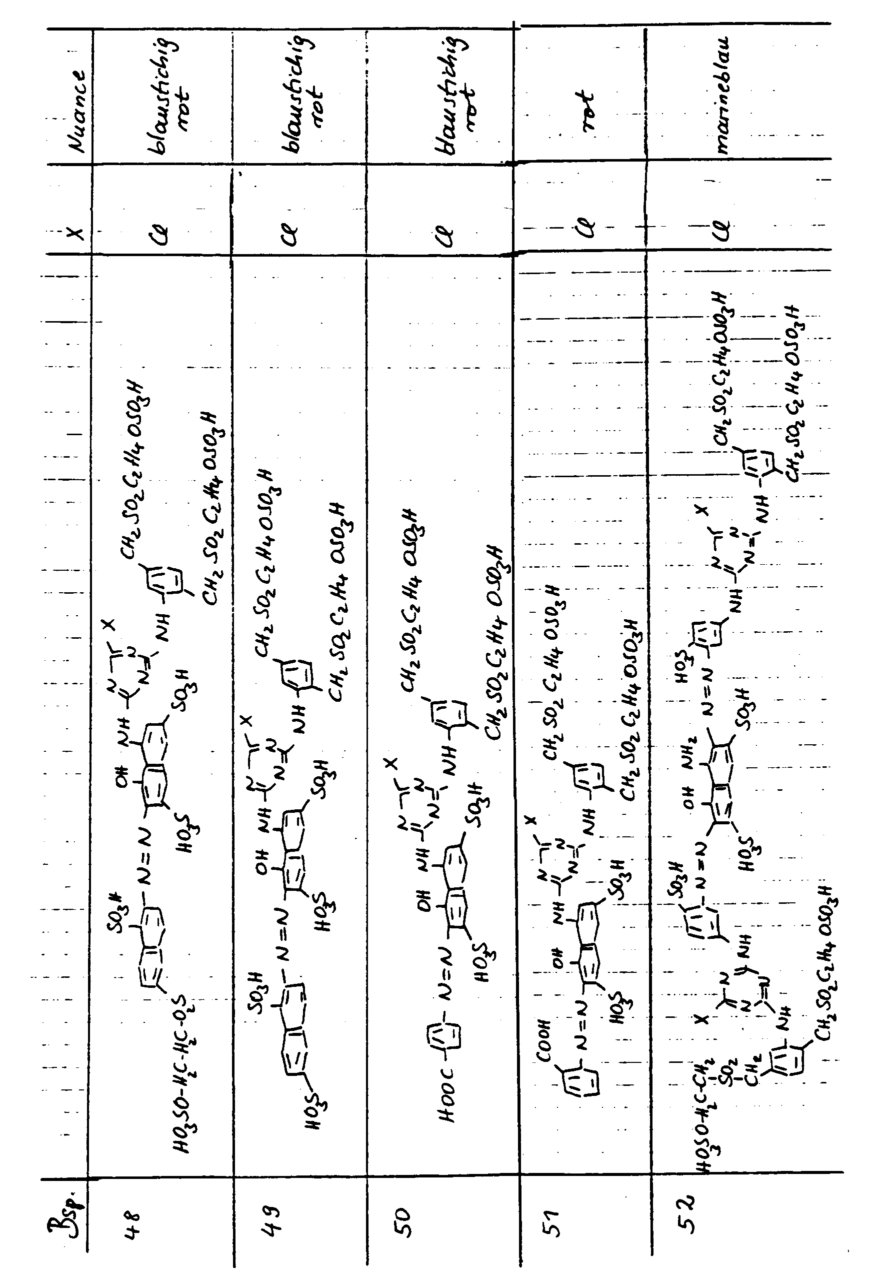

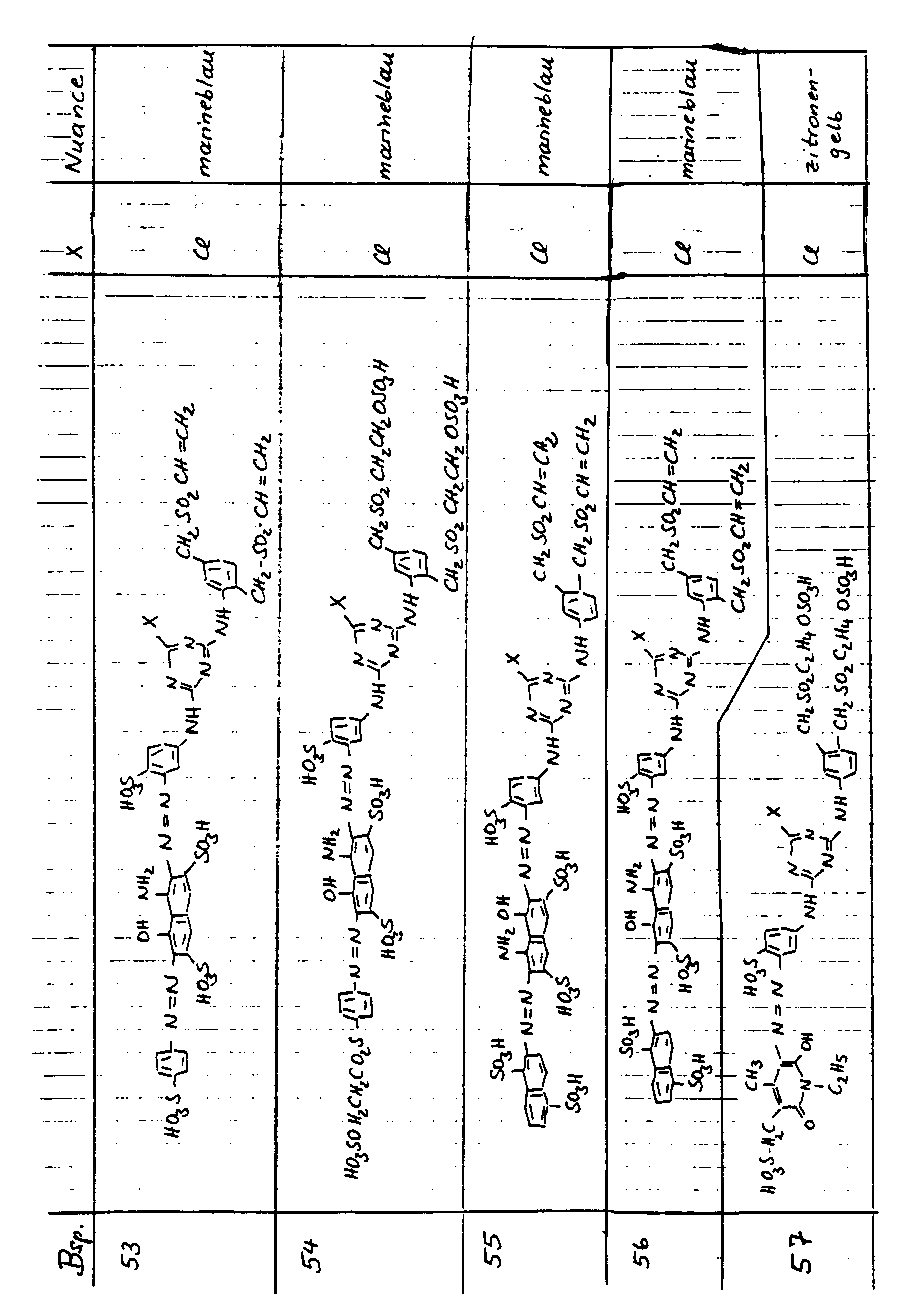

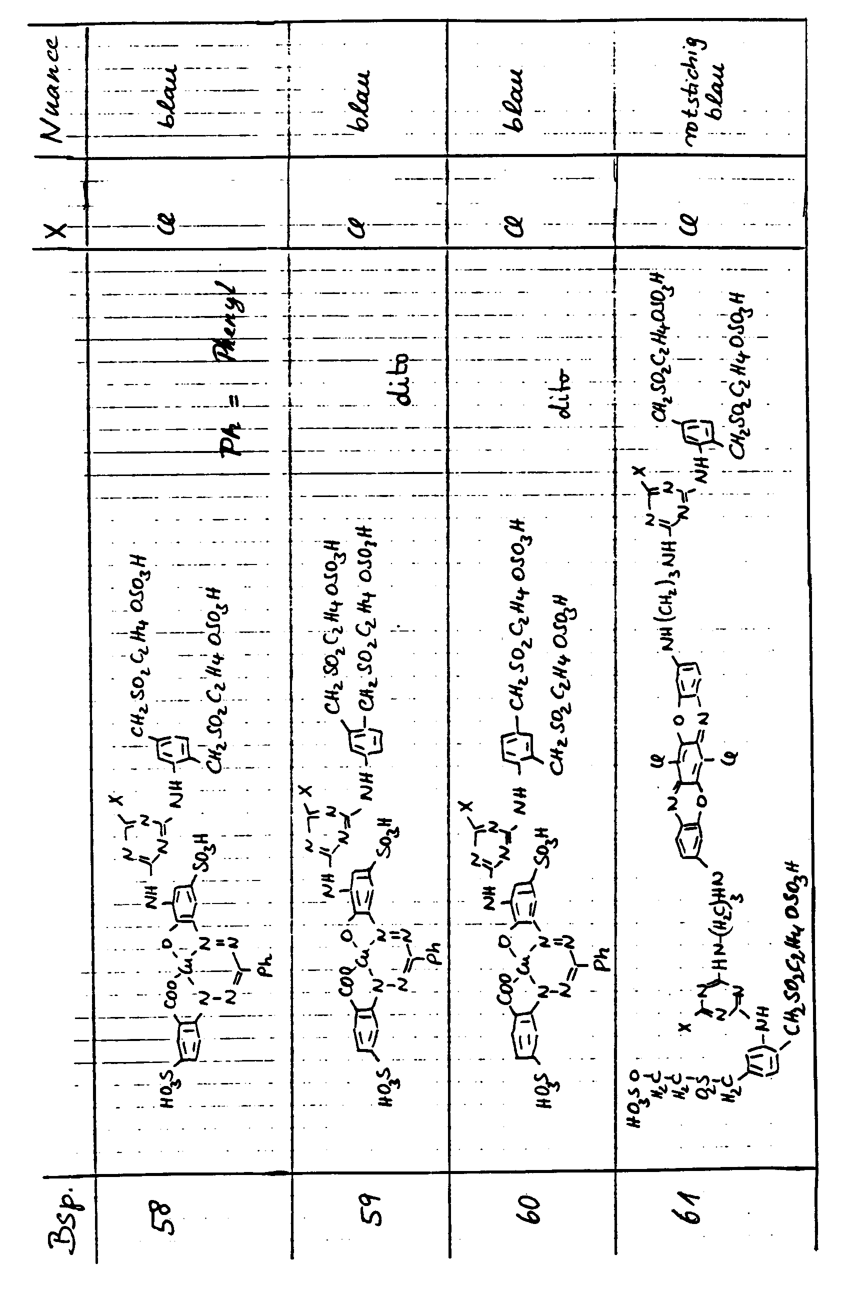

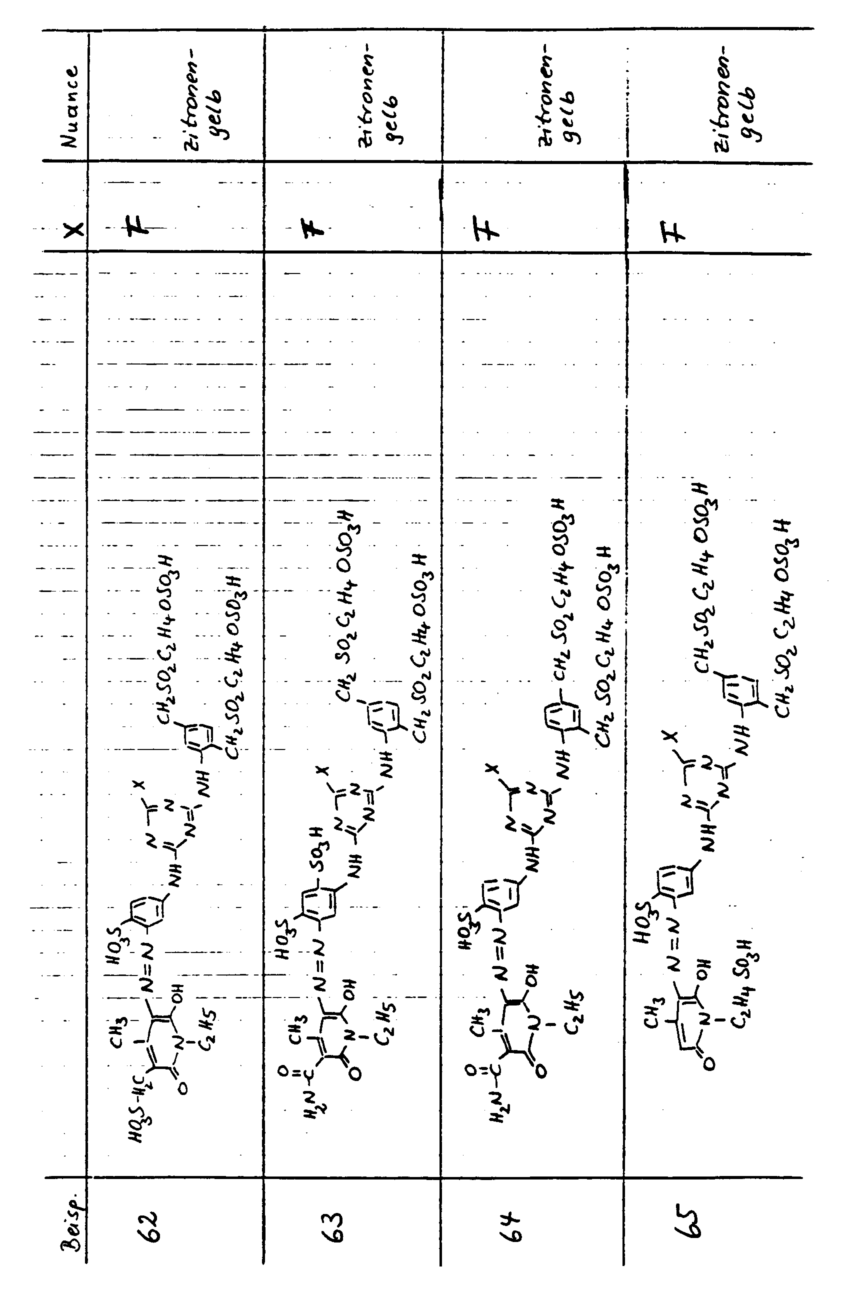

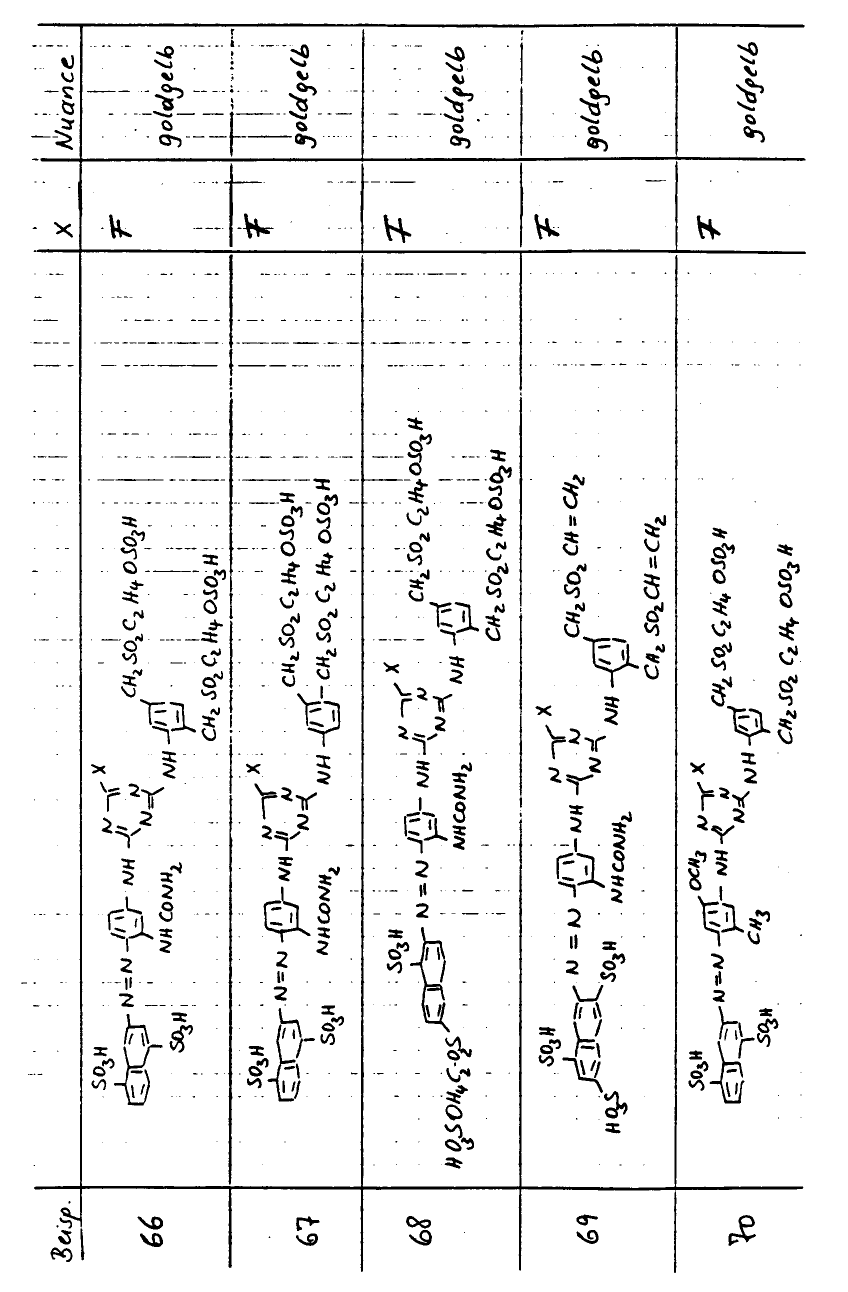

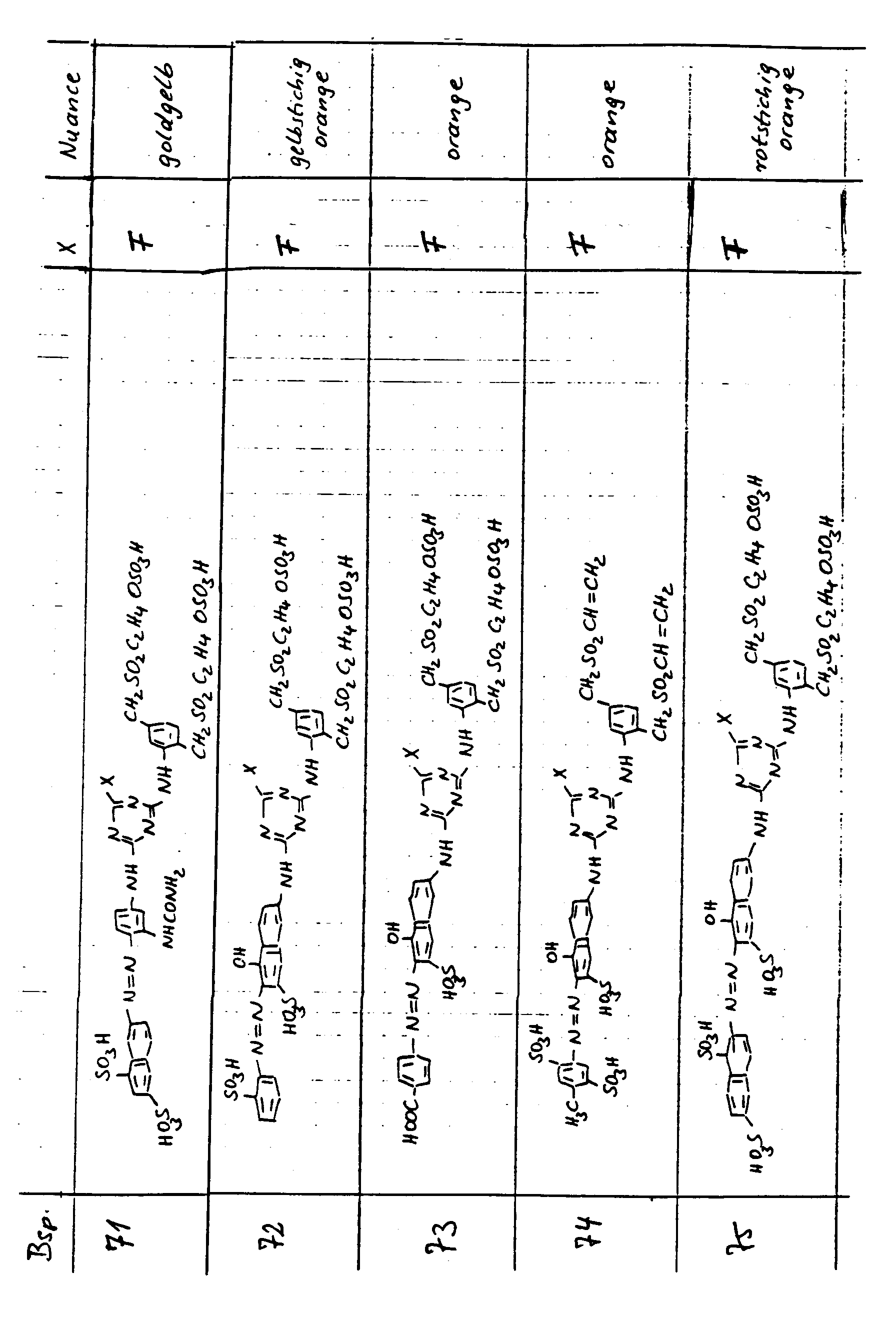

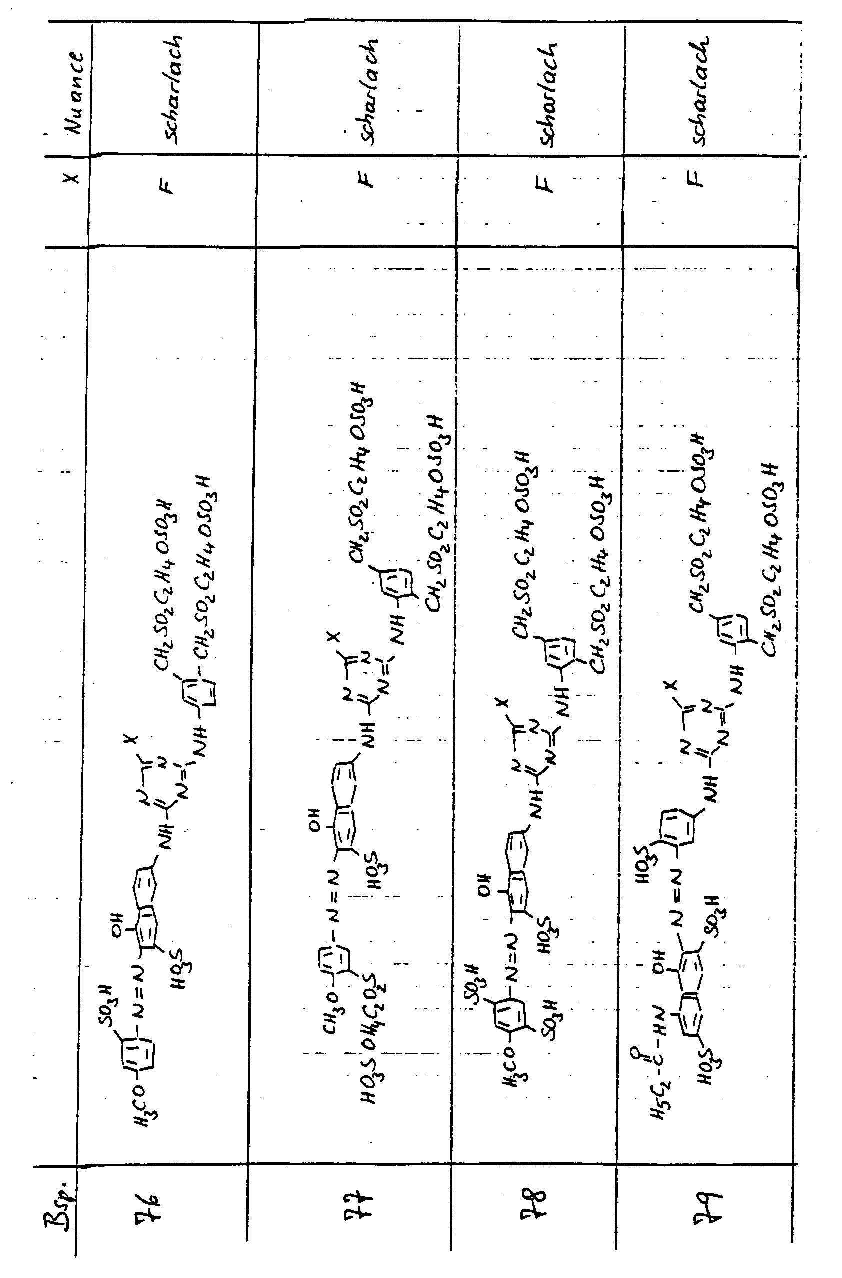

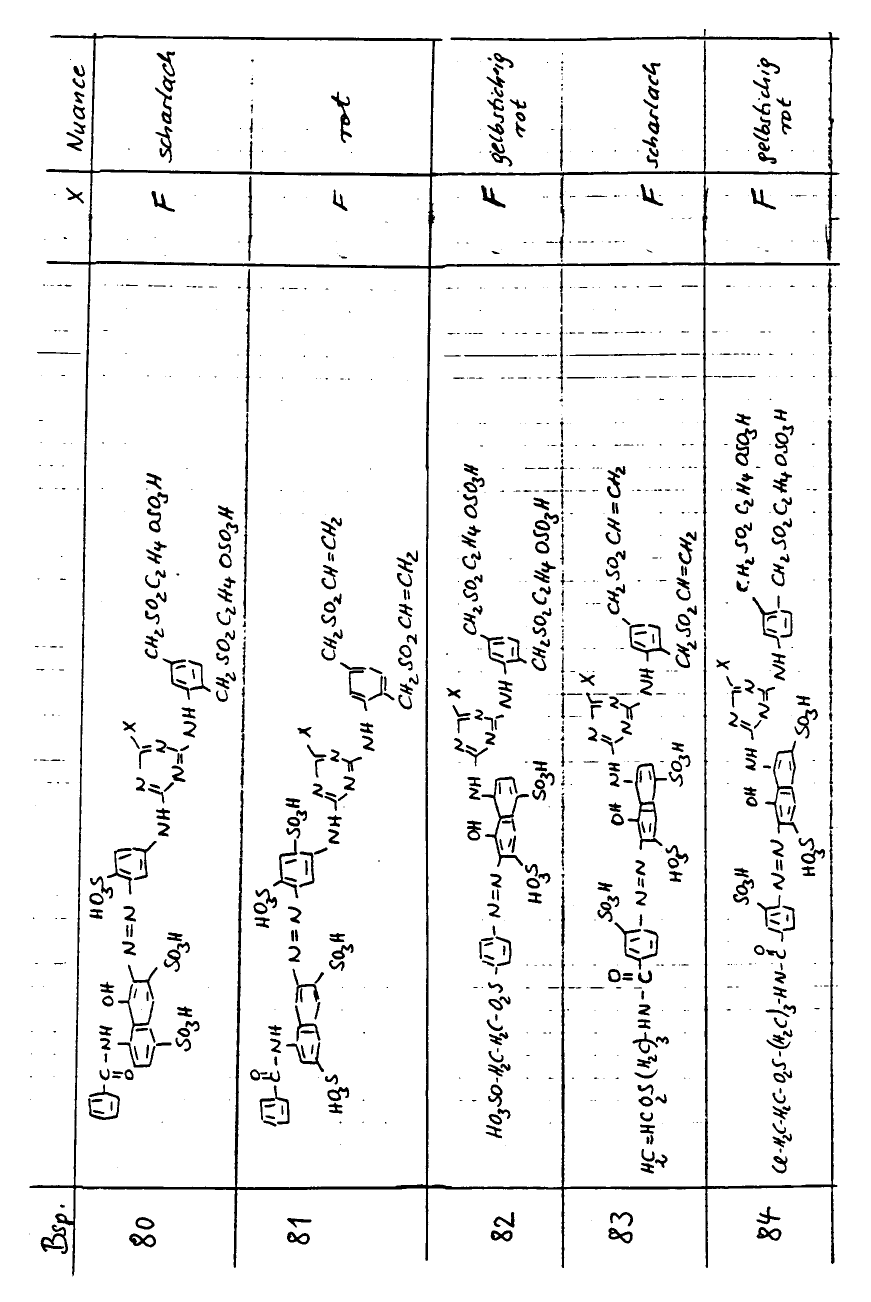

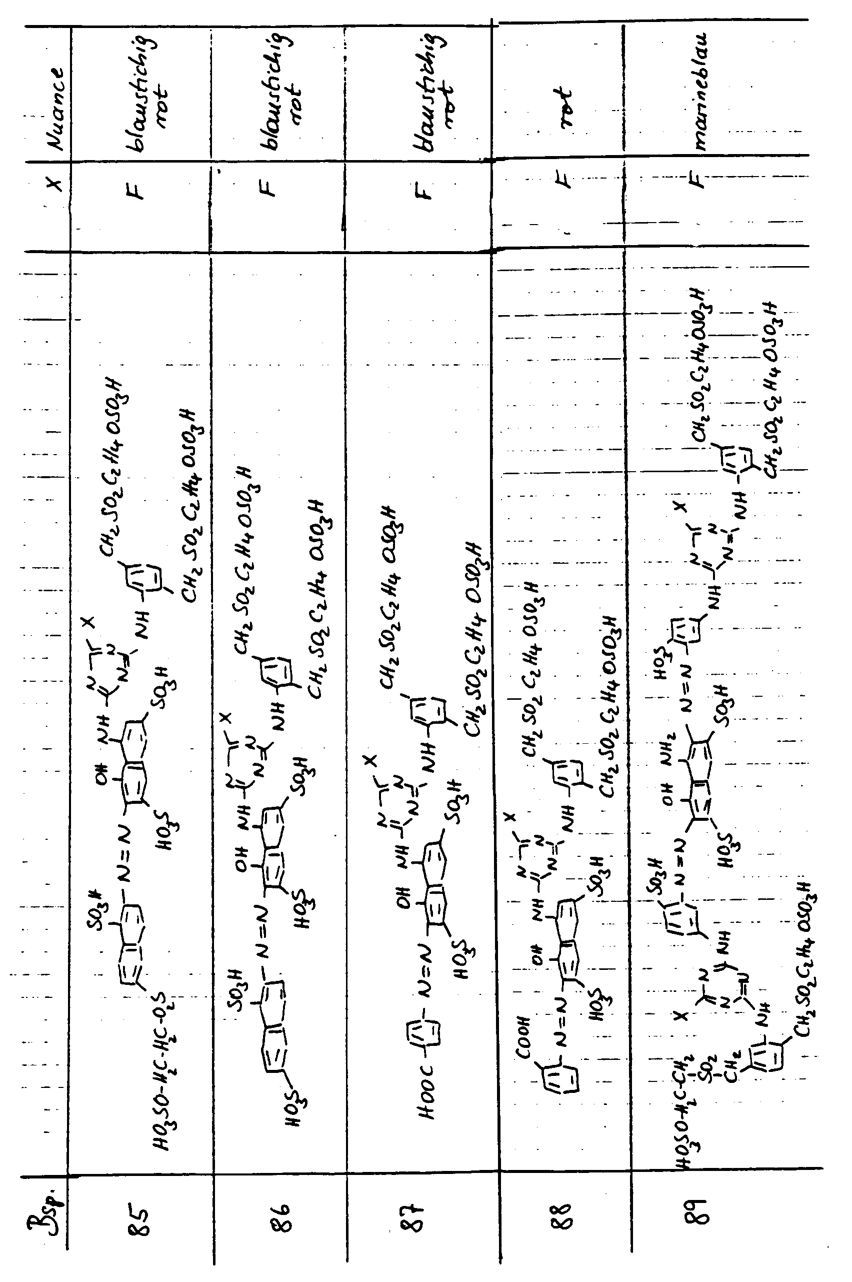

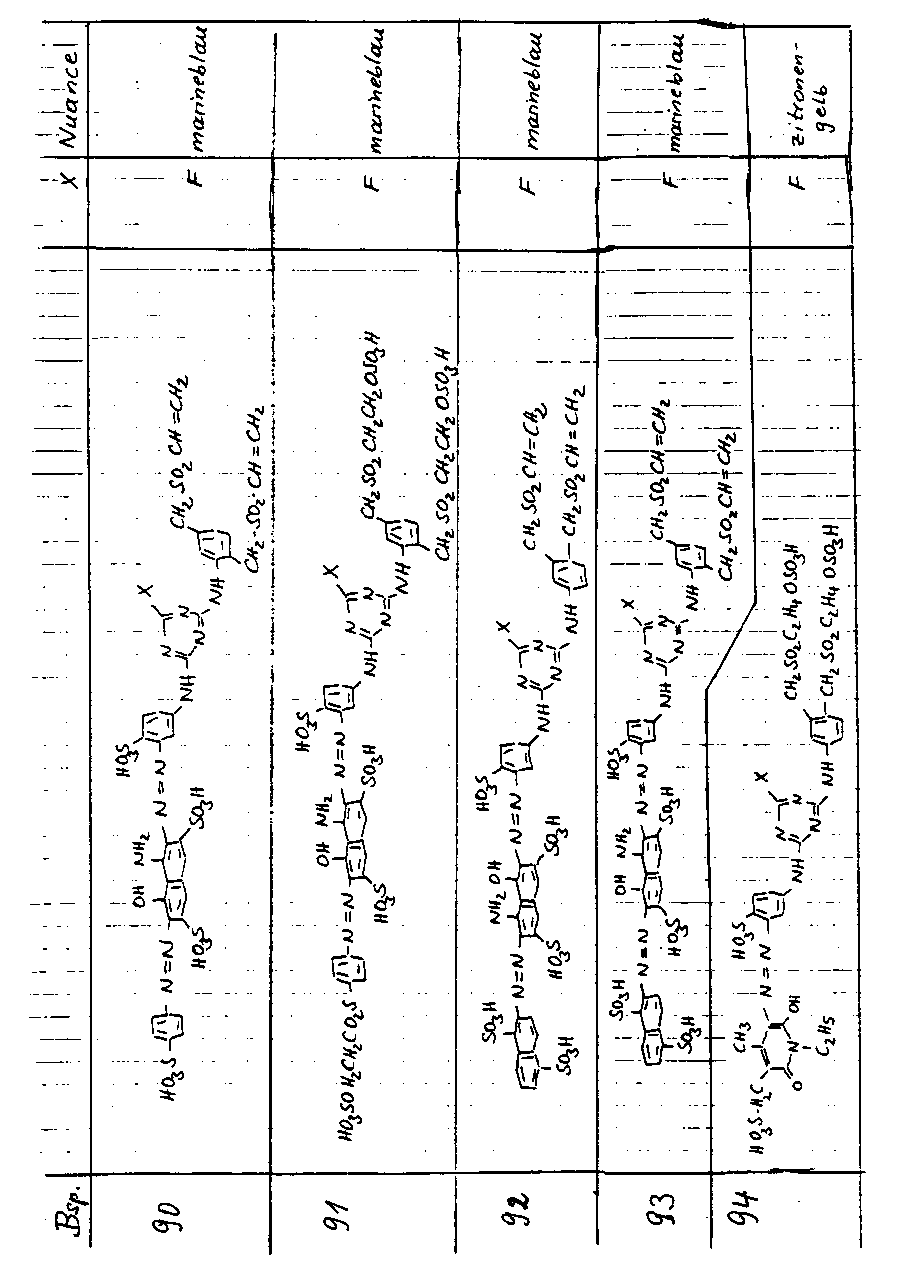

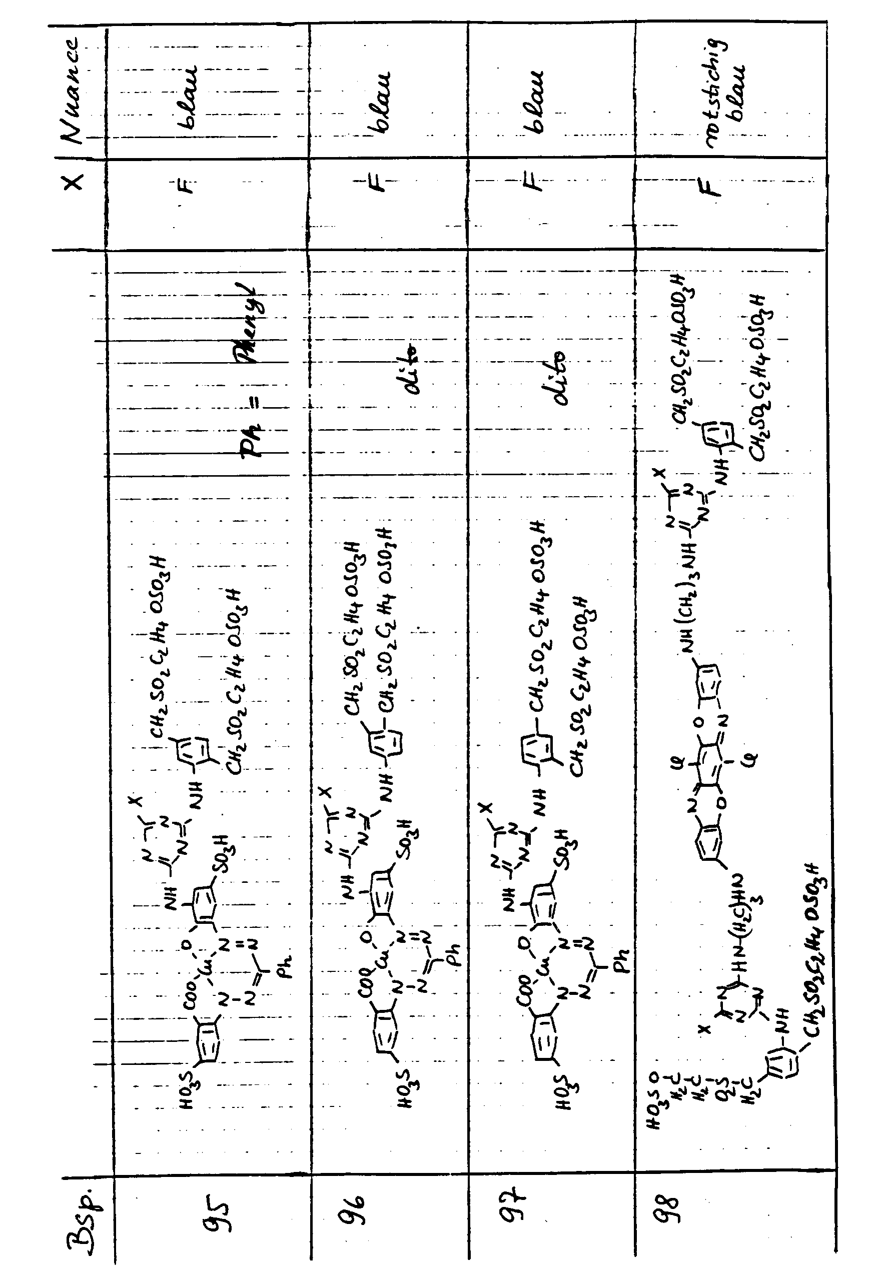

### Anwendungsbeispiel 1

In 1900 Teile eines wäßriges Färbebades, das 2 Teile des erfindungsgemäßen Farbstoffes von Beispiel 1 und 80 Teile Natriumchlorid gelöst enthält, gibt man bei 40°C 100 Teile eines Baumwollgewebes. Man führt die Färbung zunächst bei 40°C während 45 Minuten durch und gibt sodann 100 Teile einer wäßrigen Lösung, die 1,6 Teile Natriumhydroxid und 2 Teile calciniertes Natriumcarbonat gelöst enthält, hinzu. Man färbt weitere 45 Minuten bei 40°C und spült sodann die gefärbte Ware in üblicher Weise mit kaltem und warmen Wasser, seift sie in einem kochenden, ein nichtionogenes Waschmittel enthaltenden wäßrigen Bad, spült nochmals mit Wasser und trocknet sie. Man erhält eine farbstarke, goldgelbe Färbung mit guten Echtheitseigenschaften.

### Anwendungsbeispiel 2

In 1900 Teile eines wäßriges Färbebades, das 2 Teile des erfindungsgemäßen Farbstoffes von Beispiel 1 und 80 Teile Natriumchlorid gelöst enthält, gibt man bei 35°C 100 Teile eines Baumwollgewebes. Man führt die Färbung zunächst bei 35°C während 20 Minuten durch und gibt sodann 100 Teile einer wäßrigen Lösung, die 1,6 Teile Natriumhydroxid und 2 Teile calciniertes Natriumcarbonat gelöst enthält, hinzu. Man färbt weitere 15 Minuten bei 35°C, erhöht danach die Färbetemperatur innerhalb von 20 Minuten auf 60°C und führt den Färbeprozeß während 35 Minuten bei 60°C zu Ende, spült sodann die gefärbte Ware in üblicher Weise mit kaltem und warmen Wasser, seift sie in einem kochenden, ein nichtionogenes Waschmittel enthaltenden wäßrigen Bad, spült nochmals mit Wasser und trocknet sie. Man erhält eine farbstarke, goldgelbe Färbung mit guten Echtheitseigenschaften.

### Anwendungsbeispiel 3

In 1800 Teile eines wäßriges Färbebades, das 8 Teile des erfindungsgemäßen Farbstoffes von Beispiel 1 und 140 Teile Natriumsulfat gelöst enthält, gibt man bei 25°C 100 Teile eines Baumwollgewebes. Man führt die Färbung zunächst bei 25°C während 10 Minuten durch und gibt sodann 200 Teile einer wäßrigen Lösung von 30 Teilen Trinatriumphosphat hinzu. Man färbt weitere 10 Minuten bei 60°C und spült sodann die gefärbte Ware in üblicher Weise mit kaltem und warmen Wasser, seift sie in einem kochenden, ein nichtionogenes Waschmittel enthaltenden wäßrigen Bad, spült nochmals mit Wasser und trocknet sie. Man erhält eine farbstarke, goldgelbe Färbung mit guten Echtheitseigenschaften.

### Anwendungsbeispiel 4

Man versetzt eine Lösung von 4 Teilen des erfindungsgemäßen Farbstoffs von Beispiel 1 in 50 Teilen Wasser mit 50 Teilen einer wäßrigen Lösung von 0,5 Teilen Natriumhydroxid und 2 Teilen calciniertem Natriumcarbonat. Mit dieser Färbeflotte klotzt man ein Baumwollgewebe mit 70 % des Warengewichtes, wickelt es auf eine Docke auf und läßt es, eingehüllt in eine Folie, während 3 Stunden bei 20°C lagern. Danach wird das gefärbte Gewebe, wie im Beispiel 1 angegeben, durch Spülen, Seifen und Trocknen nachbehandelt. Man erhält eine farbstarke, goldgelbe Färbung mit guten Echtheitseigenschaften.

### Anwendungsbeispiel 5

Man versetzt eine Lösung von 6 Teilen des erfindungsgemäßen Farbstoffs von Beispiel 1 in 50 Teilen Wasser mit 50 Teilen einer wäßrigen Lösung von 1,6 Teilen Natriumhydroxid und 4 Volumenteilen Wasserglas von 38° Bé. Mit dieser Färbeflotte klotzt man ein Baumwollgewebe mit 70 % des Warengewichtes, wickelt es auf eine Docke auf und läßt es, eingehüllt in eine Folie, während 10 Stunden bei 20°C lagern. Danach wird das gefärbte Gewebe, wie im Beispiel 1 angegeben, durch Spülen, Seifen und Trocknen nachbehandelt. Man erhält eine farbstarke, goldgelbe Färbung mit guten Echtheitseigenschaften.

### Anwendungsbeispiel 6

Man löst 2 Teile des erfindungsgemäßen Farbstoffes von Beispiel 1 unter Zusatz von 0,5 Teilen Natrium m-Nitrobenzolsulfonat in 100 Teilen Wasser und imprägniert mit der erhaltenen Lösung ein Baumwollgewebe mit 75 % des Warengewichtes; anschließend trocknet man das imprägnierte Gewebe und überklotzt es sodann bei einer Flottenaufnahme von 75 % des Warengewichtes mit einer 20°C warmen wäßrigen Lösung, die pro Liter 4 g Natriumhydroxid und 300 g Natriumchlorid enthält, unterwirft das überklotzte Gewebe Heißdampf von 100-102°C während 30 Sekunden und stellt die erhaltene Färbung durch Nachbehandlung gemäß den Angaben des Anwendungsbeispiels 1 fertig. Man erhält eine farbstarke, goldgelbe Färbung mit guten Echtheitseigenschaften.

### Anwendungsbeispiel 7

Man rührt 3 Teile des erfindungsgemäßen Farbstoffs von Beispiel 1 in eine Stammverdickung ein, die 50 Teile einer 5 %igen wäßrigen Natriumalginatverdickung, 20 Teile Harnstoff, 1 Teil Natrium m-Nitrobenzolsulfonat, 1,2 Teile Natriumhydrogencarbonat und 27,8 Teile Wasser enthält. Mit dieser Druckpaste wird ein Baumwollgewebe bedruckt, getrocknet und anschließend während 2 Minuten bei 102°C mit gesättigtem Wasserdampf gedämpft. Das bedruckte Gewebe wird anschließend in der im Anwendungsbeispiel 1 angegebenen Weise fertiggestellt. Man erhält einen farbstarken, goldgelben Druck mit guten Echtheitseigenschaften.

### Anwendungsbeispiel 8

Man rührt 5 Teile des erfindungsgemäßen Farbstoffs von Beispiel 1 in eine Stammverdickung ein, die 50 Teile einer 5 %igen wäßrigen Natriumalginatverdickung, 10 Teile Harnstoff, 1 Teil Natrium m-Nitrobenzolsulfonat, 2,5 Teile Natriumhydrogencarbonat und 36,5 Teile Wasser enthält. Mit dieser Druckpaste wird ein Baumwollgewebe bedruckt, getrocknet und anschließend während 8 Minuten bei 102°C mit gesättigtem Wasserdampf gedämpft. Das bedruckte Gewebe wird anschließend in der im Anwendungsbeispiel 1 angegebenen Weise fertiggestellt. Man erhält einen farbstarken, goldgelben Druck mit guten Echtheitseigenschaften.

### Beispiel A

Synthese von 2,5-Di-(β-sulfatoethylsulfonyl-methyl)-anilin:
a) 93,8 Teile Mercaptoethanol werden in einem Gemisch von 200 Teilen Wasser und 75 Volumenteilen einer 33%igen wäßrigen Natronlauge gelöst; die Lösung besitzt einen pH-Wert zwischen 10 und 11. Zu dieser alkalischen Lösung gibt man 87,5 Teile 1,4-Bis-(chlormethyl)-benzol und 60,6 Teile einer 33%igen wäßrigen Natronlauge; man erwärmt den Ansatz langsam auf 80°C und hält die exotherme Reaktion bei etwa 100°C und rührt sodann den Ansatz noch 30 Minuten bei 95°C nach, verdünnt ihn mit 200 Teilen Wasser und stellt sodann mit Salzsäure einen pH-Wert von 7 ein. Nach Abkühlen auf 10°C wird vom ausgefallenen Produkt abgesaugt, dieses mit kaltem Wasser nachgewaschen und bei 50°C getrocknet. Es besitzt einen Schmelzpunkt von 89-91°C.
b) 116,2 Teile der unter a) erhaltenen Verbindung 2,5-Bis-(β-hydroxyethyl-thio-methyl)-benzol gibt man zusammen mit 1,8 Teilen Natriumwolframat-dihydrat in 200 Volumenteilen Eisessig. Man erwärmt auf 90 bis 95°C und gibt während einiger Stunden langsam 194,3 Teile einer 35%igen wäßrigen Wasserstoffperoxidlösung hinzu, rührt den Ansatz noch eine Stunde bei 100°C nach und rührt ihn sodann in ein Gemisch aus 500 Teilen Eis und 100 Teilen Kaliumchlorid ein, saugt das ausgefallene Produkt ab, wäscht es mit Wasser nach und trocknet es. Man erhält farblose Kristalle der Verbindung 2,5-Bis-(β-hydroxyethylsulfonyl)-benzol mit einem Schmelzpunkt von 209-212°C.
c) In eine Mischung aus 180 Volumenteilen Schwefelsäuremonohydrat und 18 Volumenteilen 65%igem Oleum gibt man bei einer Temperatur von maximal 40°C 162 Teile der unter b) erhaltenen Verbindung. Sodann gibt man bei 30 bis 38°C langsam 90,8 Teile einer Nitriersäure, bestehend zu 30 % aus Salpetersäure und 70 % Schwefelsäure, rührt anschließend den Reaktionsansatz noch 4 bis 5 Stunden bei 70°C nach und rührt ihn dann in 2000 Teile Eiswasser ein. Zur Hydrolyse der Sulfatogruppe wird die saure Lösung unter Rückfluß etwa 3 Stunden gekocht.
   Man kühlt den Ansatz anschließend ab, filtriert die ausgefallene Verbindung 2,5-Di-(β-hydroxyethylsulfonyl-methyl)-nitrobenzol ab und trocknet sie. Sie besitzt einen Schmelzpunkt von 125-126,5°C.
d) 128,6 Teile der unter c) erhaltenen Nitroverbindung werden in 500 Teilen Wasser bei 60°C und einem pH-Wert von 6,5 gelöst und im Autoklaven bei 80°C und einem Wasserstoffdruck von 50 bar in Gegenwart von 50 Teilen Raney-Nickel hydriert. Danach wird der Ansatz mit 1500 Teilen heißem Wasser verdünnt und bei 95°C vom Katalysator abfiltriert. Nach Abkühlen unterhalb 10°C fällt das 2,5-Di-(β-hydroxyethylsulfonyl-methyl)-anilin aus. Es besitzt einen Schmelzpunkt von 201°C.
e) 84,3 Teile der unter d) erhaltenen Anilinverbindung gibt man innerhalb von 30 Minuten bei einer Temperatur von maximal 20°C in eine Mischung aus 200 Teilen Schwefelsäuremonohydrat und 125 Teilen 20%igem Oleum. Man rührt den Ansatz noch etwa 4 Stunden nach und rührt ihn dann in 1000 Teile Eis ein. Überschüssige Schwefelsäure wird mittels Schlämmkreide neutralisiert. Das ausgefallene Calciumsulfat wird abgesaugt und mit Wasser nachgewaschen und die vereinigten Filtrate bei 50°C zur Trockne eingedampft. Man erhält das 2,5-Di-(β-sulfatoethylsulfonyl-methyl)-anilin mit einem Schmelzpunkt von oberhalb 360°C.
f) Die unter e) erhaltene β-Sulfatoethylsulfonyl-Verbindung kann in deren Vinylsulfonyl-Derivat übergeführt werden, das auch zur besseren Charakterisierung der Struktur des Sulfato-Derivates dienen kann.
   Zur Überführung der β-Sulfatoethylsulfonyl-Verbindung in die Vinylsulfonyl-Verbindung gibt man 30 Teile des unter e) erhaltenen salzhaltigen Produktes in 250 Teile Wasser, stellt mittels wäßriger Natronlauge einen pH-Wert zwischen 10 und 11 ein und hält ihn während einer Stunde bei 40 bis 45°C. Das entstandene 2,5-Di-(vinylsulfonyl-methyl)-anilin fällt aus, wird abgesaugt, salzfrei gewaschen und getrocknet.
   Die Vinylsulfonyl-Verbindung zeigt folgende ¹H-NMR-Daten (in d₆-Dimethylsulfoxid; bei 300 MHz):
   - δ (in ppm):: 7,02 (d,1H); 6,91 (m,2H); 6,65 (d,1,H); 6,52 (dd,1H); 6,16 (dd,2H); 6,12 (dd,2H); 5,29 (s,2H); 4,14 (s,2H); 4,32 (s,2H).

## Patentansprüche (Patentansprüche für folgende(n) Vertragsstaat(en): AT, BE, CH, DE, DK, FR, GB, GR, IT, LI, LU, NL, SE)

1. Wasserlöslicher Farbstoff entsprechend der allgemeinen Formel (1) 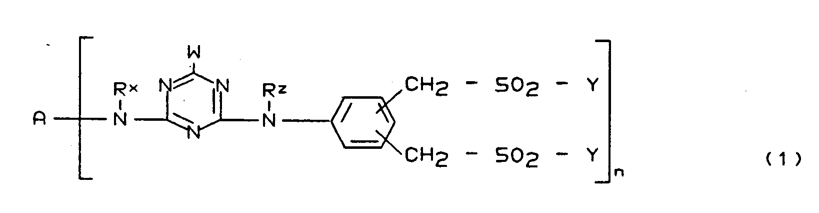 in welcher bedeuten:
A ist der Rest eines Monoazo-, Disazo- oder Polyazofarbstoffes oder eines Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon-oder Perylentetracarbimid-Farbstoffes;
R^{x} ist Wasserstoff oder Alkyl von 1 bis 4 C-Atomen, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann, bevorzugt Wasserstoff oder Methyl;
R^{z} ist Wasserstoff oder Alkyl von 1 bis 4 C-Atomen, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann, bevorzugt Wasserstoff;
W ist Fluor, Chlor, Brom, Sulfo, Phenylsulfonyl oder Alkylsulfonyl von 1 bis 4 C-Atomen;
Y ist Vinyl, β-Sulfatoethyl, β-Thiosulfatoethyl, β-Phosphatoethyl, β-Alkanoyloxi-ethyl mit 2 bis 5 C-Atomen im Alkanoylrest, β-Benzoyloxi-ethyl, β-(Sulfobenzoyloxi)-ethyl, β-(p-Toluolsulfonyloxi)-ethyl oder β-Halogenethyl;
n ist die Zahl 1 oder 2, bevorzugt 1.

2. Farbstoff nach Anspruch 1, dadurch gekennzeichnet, daß W Fluor oder Chlor ist.

3. Farbstoff nach Anspruch 1 oder 2, dadurch gekennzeichnet, daß Y β-Sulfatoethyl ist.

4. Verfahren zur Herstellung eines Farbstoffes von Anspruch 1, dadurch gekennzeichnet, daß man ein oder mehrere Vorprodukte des Farbstoffes, von denen mindestens eines eine Gruppe der allgemeinen Formel (2) 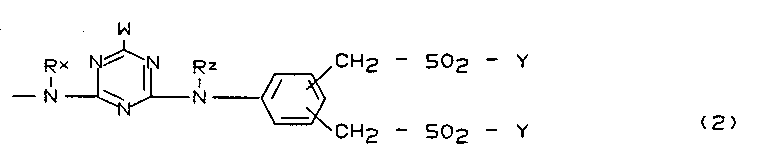 enthält, in welcher R^{x}, R^{z}, W und Y die in Anspruch 1 genannten Bedeutungen haben, miteinander umsetzt, oder daß man eine aminogruppenhaltige Ausgangsverbindung der allgemeinen Formel (59) 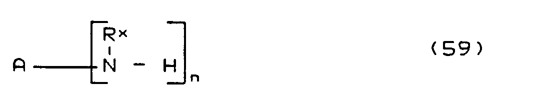 in welcher A, R^{x} und n die in Anspruch 1 genannten Bedeutungen haben, mit einem s-Triazin der allgemeinen Formel (60) 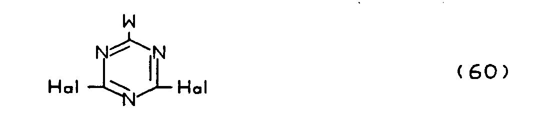 in welcher W die in Anspruch 1 genannte Bedeutung besitzt und Hal für ein Halogenatom steht, und einem Amin der allgemeinen Formel (58) 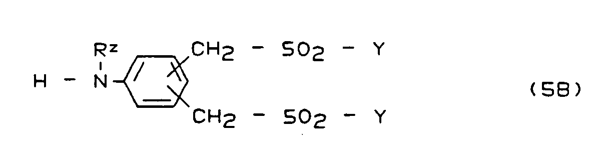 in welcher R^{z} und Y die in Anspruch 1 genannten Bedeutungen haben, in stöchiometrischen Mengen in beliebiger Reihenfolge miteinander umsetzt und gegebenenfalls anschließend weitere, erforderliche Umwandlungsreaktionen durchführt.

5. Verfahren nach Anspruch 4, dadurch gekennzeichnet, daß man eine Verbindung entsprechend der allgemeinen Formel (57) 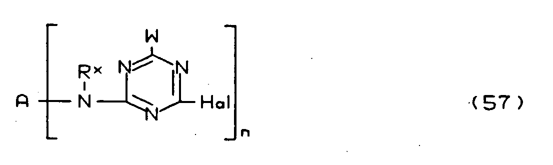 in welcher A, R^{x}, W und n die in Anspruch 1 genannten Bedeutungen haben und Hal für ein Halogenatom steht, mit einer Aminoverbindung der allgemeinen Formel (58) der in Anspruch 4 genannten Bedeutung in stöchiometrischer Menge umsetzt.

6. Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

7. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

## Patentansprüche (Patentansprüche für folgende(n) Vertragsstaat(en): ES)

1. Verfahren zur Herstellung eines wasserlöslichen Farbstoffes entsprechend der allgemeinen Formel (1) 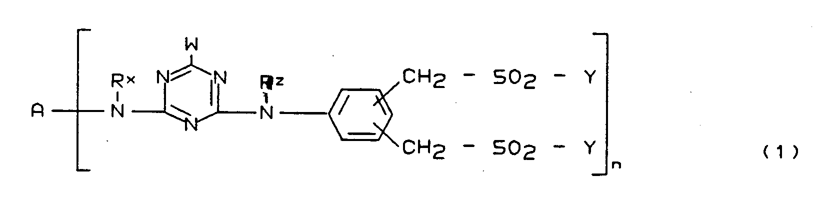 in welcher bedeuten:
A ist der Rest eines Monoazo-, Disazo- oder Polyazofarbstoffes oder eines Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon-oder Perylentetracarbimid-Farbstoffes;
R^{x} ist Wasserstoff oder Alkyl von 1 bis 4 C-Atomen, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann, bevorzugt Wasserstoff oder Methyl;
R^{z} ist Wasserstoff oder Alkyl von 1 bis 4 C-Atomen, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann, bevorzugt Wasserstoff;
W ist Fluor, Chlor, Brom, Sulfo, Phenylsulfonyl oder Alkylsulfonyl von 1 bis 4 C-Atomen;
Y ist Vinyl, β-Sulfatoethyl, β-Thiosulfatoethyl, β-Phosphatoethyl, β-Alkanoyloxi-ethyl mit 2 bis 5 C-Atomen im Alkanoylrest, β-Benzoyloxi-ethyl, β-(Sulfobenzoyloxi)-ethyl, β-(p-Toluolsulfonyloxi)-ethyl oder β-Halogenethyl;
n ist die Zahl 1 oder 2, bevorzugt 1;
dadurch gekennzeichnet, daß man ein oder mehrere Vorprodukte des Farbstoffes, von denen mindestens eines eine Gruppe der allgemeinen Formel (2) 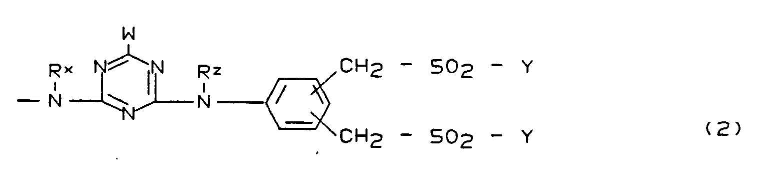 enthält, in welcher R^{x}, R^{z}, W und Y die obengenannten Bedeutungen haben, miteinander umsetzt, oder daß man eine aminogruppenhaltige Ausgangsverbindung der allgemeinen Formel (59) 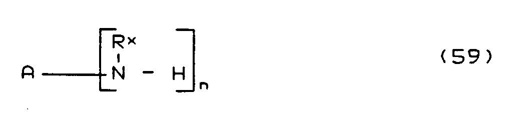 in welcher A, R^{x} und n die obengenannten Bedeutungen haben, mit einem s-Triazin der allgemeinen Formel (60) 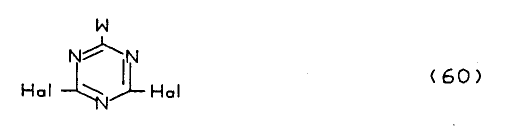 in welcher W die obengenannte Bedeutung besitzt und Hal für ein Halogenatom steht, und einem Amin der allgemeinen Formel (58) 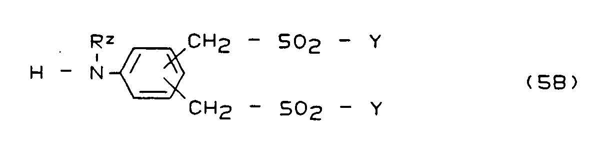 in welcher R^{z} und Y die obengenannten Bedeutungen haben, in stöchiometrischen Mengen in beliebiger Reihenfolge miteinander umsetzt und gegebenenfalls anschließend weitere, erforderliche Umwandlungsreaktionen durchführt.

2. Verfahren nach Anspruch 1, dadurch gekennzeichnet, daß man eine Verbindung entsprechend der allgemeinen Formel (57) 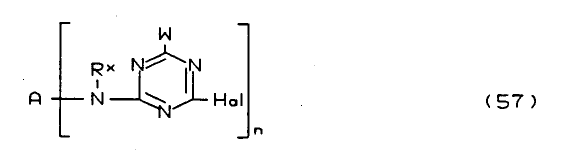 in welcher A, R^{x}, W und n die in Anspruch 1 genannten Bedeutungen haben und Hal für ein Halogenatom steht, mit einer Aminoverbindung der allgemeinen Formel (58) der in Anspruch 1 genannten Bedeutung in stöchiometrischer Menge umsetzt.

3. Verfahren nach Anspruch 1 oder 2, dadurch gekennzeichnet, daß W Fluor oder Chlor ist.

4. Verfahren nach mindestens einem der Ansprüche 1 bis 3, dadurch gekennzeichnet, daß Y β-Sulfatoethyl ist.

5. Verwendung einer Verbindung entsprechend der allgemeinen Formel (1) von Anspruch 1 zum Färben (einschließlich Bedrucken) von hydroxy- und/oder carbonamidgruppenhaltigem Material, insbesondere Fasermaterial.

6. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder darin einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) von Anspruch 1 einsetzt.

## Claims (Claims for the following Contracting State(s): AT, BE, CH, DE, DK, FR, GB, GR, IT, LI, LU, NL, SE)

1. A water-soluble dye of the formula (1) 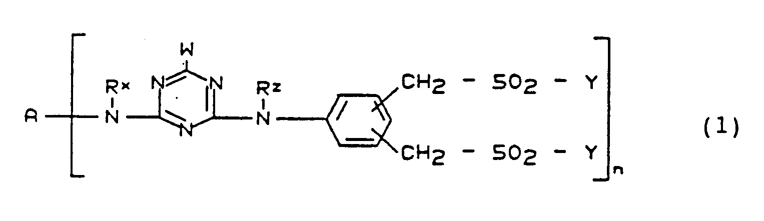 in which
A is the radical of a monoazo, disazo or polyazo dye or of a heavy metal complex azo dye or of an anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye;
R^{x} is hydrogen or alkyl of 1 to 4 carbon atoms, which can be substituted by halogen, hydroxyl, cyano, alkoxy of 1 to 4 carbon atoms, alkoxycarbonyl of 2 to 5 carbon atoms, carboxyl, sulfamoyl, sulfo or sulfato, preferably hydrogen or methyl;
R^{z} is hydrogen or alkyl of 1 to 4 carbon atoms, which can be substituted by halogen, hydroxyl, cyano, alkoxy of 1 to 4 carbon atoms, alkoxycarbonyl of 2 to 5 carbon atoms, carboxyl, sulfamoyl, sulfo or sulfato, preferably hydrogen;
W is fluorine, chlorine, bromine, sulfo, phenylsulfonyl or alkylsulfonyl of 1 to 4 carbon atoms,
Y is vinyl or β-sulfatoethyl, β-thiosulfatoethyl, β-phosphatoethyl, β-alkanoyloxyethyl of 2 to 5 carbon atoms in the alkanoyl radical, β-benzoyloxyethyl, β-(sulfobenzoyloxy)ethyl, β-(p-toluenesulfonyloxy)ethyl or β-haloethyl;
n is the number 1 or 2, preferably 1.

2. A dye as claimed in claim 1, wherein W is fluorine or chlorine.

3. A dye as claimed in claim 1 or 2, wherein Y is β-sulfatoethyl.

4. A process for the preparation of a dye of claim 1, which comprises reacting one or more precursors of the dye, at least one of which contains a group of the formula (2) 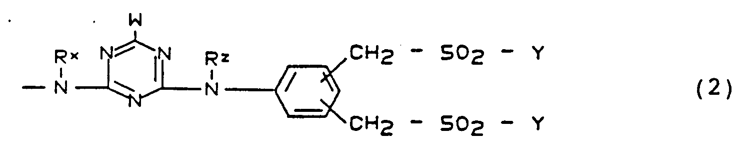 in which R^{x}, R^{z}, W and Y have the meanings mentioned in claim 1, with one another or reacting an amino-containing starting compound of the formula (59) 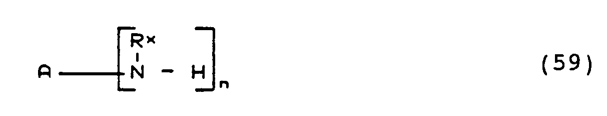 in which A, R^{x} and n have the meanings mentioned in claim 1 with an s-triazine of the formula (60) 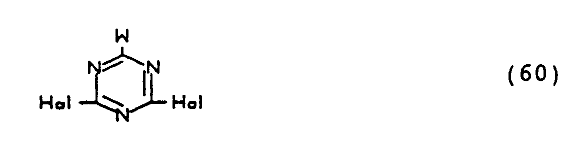 in which W has the meaning mentioned in claim 1 and Hal is a halogen atom and with an amine of the formula (58) 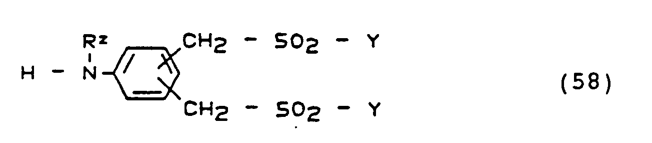 in which R^{z} and Y have the meanings mentioned in claim 1 in stoichiometric amounts in any desired order and, if desired, subsequently carrying out further necessary transformation reactions.

5. The process as claimed in claim 4, wherein a compound of the formula (57) 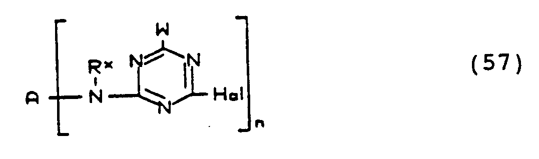 in which A, R^{x}, W and n have the meanings mentioned in claim 1 and Hal is a halogen atom is reacted with an amino compound of the formula (58) of the meaning mentioned in claim 4 in stoichiometric amounts.

6. Use of a compound of the formula (1) of claim 1 for the dyeing (including printing) of hydroxyl- and/or carboxamido-containing material, in particular fiber material.

7. A process for the dyeing (including printing) of hydroxyl- and/or carboxamido-containing material, in particular fiber material, in which a dye is applied to the material or incorporated therein and fixed by means of heat and/or by means of an alkaline agent, wherein the dye used is a compound of the formula (1) of claim 1.

## Claims (Claims for the following Contracting State(s): ES)

1. A process for preparing a water-soluble dye of the formula (1) 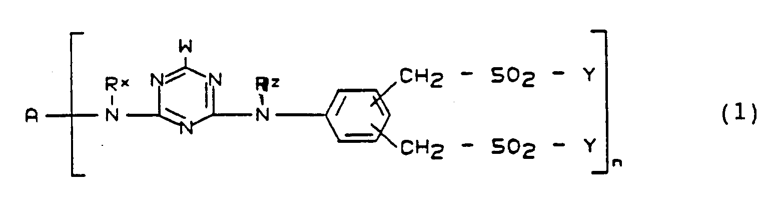 in which
A is the radical of a monoazo, disazo or polyazo dye or of a heavy metal complex azo dye or of an anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye;
R^{x} is hydrogen or alkyl of 1 to 4 carbon atoms, which can be substituted by halogen, hydroxyl, cyano, alkoxy of 1 to 4 carbon atoms, alkoxycarbonyl of 2 to 5 carbon atoms, carboxyl, sulfamoyl, sulfo or sulfato, preferably hydrogen or methyl;
R^{z} is hydrogen or alkyl of 1 to 4 carbon atoms, which can be substituted by halogen, hydroxyl, cyano, alkoxy of 1 to 4 carbon atoms, alkoxycarbonyl of 2 to 5 carbon atoms, carboxyl, sulfamoyl, sulfo or sulfato, preferably hydrogen;
W is fluorine, chlorine, bromine, sulfo, phenylsulfonyl or alkylsulfonyl of 1 to 4 carbon atoms,
Y is vinyl or β-sulfatoethyl, β-thiosulfatoethyl, β-phosphatoethyl, β-alkanoyloxyethyl of 2 to 5 carbon atoms in the alkanoyl radical, β-benzoyloxyethyl, β-(sulfobenzoyloxy)ethyl, β-(p-toluenesulfonyloxy)ethyl or β-haloethyl;
n is the number 1 or 2, preferably 1, wherein one or more precursors of the dye, at least one of which contains a group of the formula (2) 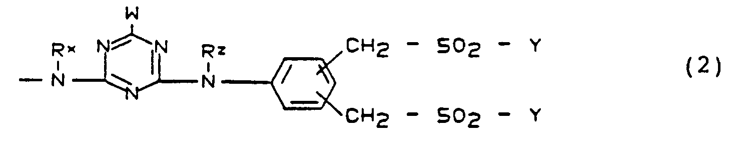
in which R^{x}, R^{z}, W and Y have the meanings mentioned above, are reacted with one another, or an amino-containing starting compound of the formula (59) 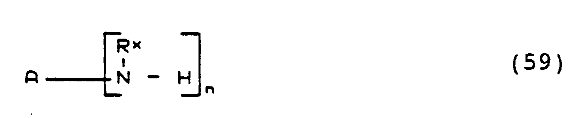 in which A, R^{x} and n have the meanings mentioned above is reacted together with an s-triazine of the formula (60) 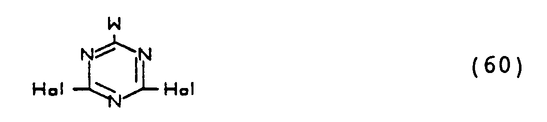 in which W has the meaning mentioned above and Hal is a halogen atom and with an amine of the formula (58) 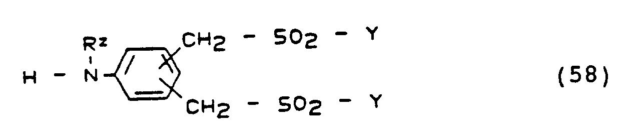 in which R^{z} and Y have the meanings mentioned above in stoichiometric amounts in any desired order and, if desired, subsequently carrying out further necessary transformation reactions.

2. The process as claimed in claim 1, wherein a compound of the formula (57) 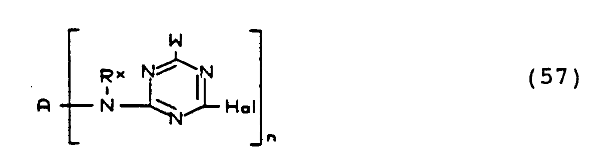 in which A, R^{x}, W and n have the meanings mentioned in claim 1 and Hal is a halogen atom is reacted with an amino compound of the formula (58) of the meaning mentioned in claim 1 in stoichiometric amounts.

3. A process as claimed in claim 1 or 2, wherein W is fluorine or chlorine.

4. A process as claimed in at least one of claims 1 to 3, wherein Y is β-sulfatoethyl.

5. Use of a compound of the formula (1) of claim 1 for the dyeing (including printing) of hydroxyl- and/or carboxamido-containing material, in particular fiber material.

6. A process for the dyeing (including printing) of hydroxyl- and/or carboxamido-containing material, in particular fiber material, in which a dye is applied to the material or incorporated therein and fixed by means of heat and/or by means of an alkaline agent, wherein the dye used is a compound of the formula (1) of claim 1.

## Revendications (Revendications pour l'(les) Etat(s) contractant(s) suivant(s): AT, BE, CH, DE, DK, FR, GB, GR, IT, LI, LU, NL, SE)

1. Colorant soluble dans l'eau, correspondant à la formule générale (1) 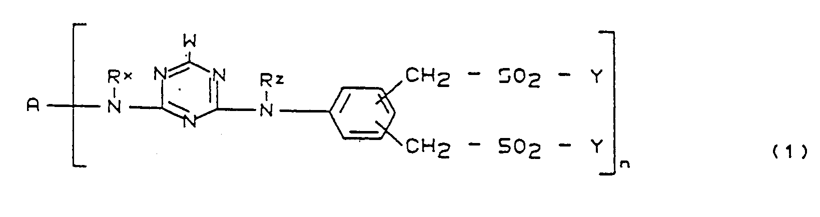 dans laquelle
A est un reste d'un colorant monoazoïque, disazoïque ou polyazoïque, ou un colorant azoïque d'un complexe de métal lourd, ou un colorant d'anthraquinone, de phtalocyanine, de formazan, d'azométhine, de dioxazine, de phénazine, de stilbène, de triphénylméthane, de xanthène, de thioxanthone, de nitroaryle, de naphtoquinone, de pyrènequinone ou de pérylènetétracarbimide;
R^{x} est l'hydrogène ou un alkyle ayant de 1 à 4 atomes de C, qui peut être substitué par un halogène, l'hydroxy, le cyano, un alcoxy ayant de 1 à 4 atomes de C, un alcoxycarbonyle ayant de 2 à 5 atomes de C, le carboxy, le sulfamoyle, le sulfo ou le sulfato, de préférence l'hydrogène ou le méthyle;
R^{z} est l'hydrogène ou un alkyle ayant de 1 à 4 atomes de C, qui peut être substitué par un halogène, l'hydroxy, le cyano, un alcoxy ayant de 1 à 4 atomes de C, un alcoxycarbonyle ayant de 2 à 5 atomes de C, le carboxy, le sulfamoyle, le sulfo ou le sulfato, de préférence l'hydrogène;
W est le fluor, le chlore, le brome, le sulfo, le phénylsulfonyle ou un alkylsulfonyle ayant de 1 à 4 atomes de C;
Y est le vinyle, le β-sulfatoéthyle, le β-thiosulfatoéthyle, le β -phosphatoéthyle, un β-alcanoyloxy-éthyle ayant de 2 à 5 atomes de C dans le reste alcanoyle, le β-benzoyloxy-éthyle, le β-(sulfobenzoyloxy)-éthyle, le β-(p-toluène-sulfonyloxy)-éthyle ou un β-halogénoéthyle;
n est le nombre 1 ou 2, de préférence 1.

2. Colorant selon la revendication 1, caractérisé en ce que W est le fluor ou le chlore.

3. Colorant selon la revendication 1 ou 2, caractérisé en ce que Y est le β-sulfatoéthyle.

4. Procédé pour préparer un colorant de la revendication 1, caractérisé en ce que l'on fait réagir entr'eux un ou plusieurs produits préliminaires du colorant, parmi lesquels au moins un comporte un groupe de formule générale (2) 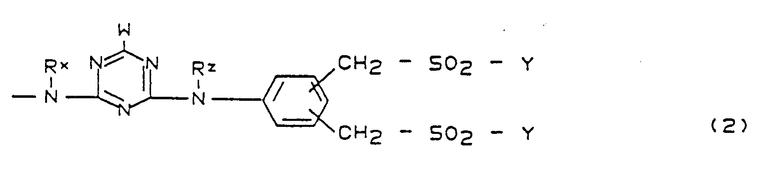 dans laquelle R^{x}, R^{z}, W et Y ont les significations données à la revendication 1, ou en ce que l'on fait réagir ensemble, dans des quantités stoechiométriques, dans un ordre quelconque, un composé de départ, comportant un groupe amino, de formule générale (59) 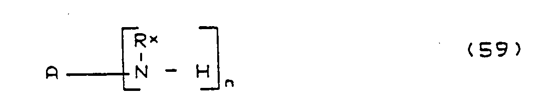 dans laquelle A, R^{x} et n ont les significations données dans la revendication 1, avec une s-triazine de formule générale (60) 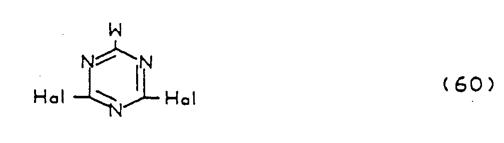 dans laquelle W a la signification donnée dans la revendication 1 et Hal représente un atome d'halogène, et une amine de formule générale (58) 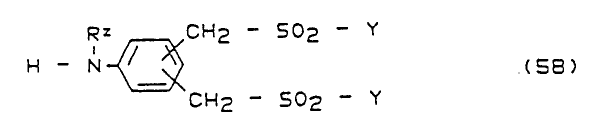 dans laquelle R^{z} et Y ont les significations données dans la revendication 1, et en ce que l'on effectue éventuellement ensuite d'autres réactions nécessaires de transformation.

5. Procédé selon la revendication 4, caractérisé en ce que l'on fait réagir dans des quantités stoechiométriques un composé correspondant à la formule générale (57) 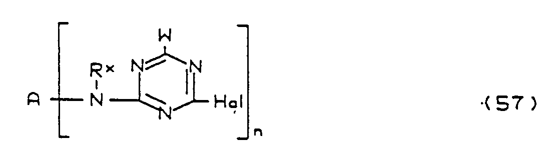 dans laquelle A, R^{x}, W et n ont les significations données dans la revendication 1 et Hal représente un atome d'halogène, avec un composé amino de formule générale (58) ayant la signification donnée dans la revendication 4,

6. Utilisation d'un composé conforme à la formule générale (1) de la revendication 1, pour teindre (y compris pour imprimer) une matière comportant des groupes hydroxy et/ou carbonamide, en particulier une matière fibreuse.

7. Procédé pour teindre (y compris pour imprimer) une matière comportant des groupes hydroxy et/ou carbonamide, en particulier une matière fibreuse, dans lequel on applique un colorant sur la matière, ou dans lequel on fait pénétrer un colorant dans la matière, et on fixe celui-ci au moyen de la chaleur et/ou au moyen d'un agent agissant par voie alcaline, caractérisé en ce que l'on utilise comme colorant un composé conforme à la formule générale (1) de la revendication 1.

## Revendications (Revendications pour l'(les) Etat(s) contractant(s) suivant(s): ES)

1. Procédé pour préparer un colorant soluble dans l'eau correspondant à la formule générale (1) 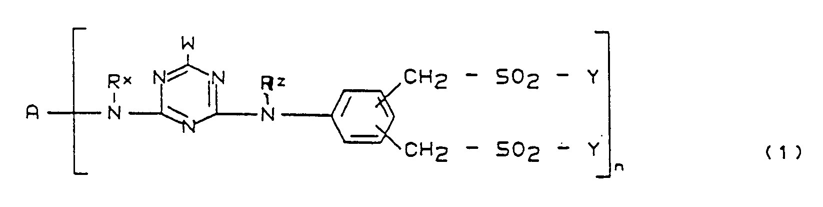 dans laquelle
A est un reste d'un colorant monoazoïque, disazoïque ou polyazoïque, ou un colorant azoïque d'un complexe de métal lourd, ou un colorant d'anthraquinone, de phtalocyanine, de formazan, d'azométhine, de dioxazine, de phénazine, de stilbène, de triphénylméthane, de xanthène, de thioxanthone, de nitroaryle, de naphtoquinone, de pyrènequinone ou de pérylènetétracarbimide;
R^{x} est l'hydrogène ou un alkyle ayant de 1 à 4 atomes de C, qui peut être substitué par un halogène, l'hydroxy, le cyano, un alcoxy ayant de 1 à 4 atomes de C, un alcoxycarbonyle ayant de 2 à 5 atomes de C, le carboxy, le sulfamoyle, le sulfo ou le sulfato, de préférence l'hydrogène ou le méthyle;
R^{z} est l'hydrogène ou un alkyle ayant de 1 à 4 atomes de C, qui peut être substitué par un halogène, l'hydroxy, le cyano, un alcoxy ayant de 1 à 4 atomes de C, un alcoxycarbonyle ayant de 2 à 5 atomes de C, le carboxy, le sulfamoyle, le sulfo ou le sulfato, de préférence l'hydrogène;
W est le fluor, le chlore, le brome, le sulfo, le phénylsulfonyle ou un alkylsulfonyle ayant de 1 à 4 atomes de C;
Y est le vinyle, le β-sulfatoéthyle, le β-thiosulfatoéthyle, le β-phosphatoéthyle, un β-alcanoyloxy-éthyle ayant de 2 à 5 atomes de C dans le reste alcanoyle, le β-benzoyloxyéthyle, le β-(sulfobenzoyloxy)-éthyle, le β-(p-toluène-sulfonyloxy)-éthyle ou un β-halogénoéthyle;
n est le nombre 1 ou 2, de préférence 1;
caractérisé en ce que l'on fait réagir entr'eux un ou plusieurs produits préliminaires du colorant, parmi lesquels au moins un comporte un groupe de formule générale (2) 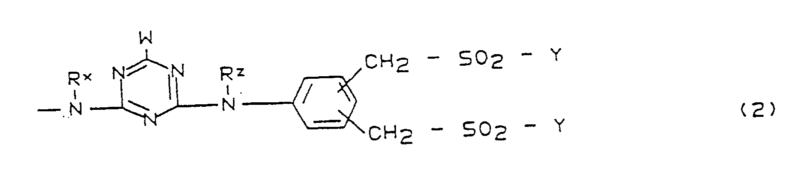 dans laquelle R^{x}, R^{z}, W et Y ont les significations données plus haut, ou en ce que l'on fait réagir ensemble, dans des quantités stoechiométriques, dans un ordre quelconque, un composé de départ, comportant un groupe amino, de formule générale (59) 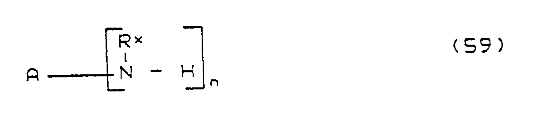 dans laquelle A, R^{x} et n ont les significations données précédemment,avec une s-triazine de formule générale (60) 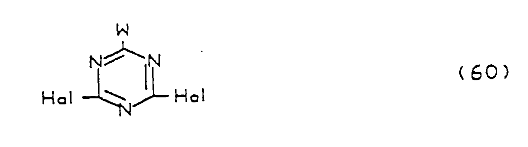 dans laquelle W a la signification donnée précédemment et Hal représente un atome d'halogène, et une amine de formule générale (58) 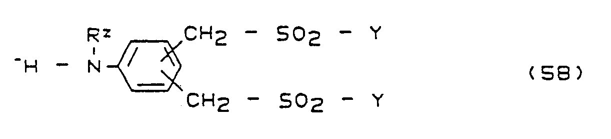 dans laquelle R^{z} et Y ont les significations données précédemment, et en ce que l'on effectue éventuellement ensuite d'autres réactions nécessaires de transformation.

2. Procédé selon la revendication 1, caractérisé en ce que l'on fait réagir dans des quantités stoechiométriques un composé correspondant à la formule générale (57) 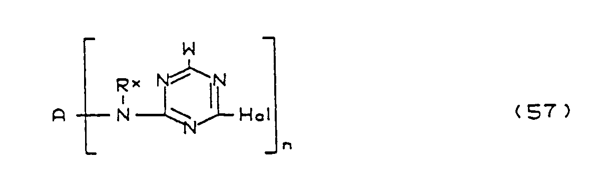 dans laquelle A, R^{x}, W et n ont les significations données dans la revendication 1, et Hal représente un atome d'halogène, avec un composé amino de formule générale (58) ayant la signification donnée dans la revendication 1.

3. Procédé selon la revendication 1 ou 2, caractérisé en ce que W est le fluor ou le chlore.

4. Procédé selon au moins une des revendications 1 à 3, caractérisé en ce que Y est le β-sulfatoéthyle

5. Utilisation d'un composé conforme à la formule générale (1) de la revendication 1 pour teindre (y compris pour imprimer) une matière comportant des groupes hydroxy et/ou carbonamide, en particulier une matière fibreuse.

6. Procédé pour teindre (y compris pour imprimer) une matière comportant des groupes hydroxy et/ou carbonamide, en particulier une matière fibreuse, dans lequel on applique un colorant sur la matière, ou dans lequel on fait pénétrer un colorant dans la matière, et on fixe celui-ci au moyen de la chaleur et/ou au moyen d'un agent agissant par voie alcaline, caractérisé en ce que l'on utilise comme colorant un composé conforme à la formule générale (1) de la revendicaton 1.
